(19) Europäisches Patentamt
European Patent Office
Office européen des brevets

(11) **EP 4 615 112 A1**

(12) **EUROPEAN PATENT APPLICATION**
published in accordance with Art. 153(4) EPC

(43) Date of publication:
**10.09.2025 Bulletin 2025/37**

(21) Application number: **23886378.1**

(22) Date of filing: **03.11.2023**

(51) International Patent Classification (IPC):
*H04W 72/12* (2023.01)     *H04B 7/0413* (2017.01)
*H04W 72/232* (2023.01)    *H04W 72/21* (2023.01)
*H04L 5/00* (2006.01)      *H04L 27/26* (2006.01)
*H04B 7/0404* (2017.01)    *H04W 72/04* (2023.01)

(52) Cooperative Patent Classification (CPC):
**H04B 7/0404; H04B 7/0413; H04L 5/00;
H04L 27/26; H04W 56/00; H04W 72/04;
H04W 72/12; H04W 72/21; H04W 72/231;
H04W 72/232; H04W 74/08**

(86) International application number:
**PCT/KR2023/017541**

(87) International publication number:
**WO 2024/096684 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 04.11.2022  KR 20220146194
01.02.2023  KR 20230013584
16.02.2023  KR 20230021038
28.04.2023  KR 20230056549
27.09.2023  KR 20230130932

(71) Applicant: **Electronics and Telecommunications
Research Institute
Daejeon 34129 (KR)**

(72) Inventors:
 • **KIM, Cheul Soon
  Daejeon 34129 (KR)**
 • **MOON, Sung Hyun
  Daejeon 34129 (KR)**
 • **LEE, Jung Hoon
  Daejeon 34129 (KR)**

(74) Representative: **Betten & Resch
Patent- und Rechtsanwälte PartGmbB
Maximiliansplatz 14
80333 München (DE)**

(54) **METHOD AND DEVICE FOR UPLINK COMMUNICATION IN COMMUNICATION SYSTEM SUPPORTING MULTIPLE PANELS**

(57)    A method and a device for uplink communication in a communication system supporting multiple panels are disclosed. A method of a terminal comprises the steps of: receiving a first SSB from a first TRP; determining a first DL timing on the basis of the first SSB; receiving a second SSB from a second TRP; determining a second DL timing on the basis of the second SSB; receiving a PDCCH order from the first TRP; and when a first information element included in the PDCCH order indicates the second SSB or the second TRP, transmitting an RA preamble to the second TRP on the basis of the second DL timing.

【FIG. 9】

## Description

[Technical Field]

The present disclosure relates to a communication technique, and more particularly, to a technique for uplink communication of a terminal with multiple panels.

[Background Art]

To address the increasing demand for wireless data processing, a communication system (e.g., New Radio (NR) communication system) utilizing frequency bands (e.g., frequency bands above 6GHz) higher than those (e.g., frequency bands below 6GHz) of Long Term Evolution (LTE) (or LTE-A) is under consideration. The NR communication system can support frequency bands both below and above 6GHz, and can accommodate a variety of communication services and scenarios compared to the LTE communication system. For instance, usage scenarios of the NR communication system may include Enhanced Mobile BroadBand (eMBB), Ultra Reliable Low Latency Communication (URLLC), and massive Machine Type Communication (mMTC). Communication technologies are required to satisfy the requirements of eMBB, URLLC, and mMTC.

Meanwhile, alongside the advancement of information and communication technologies, various wireless communication technologies are being developed. The wireless communication technologies may encompass LTE communication technology and NR communication technology as specified in the 3rd Generation Partnership Project (3GPP) standards. The LTE communication technology may be one of the wireless communication technologies among fourth generation (4G) wireless communication technologies, while the NR communication technology may be one of the wireless communication technologies among fifth generation (5G) wireless communication technologies. Following the commercialization of the 4G communication systems (e.g., communication systems supporting LTE technology), there is consideration for 5G communication systems (e.g., communication systems supporting NR technology) that utilize frequency bands (e.g., frequency bands above 6GHz) higher than those of the 4G communication systems, in addition to frequency bands below 6GHz used by 4G communication systems, to address the increasing demand for wireless data processing. The 5G communication system can support eMBB, URLLC, mMTC, and/or Time Sensitive Communication (TSC) scenarios. In particular, mMTC, URLLC, and/or TSC can be applied in Internet of Things (IoT) scenarios. A single communication network (e.g., single communication system) can support all or some of the aforementioned scenarios. The mMTC scenario can satisfy the requirements of International Mobile Telecommunication (IMT)-2020 using Narrowband (NB)-IoT and LTE-MTC. Development of technologies to meet the requirements of the URLLC scenario is required.

[Disclosure]

[Technical Problem]

The present disclosure is directed to providing a method and an apparatus for uplink communication of a terminal having multiple panels in a communication system.

[Technical Solution]

A method of a terminal, according to exemplary embodiments of the present disclosure for achieving the above-described objective, may comprise: receiving a first synchronization signal block (SSB) from a first transmission and reception point (TRP); determining a first downlink (DL) timing based on the first SSB; receiving a second SSB from a second TRP; determining a second DL timing based on the second SSB; receiving a physical downlink control channel (PDCCH) order from the first TRP; and in response that a first information element included in the PDCCH order indicating the second SSB or the second TRP, transmitting a random access (RA) preamble to the second TRP based on the second DL timing.

The method may further comprise: transmitting, to at least one of the first TRP or the second TRP, information indicating that the terminal supports two DL timings.

The first DL timing may be different from the second DL timing, and a difference between the first DL timing and the second DL timing may be equal to or less than a cyclic prefix (CP) or may exceed the CP.

A first timing advance (TA) between the terminal and the first TRP may be determined based on the first DL timing, and a second TA between the terminal and the second TRP may be determined based on the second DL timing.

The first information element may be information for selection of an SSB index indicating the second SSB or a physical cell identifier (PCI) indicating the second TRP.

The method may further comprise: receiving, from the second TRP, a medium access control (MAC) control element (CE) in response to the RA preamble; and deriving at least one of a first TA between the terminal and the first TRP, a second TA between the terminal and the second TRP, or a TA command (TAC), based on an information element included in the MAC CE, wherein the first TA and the second TA belong to different TA groups (TAGs).

When uplink transmission to which the first TA or the second TA is applied is performed, a TAG identifier for determining the first TA or the second TA may be derived from spatial relation information or a transmission configuration indication (TCI) referred to by the uplink transmission.

The terminal may be two or more panels, first communication between the terminal and the first TRP may be performed in a first panel of the two or more panels, and second communication between the terminal and the second TRP may be performed in a second panel of the one or more panels.

A method of a base station, according to exemplary embodiments of the present disclosure for achieving the above-described objective, may comprise: transmitting a first synchronization signal block (SSB) through a first transmission and reception point (TRP) associated with the base station; transmitting a second SSB through a second TRP associated with the base station; transmitting a physical downlink control channel (PDCCH) order to a terminal through the first TRP; and receiving a random access (RA) preamble from the terminal through the second TRP indicated by the PDCCH order.

The method may further comprise: receiving, from the terminal and through at least one of the first TRP or the second TRP, information indicating that the terminal supports two DL timings.

A first DL timing may be determined at the terminal based on the first SSB, a second DL timing may be determined at the terminal based on the second SSB, the first DL timing may be different from the second DL timing, and a difference between the first DL timing and the second DL timing may be equal to or less than a cyclic prefix (CP) or may exceed the CP.

A first timing advance (TA) between the terminal and the first TRP may be determined based on the first DL timing, and a second TA between the terminal and the second TRP may be determined based on the second DL timing.

The PDCCH order may include a first information element, and the first information element may be information for selection of an SSB index indicating the second SSB or a physical cell identifier (PCI) indicating the second TRP.

The method may further comprise: transmitting, through the second TRP, a medium access control (MAC) control element (CE) in response to the RA preamble, wherein an information element included in the MAC CE may be used to derive at least one of a first TA between the terminal and the first TRP, a second TA between the terminal and the second TRP, or a TA command (TAC), and the first TA and the second TA may belong to different TA groups (TAGs).

When uplink transmission to which the first TA or the second TA is applied is performed, a TAG identifier for determining the first TA or the second TA may be derived from spatial relation information or a transmission configuration indication (TCI) referred by the uplink transmission.

A terminal, according to exemplary embodiments of the present disclosure for achieving the above-described objective, may comprise at least one processor, and the at least one processor may cause the terminal to perform: receiving a first synchronization signal block (SSB) from a first transmission and reception point (TRP); determining a first downlink (DL) timing based on the first SSB; receiving a second SSB from a second TRP; determining a second DL timing based on the second SSB; receiving a physical downlink control channel (PDCCH) order from the first TRP; and in response that a first information element included in the PDCCH order indicating the second SSB or the second TRP, transmitting a random access (RA) preamble to the second TRP based on the second DL timing.

The at least one processor may further cause the terminal to perform: transmitting, to at least one of the first TRP or the second TRP, information indicating that the terminal supports two DL timings.

The first DL timing may be different from the second DL timing, and a difference between the first DL timing and the second DL timing may be equal to or less than a cyclic prefix (CP) or may exceed the CP.

The first information element may be information for selection of an SSB index indicating the second SSB or a physical cell identifier (PCI) indicating the second TRP.

The at least one processor may further cause the terminal to perform: receiving, from the second TRP, a medium access control (MAC) control element (CE) in response to the RA preamble; and deriving at least one of a first TA between the terminal and the first TRP, a second TA between the terminal and the second TRP, or a TA command (TAC), based on an information element included in the MAC CE, wherein the first TA and the second TA may belong to different TA groups (TAGs).

[Advantageous Effects]

According to the present disclosure, a terminal can communicate with a plurality of transmission and reception points (TRPs). The terminal can determine a first downlink (DL) timing based on a first SSB received from the first TRP, and determine a second DL timing based on a second SSB received from the second TRP. A first timing advance (TA) between the terminal and the first TRP can be determined based on the first DL timing, and a second TA between the terminal and the second TRP can be determined based on the second DL timing. The terminal can manage two TAs, and accordingly, communication performance between the terminal and the multiple TRPs can be improved.

[Description of Drawings]

FIG. 1 is a conceptual diagram illustrating a first exemplary embodiment of a communication system.

FIG. 2 is a block diagram illustrating a first exemplary embodiment of a communication node constituting a communication system.

FIG. 3 is a conceptual diagram illustrating a first exemplary embodiment of SFN transmission.

FIG. 4 is a conceptual diagram illustrating a second exemplary embodiment of SFN transmission.

FIG. 5 is a conceptual diagram illustrating a first exemplary embodiment of SDM transmission.

FIG. 6 is a conceptual diagram illustrating a second exemplary embodiment of SDM transmission.

FIG. 7 is a conceptual diagram illustrating a first exemplary embodiment of an event occurring in STxMP transmission.

FIG. 8 is a conceptual diagram illustrating a first exemplary embodiment of a timing alignment method.

FIG. 9 is a conceptual diagram illustrating a second exemplary embodiment of a timing alignment method.

FIG. 10 is a conceptual diagram illustrating a third exemplary embodiment of a timing alignment method.

FIG. 11 is a conceptual diagram illustrating a fourth exemplary embodiment of a timing alignment method.

FIG. 12 is a conceptual diagram illustrating a first exemplary embodiment of a single-entry PHR MAC CE.

FIG. 13 is a conceptual diagram illustrating a first exemplary embodiment of a multiple-entry PHR MAC CE.

FIG. 14 is a conceptual diagram illustrating a second exemplary embodiment of a multiple-entry PHR MAC CE.

FIG. 15 is a conceptual diagram illustrating a first exemplary embodiment of an improved single-entry PHR MAC CE.

FIGS. 16A and 16B are conceptual diagrams illustrating a first exemplary embodiment of an improved multiple-entry PHR MAC CE.

FIGS. 17A and 17B are conceptual diagrams illustrating a second exemplary embodiment of an improved multiple-entry PHR MAC CE.

FIG. 18 is a conceptual diagram illustrating a first exemplary embodiment of an improved single-entry PHR MAC CE for multiple TRPs.

FIG. 19 is a conceptual diagram illustrating a first exemplary embodiment of an improved multiple-entry PHR MAC CE for multiple TRPs.

FIG. 20 is a conceptual diagram illustrating a second exemplary embodiment of an improved multiple-entry PHR MAC CE for multiple TRPs.

FIG. 21 is a conceptual diagram illustrating a first exemplary embodiment of SRS configuration based on the Rel-15 NR technical specifications.

FIG. 22 is a conceptual diagram illustrating a first exemplary embodiment of SRS configuration based on the Rel-16 NR technical specifications.

FIG. 23 is a conceptual diagram illustrating a first exemplary embodiment of SRS configuration based on the Rel-17 NR technical specifications.

FIG. 24 is a conceptual diagram illustrating a first exemplary embodiment of SRS configuration considering multiple Tx panels.

FIG. 25 is a conceptual diagram illustrating a first exemplary embodiment of SRS configuration considering multiple TRPs and multiple Tx panels.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may be used in the same sense as a communication network.

In exemplary embodiments, 'configuration of an operation (e.g., transmission operation)" may mean 'signaling of configuration information (e.g., information element(s), parameter(s)) for the operation" and/or 'signaling of information indicating performing of the operation'. 'Configuration of information element(s) (e.g., parameter(s))' may mean that the corresponding information element(s) are signaled. The signaling may be at least one of system information (SI) signaling (e.g., transmission of system information block (SIB) and/or master information block (MIB)), RRC signaling (e.g., transmission of RRC message(s), RRC parameter(s) and/or higher layer parameter(s)), MAC control element (CE) signaling (e.g., transmission of a MAC message and/or MAC CE), PHY signaling (e.g., transmission of downlink control information (DCI), uplink control information (UCI), and/or sidelink control information (SCI)), or a combination thereof.

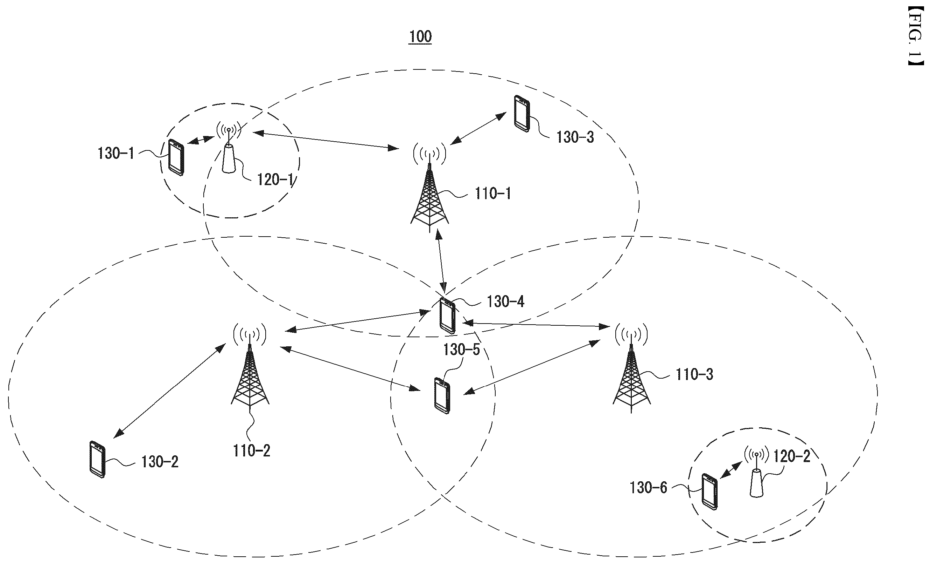

FIG. 1 is a conceptual diagram illustrating a first exemplary embodiment of a communication system.

Referring to FIG. 1, a communication system 100 may include a plurality of communication nodes 110-1, 110-2, 110-3, 120-1, 120-2, 130-1, 130-2, 130-3, 130-4, 130-5, and 130-6. In addition, the communication system 100 may further include a core network (e.g., serving-gateway (S-GW), packet data network (PDN)-gateway (P-GW), and mobility management entity (MME)). When the communication system 100 is the 5G communication system (e.g., NR system), the core network may include an access and mobility management function (AMF), a user plane function (UPF), a session management function (SMF), and the like.

The plurality of communication nodes 110 to 130 may support the communication protocols (e.g., LTE communication protocol, LTE-A communication protocol, NR communication protocol, etc.) defined by technical specifications of 3rd generation partnership project (3GPP). The plurality of communication nodes 110 to 130 may support a code division multiple access (CDMA) based communication protocol, a wideband CDMA (WCDMA) based communication protocol, a time division multiple access (TDMA) based communication protocol, a frequency division multiple access (FDMA) based communication protocol, an orthogonal frequency division multiplexing (OFDM) based communication protocol, a filtered OFDM based communication protocol, a cyclic prefix OFDM (CP-OFDM) based communication protocol, a discrete Fourier transform spread OFDM (DFT-s-OFDM) based communication protocol, an orthogonal frequency division multiple access (OFDMA) based communication protocol, a single carrier FDMA (SC-FDMA) based communication protocol, a non-orthogonal multiple access (NOMA) based communication protocol, a generalized frequency division multiplexing (GFDM) based communication protocol, a filter bank multi-carrier (FBMC) based communication protocol, a universal filtered multi-carrier (UFMC) based communication protocol, a space division multiple access (SDMA) based communication protocol, or the like. Each of the plurality of communication nodes may have the following structure.

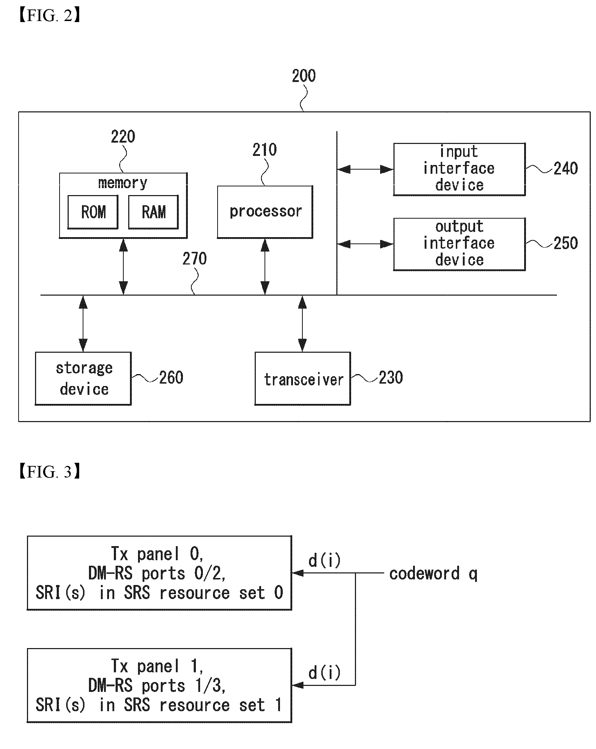

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. The respective components included in the communication node 200 may communicate with each other as connected through a bus 270.

However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, an evolved Node-B (eNB), a gNB, an advanced base station (ABS), a high reliability-base station (HR-BS), a base transceiver station (BTS), a radio base station, a radio transceiver, an access point, an access node, a radio access station (RAS), a mobile multi-hop relay base station (MMR-BS), a relay station (RS), an advanced relay station (ARS), a high reliability-relay station (HR-RS), a home NodeB (HNB), a home eNodeB (HeNB), a roadside unit (RSU), a radio remote head (RRH), a transmission point (TP), a transmission and reception point (TRP), or the like.

Each of the plurality of terminals 130-1, 130-2, 130-3, 130-4, 130-5, and 130-6 may refer to a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, an on board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., a single-user MIMO (SU-MIMO), a multi-user MIMO (MU-MIMO), a massive MIMO, or the like), a coordinated multipoint (CoMP) transmission, a carrier aggregation (CA) transmission, a transmission in unlicensed band, device-to-device (D2D) communication (or, proximity services (ProSe)), Internet of Things (IoT) communications, dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e. the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, operation methods of a communication node in a communication system will be described. Even when a method (e.g., transmission or reception of a signal) performed at a first communication node among communication nodes is described, the corresponding second communication node may perform a method (e.g., reception or transmission of the signal) corresponding to the method performed at the first communication node. That is, when an operation of the terminal is described, the corresponding base station may perform an operation corresponding to the operation of the terminal. Conversely, when an operation of the base station is described, the corresponding terminal may perform an operation corresponding to the operation of the base station.

The communication system can support a variety of wireless communication technologies. The wireless communication technologies may include LTE communication technology, NR communication technology, etc. specified in the 3rd generation partnership project (3GPP) standard. The LTE communication technology may be one of the wireless communication technologies among fourth generation (4G) wireless communication technologies, while the NR communication technology may be one of the wireless communication technologies among fifth generation (5G) wireless communication technologies.

Following the commercialization of the 4G communication systems (e.g., communication systems supporting LTE technology), there is consideration for 5G communication systems (e.g., communication systems supporting NR technology) that utilize frequency bands (e.g., frequency bands above 6GHz) higher than those of the 4G communication systems, in addition to frequency bands below 6GHz used by 4G communication systems, to address the increasing demand for wireless data processing. The 5G communication system can support eMBB, URLLC, mMTC, and/or Time Sensitive Communication (TSC) scenarios. In particular, mMTC, URLLC, and/or TSC can be applied in Internet of Things (IoT) scenarios. A single communication network (e.g., single communication system) can support all or some of the aforementioned scenarios. The mMTC scenario can satisfy the requirements of IMT-2020 using NB-IoT and LTE-MTC. Development of technologies to meet the requirements of the URLLC scenario is required.

In order to reduce an error rate of data, a low modulation and coding scheme (MCS) level (or, low MCS index) may be applied. In order not to increase a size of a field indicated by downlink control information (DCI), frequently used MCS(s) may be selected. In order to apply a lower MCS, a repeated transmission operation may be supported. In case of applying a quadrature phase shift keying (QPSK) which is the lowest modulation rate, an effect of further reducing the code rate may occur. In particular, since a transmit power is limited in uplink (UL) transmission, the repeated transmission operation may be performed in the time domain rather than in the frequency domain.

In the case of eMBB traffic and URLLC traffic, a lower MCS may be used for different purposes, respectively. For example, for eMBB traffic, a lower MCS may be required to extend a coverage. On the other hand, for URLLC traffic, a lower MCS may be required to reduce a latency and achieve a lower error rate. Since the requirements are different, the eMBB traffic may be repeatedly transmitted even when a relatively large latency occurs. The URLLC traffic may be transmitted using new MCSs (e.g., low MCS) rather than the repeated transmission. The new MCS may be configured by an RRC message and/or a DCI.

In order to support repeated transmissions for the eMBB traffic in the time domain, a physical uplink shared channel (PUSCH) repetition (e.g., PUSCH repetition type A) may be introduced. In the present disclosure, a PUSCH repetition may mean a PUSCH instance. In other words, depending on the context, a PUSCH repetition may be interpreted as having the same meaning as a PUSCH instance. Repeated transmission of a PUSCH may be performed in units of PUSCH instances. When repeated transmission of a PUSCH is performed, a PUSCH allocated on a slot basis may be repeatedly transmitted. To extend a coverage, a time resource may be allocated over a plurality of slots. When the PUSCH repetition type A is used, the time resource may be configured by an RRC message and/or a DCI. The number of repetitions of the PUSCH may be indicated by the RRC message, and a time resource for transmitting the PUSCH in the first slot may be indicated by the DCI (e.g., in case of type 2 configured grant (CG) or dynamic grant) or the RRC message (e.g., in case of type 1 CG). In the present disclosure, the number of repetitions may mean the number of repeated transmissions or the number of transmissions.

Since a delay time occurs when URLLC traffic is transmitted repeatedly, it may not be appropriate to transmit URLLC traffic repeatedly. However, if a sufficiently low MCS is used, a delay in decoding URLLC traffic can be reduced. That is, when a sufficiently low MCS is used, the number of resource elements (REs) to which URLLC traffic is mapped may increase, and the base station (e.g., decoder of the base station) should wait until all the REs are received. In this case, a delay in decoding URLLC traffic may be reduced.

On the other hand, when a PUSCH with a somewhat high MCS applied is repeatedly transmitted, the base station may perform a decoding operation with only some REs. Therefore, a time when decoding is succeeded first in repeated PUSCH transmission (e.g., repeated PUSCH transmission with a somewhat high MCS applied) may be earlier than a time when decoding is succeeded first in a PUSCH transmission without repetition (e.g., PUSCH transmission with a low MCS applied). Since a PUSCH repetition type A is used, an unnecessary delay may occur, and thus a PUSCH repetition type B may be introduced to reduce a delay time due to repeated transmission. When the PUSCH repetition type B is used, a PUSCH allocated on a mini-slot basis may be transmitted repeatedly. When the PUSCH repetition type B is used, time resources may be configured by an RRC message and/or DCI. A combination of a reference time resource for PUSCH instances and the number of repetitions may be indicated by DCI (e.g., type 2 CG and/or dynamic grant) or an RRC message (e.g., type 1 CG).

In order to control a transmission power of a sounding reference signal (SRS) resource indicated by an SRS resource indicator (SRI), the base station may estimate a path loss for each SRS resource. The base station may use DCI to control a transmission power for SRS resource(s). The transmission power of the SRS resource(s) may be controlled based on the estimated path loss. The DCI may be scheduling DCI (e.g., DCI format 0_0, DCI format 0_1, DCI format 0_2, DCI format 1_0, DCI format 1_1, or DCI format 1_2) or group common (CG)-DCI (e.g., DCI format 2_2 or DCI format 2_3). The DCI may include a field indicating a transmit power control (TPC) command, and the TPC command may be used to control a transmission power of the terminal. For example, the transmission power of the terminal may increase or decrease based on the TPC command included in the DCI. To determine a transmission power of a PUSCH, the terminal may consider a value obtained based on a path loss, a value according to a TPC command included in DCI, and/or a PUSCH bandwidth indicated by the DCI.

The base station may configure two or more sets in the terminal using higher layer signaling. The terminal may receive configuration information of the two or more sets from the base station. Elements constituting the two or more sets may be transmission power parameter(s) and may be indicated to be suitable for different scenarios (e.g., URLLC scenario, eMBB scenario). The terminal may receive scheduling DCI or activating DCI allocating a PUSCH resource from the base station, and the scheduling DCI or activating DCI may indicate a set for interpreting transmission power parameter(s). If a different set of transmission power parameter(s) is used, a size of increase or decrease in transmission power indicated by the same TPC command may vary.

When a type 1 configured grant (CG) or type 2 CG is used, a transmission power may be determined based on the DCI format 2_3 for an SRI associated with a PUSCH instance. When the type 2 CG is used, activating DCI may indicate a set of transmission power parameter(s) applicable to a PUSCH occasion. The PUSCH occasion may refer to a PUSCH instance. The terminal may obtain a TPC command for an SRI by receiving GC-DCI, interpret the TPC command to suit the set of transmission power parameter(s) indicated by the base station, and derive a transmission power to be applied to the PUSCH instance based on a result of the interpretation.

In transmission of a dynamically scheduled PUSCH, the terminal may derive a transmission power to be applied to a PUSCH instance based on a combination of GC-DCI and scheduling DCI. By receiving the GC-DCI, the terminal may identify a TPC command corresponding to an SRI and store the identified TPC command. In transmission of a dynamically scheduled PUSCH, a set of transmission power parameter(s) and/or a TPC command applicable to a PUSCH occasion may be indicated by scheduling DCI. The terminal may derive a transmission power to be applied to the PUSCH instance based on a transmission power of an SRI associated with the PUSCH instance.

Repeated HARQ-ACK transmission may be indicated (or configured) by higher layer signaling for each physical uplink control channel (PUCCH) format. The number of repetitions for a PUCCH format i may be set independently. i may be 1, 3, or 4. The terminal may repeatedly transmit the PUCCH format in slots. In this case, the PUCCH format may be transmitted using the same time resources in the respective slots.

Uplink control information (UCI) types may be classified according to types of information included in UCI. UCI may include at least one of a scheduling request (SR), layer 1-reference signal received power (L1-RSRP), HARQ-ACK, or channel state information (CSI). In exemplary embodiments, 'UCI' and 'UCI type' may be used with the same meaning. In a repeated transmission operation of UCI, only one UCI type may be transmitted. In order to support this operation, priorities of UCI types may be defined in the technical specifications. One UCI type may be selected, and a PUCCH including the one UCI type may be transmitted repeatedly. In this case, the terminal may assume that other UCI types are not transmitted before transmission of the selected UCI type is completed. In order to support this operation, the base station may indicate the terminal to transmit UCI (e.g., SR or HARQ-ACK) after PUCCH transmission is completed. A waiting time for transmitting the UCI may be long, and the waiting time may act as a scheduling constraint for the base station.

When transmission of HARQ-ACKs in the same slot (or the same subslot) is indicated or when PUCCH time resources indicated by DCIs and/or RRC messages allocating physical downlink shared channels (PDSCHs) overlap with each other, the terminal may generate a HARQ codebook so that they are transmitted on one PUCCH (e.g., one PUCCH time resource). Within the HARQ codebook, HARQ-ACK bits may be arranged according to an order defined in the technical specifications. Information bits may be generated according to the above-described operation. The terminal may generate coded bits by performing an encoding operation.

A Reed Muller code or polar code may be used in the encoding operation. A code rate applied in the encoding operation may be indicated by higher layer signaling. For example, one value in a PUCCH format may be a code rate and may be indicated to the terminal.

One codeword may be mapped to one PUCCH. In a repeated PUCCH transmission operation, one UCI type may be generated as a codeword. When a PUCCH is transmitted once, information bits of one UCI type or two or more UCI types may be concatenated, and the terminal may generate one codeword by performing the same encoding operation on the information bits. When a Reed-Muller code or polar code is used, it may be difficult to perform soft combining operations may be difficult in terms of implementation. Therefore, even when a PUCCH is transmitted repeatedly, the same codeword may be transmitted, and the base station may perform a chase combining operation for the same codeword. The codeword or coded bits may refer to a bit string in which a plurality of code blocks are concatenated. A modulation operation may be performed on the codeword, and a result of the modulation operation may be mapped to REs.

Meanwhile, UCIs having the same UCI type may be considered as different information. The UCIs having the same UCI type, which are considered as different information, may be mapped. For example, the UCIs may be generated to support traffic with different priorities. UCI (e.g., SR or HARQ-ACK) supporting eMBB traffic may be considered distinct information from UCI (e.g., SR or HARQ-ACK) supporting URLLC traffic. In this case, information having the same UCI type may be distinguished as different information.

The coded UCI may be mapped to a PUCCH. The same preprocessing scheme (e.g., spatial information, spatial relation) may be maintained in a PUCCH transmission operation. Alternatively, in the PUCCH transmission operation, use of a different preprocessing scheme for each PUCCH may be allowed by signaling (e.g., RRC signaling) of the base station.

In order to support URLLC traffic, it may be preferable for the terminal to perform frequent reception operations in DL resources and/or frequent transmission operations in UL resources. In a time division duplex (TDD) system, the terminal may operate based on a half-duplex scheme. Therefore, a support time of DL traffic and/or UL traffic may increase depending on a slot pattern. On the other hand, in a frequency division duplex (FDD) system, the terminal may simultaneously utilize DL resources and UL resources. Therefore, the problems described above in the TDD system may not occur in the FDD system. The FDD system may use two or more carriers. When two or more serving cells are configured for the terminal in the TDD system, the terminal may utilize DL resources and UL resources.

In a communication system that includes at least one carrier to which FDD is applied (hereinafter referred to as 'FDD carrier'), there may be no latency problem in the terminal. In a communication system that includes only carrier(s) to which TDD is applied (hereinafter referred to as 'TDD carrier(s)'), there may be a latency problem in the terminal. To solve the above-described problem, slots in TDD carriers may be configured according to different patterns.

Transmission of eMBB traffic and/or URLLC traffic may be supported in at least one of a licensed band or an unlicensed band. Carrier(s) belonging to a licensed band may be used alone. Carrier(s) belonging to an unlicensed band may be used alone. Alternatively, depending on a configuration by the base station, both carrier(s) belonging to the licensed band and carrier(s) belonging to the unlicensed band may be used based on a carrier aggregation scheme.

In exemplary embodiments, two or more terminals may receive data from one or more TRPs and transmit data to one or more TRPs. It may be assumed that one base station or one server performs management operations and/or scheduling operations for one or more TRPs among a plurality of TRPs. The TRPs may be directly connected. Alternatively, the TRPs may be connected through the base station. The above-described connection may be a connection according to an Xn interface or a radio interface (e.g., 3GPP NR interface).

A shadow area may occur between coverages supported by TRPs. Therefore, the TRPs may resolve the shadow area through cooperative transmission. The cooperative transmission may be performed for a terminal located between the TRPs. Even when no shadow area occurs, a quality of a radio link may be improved by installing a large number of TRPs (or base stations) to transmit and receive a lot of data.

According to cooperative transmission and cooperative reception of TRPs, communication schemes may be classified into dynamic point selection (DPS) and joint transmission (JT). For a specific physical resource block (PRB) set, DPS may be a method of receiving data through one TRP, and JT may be a method of receiving data through two or more TRPs. Dynamic point blanking (DPB) may be a type of JT. When DPB is used, the terminal may not receive data from some TRPs and may receive data from the remaining TRPs. JT may be further classified into coherent JP and noncoherent JP. Depending on whether coherent combining operations are performed on signals received from TRPs, coherent JP or non-coherent JP may be used.

Depending on a latency and/or traffic allowance of a backhaul to which base stations or TRPs are connected, the TRPs may participate in cooperative transmission and/or cooperative reception in real time. Alternatively, depending on a latency and/or traffic allowance of a backhaul to which base stations or TRPs are connected, the TRPs may not participate in cooperative transmission and/or cooperative reception in real time. The TRPs may be connected to (e.g., associated with) the same base station or to different base stations. The terminal may support JT by receiving single DCI (sDCI) or multiple DCIs (mDCI).

When sDCI is used, the terminal may transmit and receive data with TRPs. The TRPs may cooperate through a backhaul without latency. When mDCI is used, the terminal may transmit and receive data with some TRPs and other TRPs. However, when it is difficult for TRPs to cooperate in real time through a backhaul, the terminal may perform communication using semi-static resources (e.g., divided semi-static resources).

In order to distinguish TRPs, control resource set (CORESET) pool indexes may be introduced. A CORESET pool index may indicate a set of CORESETs. A transmission configuration indication (TCI) state of each CORESET may be independently indicated to the terminal through signaling (e.g., RRC signaling and/or MAC CE signaling). A CORESET pool index may not necessarily correspond to a TRP. A TRP may be classified into a transmission point (TxP) and a reception point (RxP), and a CORESET pool index may correspond to an RxP. For example, an Rx beam of a terminal receiving a DL signal/channel from a TxP may be derived from a TCI state, and UL signals/channels scheduled by DCIs detected in CORESETs belonging to a CORESET pool corresponding to one CORESET pool index may be interpreted as being received from the same RxP. In the present disclosure, 'DL signal/channel' may refer to 'DL signal and/or DL channel', and 'UL signal/channel' may refer to 'UL signal and/or UL channel'.

When synchronization between TRPs is acquired and a CSI report is shared therebetween, performance gains may occur due to coherent combining operations performed in the terminal. When the above-mentioned condition(s) are not satisfied, it may be advantageous in terms of performance for non-coherent combining operations to be performed in the terminal.

When a terminal is mounted on a vehicle, there may be fewer restrictions on the size and/or weight of the terminal. Portability may be considered for a terminal directly used by a human.

In order to extend a coverage, small cells or IAB nodes may be deployed in the communication system. A throughput of the small cell or IAB node may be affected by a quality of a backhaul. Securing a backhaul (e.g., high-quality backhaul) may be expensive. As an alternative to the above-described problem, wireless repeaters may be deployed in the communication system, and signals with high quality can be transmitted to the terminal through the wireless repeaters. The wireless repeaters may be classified into several types depending on a scheme of transferring signals. A wireless repeater that supports many functions may provide performance similar to that of a base station. When wireless repeaters supporting fewer function(s) are deployed, a communication system including the wireless repeaters may be constructed at low cost. In the present disclosure, the wireless repeaters may support beamforming functions for terminal(s) and minimum function(s) for transferring data to terminal(s). The base station may transmit signals/channels to control the wireless repeaters. The wireless repeaters may receive signals/channels (e.g., control signals/control channels) from the base station, and configure appropriate parameter(s) based on the received signals/channels. In other words, the base station may configure appropriate parameter(s) to the wireless repeaters to control the wireless repeaters.

A terminal may transmit a UL signal/channel using multiple panels (e.g., multiple Tx panels). The terminal may perform simultaneous transmission across multiple UE panels (STxMP). Exemplary embodiments of the present disclosure will be described focusing on a PUSCH transmission method, but the exemplary embodiments may be applied equally or similarly to transmission of other UL signals/channels (e.g., SRS, PUCCH). A Tx panel may be referred to as an antenna group or antenna port group. An antenna port group (e.g., antenna group) may include two or more antenna ports. Coherence (e.g., phase continuity and/or power consistency) for antenna ports belonging to the same antenna port group may be maintained.

Scheduling information (e.g., DCI) of a PUSCH may indicate an SRS resource to the terminal. In other words, the DCI may include an SRS resource indicator (SRI). The terminal may use one Tx panel or multiple Tx panels to transmit an SRS in the SRS resource indicated by the SRI. In the present disclosure, a Tx panel or a panel may be interpreted as a Tx panel of the terminal depending on a context. Multiple Tx panels may be used simultaneously to transmit the SRS. When an SRS port or DM-RS port is used as a radio resource, SRS transmission or DM-RS transmission may be performed regardless of Tx panels. The terminal may perform SRS transmission or DM-RS transmission based on STxMP. Alternatively, the terminal may perform SRS transmission or DM-RS transmission using one Tx panel.

The terminal may transmit, to the base station, UE capability information including information indicating that the terminal supports STxMP. The base station may identify that the terminal supports STxMP through UE capability signaling. In this case, the base station may indicate two or more SRS resource sets to the terminal through signaling (e.g., RRC signaling). The terminal may identify the SRS resource sets indicated by the base station. Each SRS resource set may include one or more SRS resources. One SRS resource set may correspond to one Tx panel of the terminal.

For example, in codebook-based PUSCH transmission, one SRS resource may correspond to a radio link from a Tx panel of the terminal to an RxP. When the base station utilizes multiple RxPs, the base station may indicate an SRS resource set including a plurality of SRS resources to the terminal through signaling (e.g., RRC signaling). The terminal may derive the number of PUSCH DM-RS ports from the number of ports for the SRS resource indicated by the base station. A port of the SRS resource (e.g., a port that the SRS resource has) may refer to an SRS port.

For example, in non-codebook based PUSCH transmission, an SRS resource may correspond to a Tx beam of a radio link from a Tx panel of the terminal to an RxP. The number of ports that each SRS resource has may be 1.

The terminal may receive signaling (e.g., RRC signaling) indicating one SRS resource set from the base station. The SRS resource set may be referred to as a qcl or TCI state of a Tx beam for transmitting a PUSCH. One TCI state or two or more TCI states for a PUSCH may be indicated to the terminal. When a PUSCH is transmitted to two or more RxPs based on a time division multiplexing (TDM) scheme, each of the two or more TCI states (or the one TCI state) may correspond to a Tx beam of a radio link for each RxP.

One transmit precoding matrix indicator (TPMI) or two or more TPMIs may be indicated to the terminal. When a PUSCH is transmitted to two or more RxPs based on the TDM scheme, each of the two or more TPMIs (or the one TPMI) may correspond to a Tx beam of a radio link for each RxP.

## 1. PUSCH transmission method using STxMP in a single layer

Discrete Fourier transform-spread-orthogonal frequency division multiplexing (DFT-s-OFDM) or cyclic prefix (CP)-OFDM may be applied to PUSCH transmission. When PRBs are allocated consecutively and a DFT precoding is additionally applied, a single carrier property occurs, and thus a peak-to-average power ratio (PAPR)/cubic metric (CM) may be lowered. Considering the consecutively allocated PRBs and the implementation complexity of a DFT precoding engine, it may be preferable that the number of PRBs satisfies a multiple of 2, 3, or 5. DFT-s-OFDM may be mainly used in coverage edge regions. In other words, when one DM-RS port is used, DFT-s-OFDM may be used. Even in a coverage edge region, CP-OFDM may be applied according to an indication of the base station, and in this case, there may be no restrictions on allocation of PRBs and/or the number of DM-RS ports.

When the number of DM-RS ports for PUSCH transmission is 1, DFT-s-OFDM may be applied. In this case, when the terminal has two or more DM-RS ports, it may be assumed that CP-OFDM is applied without separate signaling. In PUSCH transmission using STxMP, two or more DM-RS ports may be used. Therefore, even when one DM-RS port is used in each Tx panel, DFT-s-OFDM may not be applied.

**Method 1-1: DFT-s-OFDM may not be applied to PUSCH transmission using STxMP.**

In the present disclosure, PUSCH transmission using STxMP may be referred to as 'STxMP PUSCH transmission'. Alternatively, DFT-s-OFDM may be applied to STxMP PUSCH transmission depending on UE capability. A terminal that support STxMP may apply a DFT precoding engine to each Tx panel. For example, the terminal may sequentially apply one DFT precoding engine to two or more Tx panels by temporally reusing the one DFT precoding engine. For another example, the terminal may apply DFT precoding engines to the respective Tx panels.

The terminal may apply one DFT precoding engine to one Tx panel according to UE capability (e.g., certain UE capability). In this case, when STxMP is configured in the terminal, the terminal may not be able to transmit a PUSCH to which DFT-s-OFDM is applied. Alternatively, according to UE capability (e.g., another UE capability, DFT precoding may be applied even when STxMP is configured in the terminal, and thus the terminal may be able to transmit a PUSCH to which DFT-s-OFDM is applied..

**Method 1-2: DFT-s-OFDM may be applied to STxMP PUSCH transmission depending on UE capability.**

The terminal may support STxMP using sDCI or mDCI. According to a method using sDCI, when the number of DM-RS ports is two or more, the terminal may transmit a PUSCH to which CP-OFDM is applied. When the number of DM-RS ports is 1 (e.g., when a PUSCH is allocated by a fallback DCI format, when use of DFT-s-OFDM in a UL bandwidth part (BWP) is indicated, or when scheduling DCI indicates application of DFT-s-OFDM), the terminal may transmit a PUSCH to which DFT-s-OFDM is applied.

**Method 1-3: When the sDCI mode is supported (e.g., when sDCI is used), the terminal may not apply DFT-s-OFDM to STxMP PUSCH transmission.**

The terminal may transmit a PUSCH in the sDCI mode, and two or more TRPs may receive the PUSCH. The terminal may receive an indication or configuration for an SRS resource set and a second SRS resource set (or first SRS resource set and second SRS resource set). Scheduling information including a separate TPMI/RI, TPC parameter set, TPC command, SRI, and/or UL/joint TCI may be indicated or configured for each SRS resource set.

PUSCH transmitted may be performed in a first time resource using scheduling information related to the first SRS resource set. PUSCH transmission may be performed in a second time resource using scheduling information related to the second SRS resource set. In subsequent time resources, the same method as the above-described method may be applied, so that scheduling information related to the SRS resource sets may be used alternately for PUSCH transmission.

Alternatively, PUSCH transmission may be performed repeatedly using scheduling information related to the first SRS resource set. Thereafter, PUSCH transmission may be performed repeatedly using scheduling information related to the second SRS resource set.

When there is a large latency in a backhaul connection between the TRPs (or base stations), real-time cooperation between the TRPs (or base stations) may be difficult. In this case, mDCI may be used. When DCI transmitted from one TRP allocates a PUSCH to the terminal, and DCI transmitted from another TRP also allocates a PUSCH to the terminal, the terminal may perform STxMP PUSCH transmission by applying a Tx beam (or TPMI) directed to each TRP (or RxP). In this case, since a DM-RS port for each of the DCIs included in the mDCI may be allocated to the terminal, the terminal may perform PUSCH transmission using two or more DM-RS ports.

One TRP may schedule PUSCH transmission by using a fallback DCI format and a non-fallback DCI format, and another TRP may schedule PUSCH transmission using only a non-fallback DCI format. In this case, in STxMP PUSCH transmission, the terminal transmit a PUSCH to which DFT-s-OFDM is applied through one Tx panel, and may transmit a PUSCH to which CP-OFDM is applied through another Tx panel.

**Method 1-4: When the mDCI mode is supported (e.g., when mDCI is used), the terminal may apply DFT-s-OFDM to STxMP PUSCH transmission.**

TRP(s) that are able to use the fallback DCI format may be serving TRP(s), and the TRP(s) may be TRP(s) connected to the base station using a type 1 RACH procedure without separate signaling (e.g., RRC signaling). The TRP(s) that are able to use the fallback DCI format may be indicated to the terminal by signaling (e.g., RRC signaling). The TRP(s) that are able to use the fallback DCI format may be TRP(s) that transmit DCI formats in a CORESET with a CORESET pool index 0. A search space and CORESET in which the fallback DCI format can be received may be limited to a CORESET with a specific CORESET pool index.

**Method 1-5: A search space associated with the fallback DCI format may be associated with a specific CORESET (e.g., a CORESET with a specific CORESET pool index).**

## 2. PHY processing method according to STxMP mode

Transmission schemes configurable for a terminal in STxMP PUSCH transmission will be described. Exemplary embodiments of the present disclosure will be described with a focus on a terminal having two Tx panels (e.g., Tx panel 0, Tx panel 1), but the exemplary embodiments may be applied equally or similarly to a terminal having two or more Tx panels.

A Tx panel of the terminal may be associated with an SRS resource set. A transmission scheme of a PUSCH may be indicated to the terminal through signaling (e.g., RRC signaling). The transmission schemes be classified into a single frequency network (SFN) transmission scheme and a spatial domain multiplexing (SDM) transmission scheme, and the base station may configure one of the SFN transmission scheme and the SDM transmission scheme to the terminal.

The terminal may transmit a PUSCH allocated by a non-fallback DCI format (e.g., DCI format 0_1, DCI format 0_2, etc.). In this case, the terminal may perform PUSCH transmission based on one of the SFN transmission scheme, SDM transmission scheme, or other transmission schemes. Transmission of a PUSCH scheduled by a fallback DCI format may be performed based on a separate transmission scheme.

FIG. 3 is a conceptual diagram illustrating a first exemplary embodiment of SFN transmission.

Referring to FIG. 3, the base station may indicate the SFN transmission scheme (e.g., UL transmission based on the SFN transmission scheme) to the terminal. Multiple DM-RS ports may be indicated to the terminal. The terminal may perform PUSCH transmission based on multiple DM-RS ports. In codebook-based transmission, Tx beam(s) for DM-RS ports may be determined using one SRI belonging to the same SRS resource set, and a transmit rank indicator (TRI) and a TPMI may be applied to each Tx beam. In non-codebook based transmission, each Tx beam may be determined using one or more SRIs (e.g., SRIs corresponding to TRI) belonging to the same SRS resource set, and a separate TPMI may not be applied to each Tx beam.

Different coded bits may be mapped to each layer (or DM-RS port). Table 1 below represents codeword-to-layer mapping for spatial multiplexing. In other words, Table 1 below shows a method of mapping one codeword to 1, 2, 3, or 4 layer(s) for PUSCH transmission. $d(\cdot)$ may mean one coded bit that is a result of a low-density parity-check (LDPC) encoding operation. $x(\cdot)$ may mean a bit mapped to a layer. A TPMI may be applied before the mapping operation for the DM-RS ports. Alternatively, the same Tx beam as SRI may be applied.

[Table 1]

| Number of layers | Number of codewords | Codeword-to-layer mapping | $i = 0,1,...,M_{symb}^{layer}-1$ |
|---|---|---|---|
| 1 | 1 | $x^{(0)}(i) = d^{(0)}(i)$ | $M_{symb}^{layer} = M_{symb}^{(0)}$ |
| 2 | 1 | $x^{(0)}(i) = d^{(0)}(2i)$ <br> $x^{(1)}(i) = d^{(0)}(2i + 1)$ | $M_{symb}^{layer} = M_{symb}^{(0)}/2$ |
| 3 | 1 | $x^{(0)}(i) = d^{(0)}(3i)$ <br> $x^{(1)}(i) = d^{(0)}(3i + 1)$ <br> $x^{(2)}(i) = d^{(0)}(3i + 2)$ | $M_{symb}^{layer} = M_{symb}^{(0)}/3$ |
| 4 | 1 | $x^{(0)}(i) = d^{(0)}(4i)$ <br> $x^{(1)}(i) = d^{(0)}(4i + 1)$ <br> $x^{(2)}(i) = d^{(0)}(4i + 2)$ <br> $x^{(3)}(i) = d^{(0)}(4i + 3)$ | $M_{symb}^{layer} = M_{symb}^{(0)}/4$ |

In codebook-based transmission, available TPMIs may differ depending on a codebook subset (e.g., *fullyAndPartialAndNonCoherent, partialAndNonCoherent,* or *noncoherent*). The terminal may select one TPMI among available TPMIs (e.g., allowed TPMIs) based on a specific field included in UL-DCI. The UL-DCI may be DCI that schedules UL transmission. DM-RS ports 0 and 2 may be one coherence pair, and DM-RS ports 1 and 3 may be another coherence pair. When the terminal has two Tx panels and coherence is not maintained between the two Tx panels, it may be preferable for the terminal to allocate the even-numbered DM-RS port(s) and the odd-numbered DM-RS port(s) to different Tx panels.

When the terminal is indicated to perform SFN transmission (e.g., SFN transmission scheme), the terminal may transmit the same coded bits in each of the Tx panels. The same coded bits may be mapped to all DM-RS ports. Table 2 below shows codeword-to-layer mapping for SFN transmission. Referring to Table 2 below, coded bits may be mapped to layers, and the layers may be mapped to the DM-RS ports.

After the codeword-to-layer mapping, a separate TPMI or an SRI included in an SRS resource set may be applied to each TX panel. Alternatively, one TPMI may be applied to all the Tx panels. In the exemplary embodiment of FIG. 3, the DM-RS ports 0 and 2 may correspond to the Tx panel 0, and the DM-RS ports 1 and 3 may correspond to the Tx panel 1.

[Table 2]

| Number of layers | Number of codewords | Codeword-to-layer mapping $i = 0, 1, ..., M_{symb}^{layer} - 1$ | |
|---|---|---|---|
| 2 | 1 | $x^{(0)}(i) = d(i)$ <br> $x^{(1)}(i) = d(i)$ | $M_{symb}^{layer} = M_{symb}$ |
| 4 | 1 | $x^{(0)}(i) = d(2i)$ <br> $x^{(1)}(i) = d(2i + 1)$ <br> $x^{(2)}(i) = d(2i)$ <br> $x^{(3)}(i) = d(2i + 1)$ | $M_{symb}^{layer} = M_{symb}/2$ |

In the exemplary embodiment of FIG. 3, an SRS resource selected from each SRS resource set (e.g., SRS resource set 0 or SRS resource set 1) may have the same number of ports. In codebook-based transmission, the number of SRIs may be 1, and the number of DM-RS ports may be the same as the number of SRS ports. In non-codebook based transmission, the number of SRS ports may be 1, and the number of SRIs may be the same as the number of DM-RS ports.

When SRS ports of one SRS resource are 1000, 1001, ..., and 1000+TRI-1, the same coded bits may be mapped to the DM-RS port corresponding to the same SRS port of SRS resources. Each of the SRS ports may be mapped to different DM-RS ports. The above-described mapping relationship may be applied to codebook-based transmission.

When two or more SRS resources are selected by the SRI, an order of SRI(s) belonging to each SRS resource set may correspond to a relative order of DM-RS ports. The number of SRI(s) selected from each SRS resource set may be the same. The number of SRS resources included in the SRS resource set may always be the same. Alternatively, the number of SRS resources included in the SRS resource set may be different.

The SRIs with a relative order may be associated with the same coded bits. The above-described association relationship may be applied to non-codebook based transmission.

Table 3 below shows an SRI indication for non-codebook based PUSCH transmission. In other words, Table 3 below shows a method of interpreting an SRI field included in UL-DCI. Table 4 below shows a second SRI indication for non-codebook based PUSCH transmission. In other words, Table 4 below shows a method of interpreting a second SRI field included in UL-DCI. The terminal may consider a case where the SRS resource set includes 4 SRS resources. In other words, $N_{SRS}$ may be 4. $N_{SRS}$ may indicate the number of SRS resources. Up to two DM-RS ports may be indicated to the terminal. In other words, $L_{max}$ may be 2. $L_{max}$ may indicate the maximum number of DM-RS ports (e.g., layers) that are configurable in the terminal. Each of the SRI field and the second SRI field may indicate SRS resource(s) selected from the SRS resource set. The SRI field and the second SRI field may indicate the same number of indexes. For example, when the SRI field indicates indexes 0 to 3 (e.g., 4 indexes), the second SRI field may indicate indexes 0 to 3 (e.g., 4 indexes). When the SRI field indicates indexes 4 to 9 (e.g., 6 indexes), the second SRI field may indicate indexes 0 to 5 (e.g., 6 indexes). The SRIs having the same relative order (e.g., SRI in the first SRS resource set and SRI in the second SRS resource set) may correspond to different DM-RS ports, and the different DM-RS ports may correspond to the same coded bits.

[Table 3]

| Bit field mapped to index | SRI(s), $N_{SRS} = 4$ |
|---|---|
| 0 | 0 |
| 1 | 1 |
| 2 | 2 |
| 3 | 3 |
| 4 | 0,1 |
| 5 | 0,2 |
| 6 | 0,3 |
| 7 | 1,2 |

(continued)

| Bit field mapped to index | SRI(s), $N_{SRS} = 4$ |
|---|---|
| 8 | 1,3 |
| 9 | 2,3 |
| 10-15 | reserved |

[Table 4]

| Bit field mapped to index | SRI(s), $N_{SRS} = 4$ |
|---|---|
| 0 | 0 |
| 1 | 1 |
| 2 | 2 |
| 3 | 3 |
| 4-7 | One layer: reserved |
| 0 | 0,1 |
| 1 | 0,2 |
| 2 | 0,3 |
| 3 | 1,2 |
| 4 | 1,3 |
| 5 | 2,3 |
| 6-7 | Two layers: reserved |

**Method 2-1: When the terminal is indicated to perform SFN transmission (e.g., SFN transmission scheme), and port(s) corresponding to SRS resource(s) selected from the first SRS resource set are the same as port(s) corresponding to SRS resource(s) selected from the second SRS resource set, the same coded bits may be mapped to the port(s) associated with each SRS resource set. Each of the ports of SRS resources may be mapped to different DM-RS ports.**

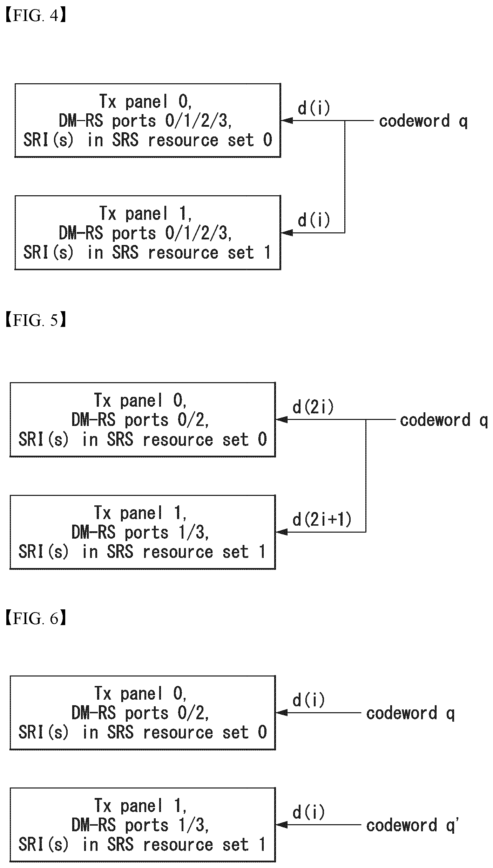

FIG. 4 is a conceptual diagram illustrating a second exemplary embodiment of SFN transmission.

Referring to FIG. 4, multiple DM-RS ports may be indicated to the terminal, and the terminal may perform PUSCH transmission based on the multiple DM-RS ports.

When SRS ports of one SRS resource are 1000, 1001, ... , and 1000+TRI-1, the same coded bits may be mapped to DM-RS ports corresponding to the same SRS port of SRS resources. Tx panels of the terminal may be mapped to the same DM-RS port. The terminal may perform PUSCH transmission using Tx panels that share the same DM-RS port. The base station may receive a PUSCH DM-RS from the terminal, estimate an effective channel response based on the PUSCH DM-RS, and decode data (e.g., PUSCH) based on the estimated channel response. In the present disclosure, the PUSCH DM-RS may be a DM-RS for demodulating and/or decoding a PUSCH.

When two or more SRS resources are selected by an SRI, an order of SRI(s) belonging to each SRS resource set may correspond to a relative order of DM-RS ports. The number of SRI(s) selected from each SRS resource set may be the same. Each of the SRS resource sets may include the same number of SRS resources. Alternatively, each of the SRS resource sets may include a different number of SRS resources.

The SRIs with a relative order may be associated with the same coded bits. The above-described association relationship may be utilized in non-codebook based transmission.

The SRI field in Table 3 and the second SRI field in Table 4 may indicate the same number of indexes. A relative order of the indexes indicated by each of the SRI field and the second SRI field may be maintained, and each of the SRI field and the second SRI field may correspond to the same DM-RS port.

**Method 2-2: When the terminal is indicated to perform SFN transmission (e.g., SFN transmission mode), and SRS resource(s) selected from each SRS resource set correspond to the same DM-RS port, the same coded bits may be mapped to the port (e.g., DM-RS port). The port of each SRS resource may be mapped to the same DM-RS port.**

In the above-described method, one DM-RS port may be mapped to one or more SRS resource(s). Here, an SRS port may be used to represent a Tx beam of a PUSCH (or PUCCH), and a DM-RS port may be used for data mapping and channel estimation of the PUSCH (or PUCCH).

The terminal may perform an operation of mapping as many coded bits as the number of Tx panels to layer(s). The operation of mapping coded bits to layer(s) may be performed independently. For example, when the terminal has two Tx panels, the mapping operation according to Table 1 may be repeated twice. When the number of ports used by the terminal for transmission is limited to four, according to Table 1, the coded bits may be mapped to a maximum of two layers. In order to describe the above-described operation, Table 5 below may be considered. Table 5 shows codeword-to-layer mapping for SFN transmission. A transmission output of the Tx panel 0 may be referred to as x, and a transmission output of the Tx panel 1 may be referred to as y. d may be referred to as a transmission input of the Tx panel 0 and Tx panel 1.

One TPMI may be applied to all Tx panels. Alternatively, a separate TPMI or an SRI included in the SRS resource set may be applied to each Tx panel. In this case, in the exemplary embodiment of FIG. 4, DM-RS ports 0, 1, 2, and 3 may correspond to each Tx panel.

[Table 5]

| Number of layers per TX panel | Number of codewords | Codeword-to-layer mapping $\quad i = 0, 1, …, M_{symb}^{layer} - 1$ | |
|---|---|---|---|
| 1 | 1 | $x^{(0)}(i) = d(i)$<br>$y^{(0)}(i) = d(i)$ | $M_{symb}^{layer} = M_{symb}$ |
| 2 | 1 | $x^{(0)}(i) = d(2i)$<br>$x^{(1)}(i) = d(2i + 1)$<br>$y^{(0)}(i) = d(2i)$<br>$x^{(1)}(i) = d(2i + 1)$ | $M_{symb}^{layer} = M_{symb}$<br>$/2$ |

FIG. 5 is a conceptual diagram illustrating a first exemplary embodiment of SDM transmission.

Referring to FIG. 5, different coded bits may be mapped to each Tx panel. In codebook-based PUSCH transmission, one Tx panel may correspond to one SRS resource set. Therefore, a common TPMI may be applied to DM-RS ports (e.g., DM-RS ports 0 and 2, or DM-RS ports 1 and 3) corresponding to SRS resource(s) belonging to the same SRS resource set. Even when the number of Tx panels in the PUSCH transmission is interpreted as one rather than plural, the TPMI (e.g., common TPMI) may be applied. In STxMP PUSCH transmission, two TPMIs may be indicated to the terminal, and when the terminal uses one Tx panel, one TPMI may be indicated to the terminal. The above-described operation may be applied when the sDCI mode is used in the mTRP scenario.

FIG. 6 is a conceptual diagram illustrating a second exemplary embodiment of SDM transmission.

Referring to FIG. 6, different codewords may be mapped to each Tx panel (or DM-RS port(s) corresponding to an SRS resource set). When four or fewer layers are used for transmission, one codeword may be mapped. In a proposed method, even when four or fewer layers are used for transmission, two codewords may be mapped according to the number of Tx panels.

**Method 2-3: When the terminal is indicated to perform SDM transmission (e.g., SDM transmission scheme), different coded bits may be mapped in each SRS resource set.**

In STxMP PUSCH transmission, up to 4 layers (or DM-RS ports) may be supported, and the number L of layers for transmission in each Tx panel may not be greater than 4. In other words, when *L1* layers are used for transmission in the first SRS resource set, *L2* (=L-L1) or less layers may be used for transmission in the second SRS resource set.

For example, *L1* may be 0, 1, 2, or 3, L2 may be less than or equal to *L-L1,* and *L2* may be 0, 1, 2, or 3. In this case, a separate TPMI may be indicated for each Tx panel. Alternatively, one TPMI may be indicated to the terminal, and the terminal may apply one TPMI to all Tx panels.

**Method 2-4: In Method 2-3, a combination of *L1* and *L2* that satisfies the condition of *L1+L2* is allowed.**

As another example, *L1* may be 0, 1, or 2. *L2* may be less than or equal to *L-L1,* and *L2* may be 0, 1, or 2. In this case, a separate TPMI may be indicated for each Tx panel, and the terminal may apply a separate TPMI to each Tx panel.

**Method 2-5: In Method 2-3, a combination of *L1* and *L2* that satisfies the condition of *L1+L2* and all conditions of *L1* and *L2* is allowed.**

When the mDCI mode is indicated in the mTRP scenario, the terminal may transmit a PUSCH scheduled by one TRP and a PUSCH scheduled by another TRP through using different Tx panels. In this case, as in the exemplary embodiment of FIG. 6, different layers may be mapped to the PUSCH transmissions.

The base station may indicate the terminal to perform either STxMP PUSCH transmission or non-STxMP PUSCH transmission (e.g., TDM PUSCH transmission) through signaling (e.g., RRC signaling). The terminal may identify the transmission (e.g., STxMP PUSCH transmission or non-STxMP PUSCH transmission) indicated by signaling (e.g., RRC signaling) of the base station. The non-STxMP PUSCH transmission may refer to non-STxMP based PUSCH transmission. The TDM PUSCH transmission may refer to TDM-based PUSCH transmission.

The STxMP PUSCH transmission may be performed based on the SFN transmission mode or SDM transmission mode. The base station may indicate a transmission mode for STxMP PUSCH transmission to the terminal through signaling. The terminal may identify the transmission mode (e.g., SFN transmission mode or SDM transmission mode) indicated by the signaling (e.g., RRC signaling) of the base station. Alternatively, when the sDCI mode or mDCI mode is selected, the SFN transmission mode or SDM transmission mode may be implicitly selected.

When the SFN transmission mode is used, a scheme of sharing DM-RS port(s) or a scheme of not sharing DM-RS port(s) may be considered.

The terminal may dynamically switch between STxMP (e.g., STxMP PUSCH transmission) and non-STxMP (e.g., non-STxMP PUSCH transmission). The non-STxMP may be interpreted as an operation supported by the technical specifications. The STxMP may be classified into STxMP SDM or STxMP SFN. The STxMP SDM may be STxMP based on the SDM transmission scheme. The STxMP SFN may be STxMP based on the SFN transmission scheme.

When the terminal operates in STxMP SDM, the maximum number *maxLayer* of layers that can be scheduled or the maximum number *maxRank* of ranks that can be scheduled may have different values for each Tx panel. The base station may inform the terminal of a pair (*maxLayer, maxRank*) for each Tx panel through signaling (e.g., RRC signaling). The terminal may identify the pair (*maxLayer, maxRank*) for each Tx panel indicated by signaling (e.g., RRC signaling) of the base station. Combination(s) of (*maxLayer, maxRank*) for each Tx panel may be restricted in the technical specifications. Alternatively, the combination(s) of (*maxLayer, maxRank*) for each Tx panel may be restricted by a scheduler.

If the terminal is capable of performing transmission through up to four layers, the base station may indicate *maxLayer*=4 to the terminal. For *maxLayer1* and *maxLayer2* separately indicated to the terminal, some combinations may be restricted. A reason therefor may be that *maxLayer1*=4 associated with the Tx panel 1 and *maxLayer2*=4 associated with the Tx panel 2 may be indicated to the terminal. According to the technical specifications, a relationship (*maxLayer1 + maxLayer2 $\leq$ maxLayer*) may be maintained. Alternatively, according to the technical specifications, a relationship (*maxLayer1 $\leq$ maxLayer*) and a relationship (*maxLayer2 $\leq$ maxLayer*) may be maintained. In this case, the scheduler may perform scheduling to satisfy the relationship (*maxLayer1 + maxLayer2 $\leq$ maxLayer*).

When the terminal operates in STxMP SFN, a value of *maxLayer* or *maxRank* for non-STxMP may be reused as a value of *maxLayer* or *maxRank* for STxMP SFN. Alternatively, *maxLayer* or *maxRank* for STxMP SFN may have separate values from *maxLayer* or *maxRank* for non-STxMP. In order to support the above-described operation, the base station may indicate the value of *maxLayer* or *maxRank* for STxMP SFN to the terminal through signaling (e.g., RRC signaling). The terminal may identify the value of *maxLayer* or *maxRank* for STxMP SFN through signaling from the base station. The value of *maxLayer* supported in STxMP SFN may not be greater than *maxLayer* supported in non-STxMP.

**3. Transform precoding application method in STxMP PUSCH transmission**

A terminal may transmit a PUSCH scheduled by a fallback DCI format. The terminal may map one codeword to one DM-RS port. In an FR2 band, when the terminal is in the RRC connected state, it may be assumed that a PUSCH is not scheduled by a fallback DCI format in a UL BWP with PUCCH resources for which a spatial relation or UL/joint TCI for a PUCCH is not configured. Exceptionally, when *enableDefaultBeamPL-ForPUSCH0-0* is enabled, a PUSCH may be scheduled in the UL BWP.

A base station may indicate dedicated PUCCH resources to the terminal through signaling (e.g., RRC signaling). The same spatial relation as a dedicated PUCCH resource with the lowest ID among the dedicated PUCCH resources indicated to the terminal by the signaling (e.g., RRC signaling) may be applied to PUSCH transmission. The above-described operation may be applied at least to a serving cell to which PUCCHs can be transmitted. When carrier aggregation (CA) is configured in the terminal, the same spatial relation (e.g., the same Tx beam) as the dedicated PUCCH resource with the lowest ID may be applied to PUSCH transmission in another serving cell.

When use of a default beam is allowed (e.g., when *enableDefaultBeamPL-ForPUSCHO-0* is enabled), a UL BWP 1 without PUCCH configured and a UL BWP 2 with PUCCH configured may be considered. In the UL BWP 2, PUCCH may be configured, but spatial relation may not be configured for all PUCCH resources. The default beam may be used to estimate a path loss to determine a transmission power and/or derive a Tx beam.

In order to transmit a PUSCH in the UL BWP 1, the terminal may derive a Tx beam using the default beam. In order to transmit a PUSCH in the UL BWP 2, the terminal may derive a Tx beam using the default beam.

The default beam may be derived using a reference signal (RS) considering a TCI state (i.e. qcl type) of a CORESET having the lowest ID among CORESETs configured in a DL BWP of the serving cell (e.g., serving cell including the UL BWP 1 or UL BWP 2). When the CORESET has two TCI states, the terminal may utilize the first TCI state among the two TCI states to derive the default beam.

The base station may transmit information indicating whether to apply transform precoding to a PUSCH allocated by a fallback DCI to the terminal through signaling (e.g., RRC signaling). The terminal may identify whether transform precoding is applied to the PUSCH based on the signaling (e.g., RRC signaling) of the base station. In this case, a parameter associated with an active UL BWP may not be applied. A waveform for a PUSCH allocated by a non-fallback DCI may be determined by applying the parameter associated with the active UL BWP. When the parameter associated with the active UL BWP is indicated to the terminal, the waveform may be changed according to scheduling information of the PUSCH. Alternatively, the waveform of the PUSCH may be changed by a MAC CE.

For example, a waveform 0 may be associated with the active UL BWP, but a waveform 1 may be indicated to the terminal by specific scheduling information or MAC CE.

When transform precoding is enabled and the number of consecutively scheduled PRBs is in a multiple of 2, 3, or 5, DFT-s-OFDM may be allocated as a single layer. A fallback DCI may always schedule a single layer.

When signaling (e.g., RRC signaling) indicates the terminal to perform STxMP or repeated PUSCH transmission, two or more SRS resource sets may be indicated to the terminal. Therefore, detailed operations may need to be indicated to the terminal. According to a proposed method, the base station may explicitly indicate the SRS resource sets to the terminal through signaling (e.g., RRC signaling). Alternatively, the terminal may determine the SRS resource sets based on other information. Once the SRS resource sets are determined, SRS port(s) for an SRS resource that the terminal can use may be indicated using DM-RS port(s).

**Method 3-1: When transmission for one layer is performed for each Tx panel (or SRS resource set), a transform precoder may be applied.**

**Method 3-2: In Method 3-1, to transmit PUSCH(s) corresponding to all Tx panels (or all SRS resource sets), transform precoding may or may not be applied.**

The terminal may change a waveform of the PUSCH according to scheduling information. In other words, the terminal may enable or disable transform precoding using the scheduling information. When the terminal operates in the sDCI mode, the terminal may operate according to single scheduling information. Therefore, the terminal may use the same waveform in all Tx panels.

When the terminal operates in the mDCI mode, the terminal may receive different scheduling information for each Tx panel (or SRS resource set). When a radio channel state is different for each Tx panel, the terminal may decide whether to apply transform precoding to each Tx panel. Even when the terminal operates in the sDCI mode, the terminal may decide whether to apply transform precoding to each Tx panel in a specific scenario.

For example, transmission for one layer may be performed in one Tx panel, and transmission for two layers may be performed in another Tx panel. In this case, the terminal may perform transform precoding in the Tx panel where transmission for one layer is performed.

For another example, a timing advance (TA) for one Tx panel may be different from a TA for another Tx panel, and a difference between a path loss for one Tx panel and a path loss for another Tx panel may be large. In this case, even when transmission for one layer is performed in each TX panel, it may be preferable for transform precoding to be performed in one TX panel.

**Method 3-3: In Method 3-1, transform precoding may be applied for transmission of a PUSCH corresponding to one Tx panel (or SRS resource set), but transform precoding may not be applied to transmission of a PUSCH corresponding to another Tx panel (or SRS resource set).**

Application of transform precoding may be considered in various exemplary embodiments of STxMP.

The terminal may operate in the STxMP SFN mode 1 shown in FIG. 3. The terminal may perform transmissions for different DM-RS ports through Tx panels. The terminal may transmit a PUSCH using two DM-RS ports (or two layers). Since each Tx panel can have one DM-RS port, transform precoding may be applied to all or some of the Tx panels.

The terminal may operate in the STxMP SFN mode 2 shown in FIG. 4. DM-RS ports may be shared between the Tx panels. Therefore, one DM-RS port may be applied, and transform precoding may be interpreted as being applied to all Tx panels.

The terminal may operate in the STxMP SDM mode 1 shown in FIG. 5. The STxMP SDM mode 1 may be applied in the sDCI mode or mDCI mode. When one DM-RS port is applied in a Tx panel, transform precoding may be applied to the Tx panel.

The terminal may operate in the STxMP SDM mode 2 shown in FIG. 6. The STxMP SDM mode 2 may be applied in the sDCI mode or mDCI mode. When one DM-RS port is applied in a Tx panel, transform precoding may be applied to the Tx panel.

When the terminal performs repeated PUSCH transmission, a different number of layers may be scheduled for each Tx panel or SRS resource set. Transform precoding may be applied to a Tx panel to which one layer is allocated. Depending on scheduling information, the terminal may or may not apply transform precoding even when one layer is allocated according to a Tx panel.

**4. STxMP PUSCH transmission method considering dynamic waveform switching (DWS)**

DFT precoding for a dynamically allocated PUSCH may or may not be applied dynamically. A PUSCH that the terminal can transmit in an active UL BWP may have multiple waveforms. The waveforms of PUSCH may be classified into the same waveform as a Msg3 PUSCH and a waveform related to the UL BWP. The waveform may refer to DFT-s-OFDM to which DFT precoding is applied or CP-OFDM to which DFT precoding is not applied.

When UL-DCI received at the terminal has a DCI format 0_0 or when UL-DCI is received in a cell-specific search space or common search space (CSS), a waveform of a PUSCH scheduled by the UL-DCI may be the same as that of a Msg3 PUSCH. When UL-DCI received at the terminal has a DCI format 0_1, when UL-DCI received at the terminal has a DCI format 0_2, or when UL-DCI is received in a UE-specific search space (USS), a waveform of a PUSCH scheduled by the UL-DCI may be the same as a waveform derived from configuration of the UL BWP.

When a terminal is located at a coverage edge of the base station, a link budget for DFT-s-OFDM-based PUSCH transmission may be greater than a link budget for CP-OFDM-based PUSCH transmission. A terminal located at a coverage center of the base station may move to a coverage edge of the base station depending on its mobility. Even when the terminal moves from the coverage center to the coverage edge, it may be preferable for the terminal to be able to dynamically change a PUSCH waveform to ensure reliable communication of the terminal without performing a separate procedure.

In order to dynamically change the waveform, the terminal may receive scheduling information that changes the UL BWP. In a procedure for changing (or re-indicating) the UL BWP, a DFT precoder may or may not be applied, and a radio frequency (RF) returning operation, etc. may be performed again. Therefore, unnecessary operations may need to be omitted.

UL DCI may include an information field (e.g., a DWS field or a transform precoding indicator (TPI) field) that dynamically indicates the waveform. When the DWS field has a first value, the terminal may apply a DFT precoder. When the DWS field has a second value, the terminal may not apply a DFT precoder.

The amount and/or type of information scheduled for each waveform may vary. To support the above-described operation, known bits may be added to information field(s) included in the UL DCI so that the information field(s) have a length independent of the waveform. Each information field may have a longer length depending on the waveform. When a waveform with a shorter length is applied, scheduling information may be interpreted based on a part (e.g., least significant bits (LSBs) or most significant bits (MSBs)) of the information field.

Considering repeated PUSCH transmission, a waveform applied by the terminal to each Tx panel, SRS resource set, or PUSCH transmission may be different. A reason therefor may be that a TRP at which the PUSCH is expected to be received may be different for each PUSCH transmission. Because a link budget between the terminal and the TRP may be different, it may be preferable that the DWS information is indicatable for each link (e.g., each TRP).

Considering STxMP PUSCH transmission, a waveform applied to each Tx panel of the terminal may be different. Alternatively, a waveform applied may be different for each TRP (or Rx panel of the TRP) that is a transmission target of the terminal. Therefore, it may be preferable for the DWS field to be indicated for each link. Methods below may be used not only for UL-DCI scheduling STxMP PUSCH transmission but also for other scenarios including two UL-TCIs, two TPMIs, or two SRS resources (e.g., identifiers of SRS resources).

According to a proposed method, the size of the DWS field included in UL-DCI may be 1 bit, and the DWS field may be commonly applied to all links. In this case, a waveform may be different in each of the Tx panels.

**Method 4-1: The size of the DWS field included in UL-DCI may be 1 bit, and the terminal may derive a waveform by commonly applying the DWS field to all PUSCHs.**

When the terminal performs STxMP SDM PUSCH transmission, the terminal may perform transmission for one layer in one Tx panel. The terminal may determine a waveform for the Tx panel based on the value of the DWS field. When transmission for two or more layers is performed in another Tx panel, the DWS field may not be applied in the another Tx panel.

When the terminal performs STxMP SDM PUSCH transmission or STxMP SFN PUSCH transmission, the terminal may perform transmission for one layer in all Tx panels. The terminal may determine a waveform for the Tx panels based on the value of the DWS field. The waveform may be the same in all TX panels.

When DFT precoding is performed based on the value of the DWS field, the terminal may assume that one layer is allocated.

When the terminal performs STxMP SDM PUSCH transmission or STxMP SFN PUSCH transmission, two or more SRS resource sets (e.g., first SRS resource set and second SRS resource set) may be indicated or configured to the terminal. The DWS field of UL-DCI may be indicated or configured as 1 bit, and the DWS field may be interpreted as indicating DFT precoding for one SRS resource set.

A certain SRS resource set selected from two or more SRS resource sets or a scheme of selecting a certain SRS resource set from two or more SRS resource sets may be defined in the technical specifications. Alternatively, a certain SRS resource set selected from two or more SRS resource sets or a scheme of selecting a certain SRS resource set from two or more SRS resource sets may be indicated to the terminal through higher layer signaling. Methods below may be applied in the case of two SRS resource sets, but the methods below may be easily expanded and applied to three or more SRS resource sets.

**Method 4-2: The DWS field may be interpreted as whether DFT precoding is performed for the first SRS resource set, and may not be used as information for the second SRS resource set.**

**Method 4-3: The DWS field may be interpreted as whether DFT precoding is performed for the second SRS resource set, and may not be used as information for the first SRS resource set.**

**Method 4-4: An SRS resource set to which the DWS field is applied may be indicated or configured**

through higher layer signaling, the first SRS resource set or the second SRS resource set may be selected, and the DWS field may be applied to the selected SRS resource set.

According to a proposed method, the size of the DWS field included in UL-DCI may be 2 bits, and a different waveform may be used in each of the Tx panels.

Method 4-5: The size of the DWS field included in UL-DCI may be 2 bits, and the terminal may derive a waveform for each PUSCH by applying the DWS field to the respective PUSCHs.

Method 4-6: The size of the DWS field included in UL-DCI may be 2 bits, and the 2 bits may be consecutive bits or non-consecutive bits. Another information field may be arranged between the two non-consecutive bits.

The DWS field included in UL-DCI may be interpreted as a bitmap. The MSB of the DWS field may correspond to one Tx panel. The LSB of the DWS field may correspond to another Tx panel.

The DWS field included in UL-DCI may be interpreted as a bitmap. The MSB of the DWS field may correspond to one TRP (or an Rx panel of the TRP, a CORESET pool index associated with a search space set/CORESET in which the UL-DCI is detected). The LSB of the DWS field may correspond to another TRP (or an Rx panel of the TRP, a CORESET pool index associated with a search space set/CORESET in which the UL-DCI is detected).

In the sDCI-based mTRP scenario, the terminal may repeatedly transmit a PUSCH. To assume that the PUSCH is received at each TRP, a TPMI, SRS resource (e.g., SRI), and/or UL-TCI appropriate for a link with the TRP may be separately indicated to the terminal. One TB may be allocated, and the terminal may transmit the one TB on the PUSCH. In this case, the one TB may be received at two TRPs. Therefore, even when two TPMI/UL-TCI/SRI are indicated to the terminal, transmission for the same number of layers may be performed. Even in this case, Method 4-1, Method 4-5, and/or Method 4-6 may be applied.

It may be indicated that transmission for one layer is performed for each TRP in the TDM manner. In this case, the terminal may or may not commonly apply DFT precoding to the links. To support the above-described operation, one value of the DWS field may correspond to all TRPs, and the terminal may or may not apply DFT precoding to all PUSCH transmissions.

It may be indicated that transmission for one layer is performed for each TRP in the TDM manner. In this case, the terminal may or may not apply DFT precoding to each link. To support the above-described operation, the size of the DWS field may be $n$ bits. $n$ may be an integer of 2 or more. The MSB among $n$ bits may correspond to one TRP (or an Rx panel of the TRP, CORESET pool index). The LSB among $n$ bits may correspond to another TRP (or an Rx panel of the TRP, CORESET pool index).

## 5. STxMP PUCCH transmission method

The terminal may use a PUCCH (or PUSCH) to transmit UCI. When a PUCCH symbol overlaps with a PUSCH symbol, the UCI may be transmitted using a PUSCH instead of a PUCCH. The PUCCH symbol may refer to a symbol in which PUCCH transmission is performed. The PUSCH symbol may refer to a symbol in which PUSCH transmission is performed. When a priority index of the PUCCH can be compared to a priority index of the PUSCH, inter-band CA may be activated, and PUCCH transmission and PUSCH transmission may be performed simultaneously in different frequency bands. If the above-described conditions are not satisfied, the terminal may drop PUCCH transmission and perform PUSCH transmission.

The terminal may transmit a PUCCH using one DM-RS port. A Tx beam referenced by a PUCCH DM-RS port may be a default beam. Alternatively, the Tx beam referenced by the PUCCH DM-RS port may be explicitly indicated by a TCI state or spatial relation information.

When the terminal has two or more Tx panels, the terminal may transmit the PUCCH using one DM-RS port. In this case, operations according to the technical specifications may be performed. The base station may indicate the terminal to support two or more DM-RS ports. In this case, the terminal may perform transmission using two or more DM-RS ports in two or more Tx panels rather than one Tx panel.

The DM-RS ports may have orthogonal radio resources. When the same DM-RS port may be used, radio channels estimated by the base station may mean two or more links. In this case, operations of the terminal may be inaccurate.

Method 5-1: Two or more PUCCH DM-RS ports may be indicated to the terminal.

The terminal may support as many DM-RS ports as the number of Tx panels (or the number of antenna groups (Ng)). When two or more DM-RS ports are used, a cyclic shift, orthogonal cover code (OCC), and/or base sequence may be additionally allocated. A resource of the DM-RS port may be determined considering a PUCCH format.

Method 5-2: An additional offset for a cyclic shift of an additional PUCCH DM-RS port may be indicated to the terminal by signaling (e.g., RRC signaling).

When the PUCCH format 0 is used, according to Method 5-2, one cyclic shift may be indicated by information indicated by scheduling information and/or signaling (e.g., RRC signaling) for the terminal, and the one cyclic shift may be used to derive a sequence of a PUCCH DM-RS port 0, and (one cyclic shift + additional offset) may be used to derive a sequence of a PUCCH DM-RS port 1. In this case, the base station may know that multiplexing capacity of the PUCCH format 0 is decreased, and may reflect the multiplexing capacity in scheduling for multiple users.

The additional offset may have a value of +1 or -1. When the terminal transmits a HARQ-ACK of 2 bits, the terminal may use four cyclic shifts. To maximize detection performance at the base station, a difference between adjacent cyclic shifts may be 3. When the terminal transmits a HARQ-ACK of 1 bit, a difference between adjacent cyclic shifts may be 6. Therefore, it may be preferable that the additional offset for the cyclic shift is not set to 3 or 6. It may be preferable for the terminal to use the adjacent cyclic shift. The adjacent cyclic shift may be expressed using $\pm 1$.

**Method 5-3: An additional offset for an OCC of the additional PUCCH DM-RS port may be indicated to the terminal by signaling (e.g., RRC signaling).**

When the PUCCH format 1 or PUCCH format 4 is used, according to Method 5-3, one index may be indicated by information indicated by scheduling information and/or signaling (e.g., RRC signaling) for the terminal, and the one index may be used to derive an OCC applied to the PUCCH DM-RS port 0, and (one index + additional offset) may be used to derive an OCC applied to the PUCCH DM-RS port 1.

In order to satisfy frequency domain regulations in a communication system supporting an unlicensed band, PRBs may be allocated so that PUCCH resources have interlaced mapping. The PRBs may be spread so that the PUCCH resources have interlaced mapping. In this case, since multiplexing capacity is reduced, a spreading sequence may be additionally applied in scheduling for multiple users. According to Method 5-3, an additional OCC may be used, and the additional OCC may be applied to the PUCCH DM-RS port 1. The additional OCC may be an OCC with the additional offset applied.

When the amount of UCI is large, in the PUCCH format 2 and/or PUCCH format 3, the terminal may compare a code rate indicated by signaling (e.g., RRC signaling) (hereinafter referred to as 'reference code rate') with an effective code rate of the UCI. The terminal may determine whether the effective code rate is higher or lower than the reference code rate. When the effective code rate is higher than the reference code rate, the terminal may not select a PUCCH associated with the effective code rate, and may select another PUCCH including more PRBs than the PUCCH associated with the effective code rate. For example, considering a PUCCH carrying a CSI report, two PUCCH resources may be indicated to the terminal, and the terminal may select one PUCCH resource among the two PUCCH resources.

When the effective code rate is lower than the reference code rate, the terminal may perform an operation to reduce the number of PRBs. Alternatively, the terminal may reduce the amount of UCI. For example, the terminal may drop a CSI report with lower priority. A CSI report may be divided into a CSI part 1 and a CSI part 2. In this case, the terminal may drop the CSI part 2 and transmit the CSI part 1. Alternatively, the terminal may transmit the CSI part 1. In other words, the terminal may select CSI report(s) with higher priority and transmit the selected CSI report(s). Alternatively, the terminal may transmit all of the CSI part 1 and a part of the CSI part 2. In this case, the part of the CSI part 2, which is transmitted by the terminal, may be a CSI part 2 belonging to a higher priority CSI report.

When a PUCCH resource has $M_{RB}$ RBs, UCI is transmitted in $N_{symb}$ OFDM symbols, and the maximum code rate of the UCI is r, the terminal may calculate $M_{RB} \cdot N_{SC}^{RB} \cdot N_{symb} \cdot Q_m \cdot r$. $N_{SC}^{RB}$ may indicate the number of REs to which the UCI is mapped within one RB. $N_{SC}^{RB}$ may be a constant. $Q_m$ may be 1 in $\pi/2$-binary phase shift keying (BPSK). $Q_m$ may be 2 in quadrature phase shift keying (QPSK). $Q_m$ may be a constant. The above-described operation may be applied when one DM-RS port is supported in the PUCCH resource.

When two or more DM-RS ports are supported, the terminal may utilize all Tx panels based on STxMP for PUSCH transmission. In this case, the base station may indicate the terminal to perform either STxMP SFN PUCCH transmission or STxMP SDM PUCCH transmission. Alternatively, either STxMP SFN PUCCH transmission or STxMP SDM PUCCH transmission may be determined based on the technical specifications. Alternatively, the technical specifications may specify only one of STxMP SFN PUCCH transmission or STxMP SDM PUCCH transmission. The STxMP SFN PUCCH transmission may refer to STxMP PUCCH transmission based on the SFN mode. The STxMP SDM PUCCH transmission may refer to STxMP PUCCH transmission based on the SDM mode.

Coded UCI in STxMP SFN PUCCH transmission may be commonly mapped to all DM-RS ports. Coded UCI in STxMP SDM PUCCH transmission may be mapped based on codeword-to-layer mapping. STxMP may be a procedure related to the transmission of coded UCI, and transmission related to the DM-RS port may be performed differently from STxMP. For example, the coded UCI may be transmitted based on STxMP SFN PUCCH transmission, but two or more DM-RS ports may be indicated, and the two or more DM-RS ports may use orthogonal resources.

When STxMP SDM PUCCH transmission is performed, different methods may be applied depending on the PUCCH formats.

**Method 5-4: When the PUCCH format 0 and/or PUCCH format 1 is used, the same sequence may be mapped and transmitted in all layers. It may preferable that equations applied to the PUCCH format 2, PUCCH format 3, and/or PUCCH format 4, in which 3 or more bits of UCI can be transmitted, are changed.**

**Method 5-5: When a PUCCH resource for which $L$ DM-RS ports are indicated are used, the amount of UCI**

that can be transmitted on the PUCCH may be expressed in $M_{RB} \cdot N_{SC}^{RB} \cdot N_{symb} \cdot Q_m \cdot r \cdot L$ bits.

When $L \leq 2$, the effective code rate of UCI may be reduced to $1/L$. The terminal may generate the coded UCI by performing an encoding procedure on the UCI, and may perform a modulation procedure on the coded UCI. Then, the terminal may perform a codeword-to-layer mapping procedure.

**Method 5-6: One codeword or two codewords for UCI may be generated depending on the amount of UCI type (e.g., HARQ-ACK, CSI, etc.). According to an order considered in the technical specifications, a codeword-to-layer mapping procedure for the codeword(s) may be performed. For example, a codeword-to-layer mapping procedure for HARQ-ACK may be performed first, and then a codeword-to-layer mapping performed for CSI may be performed.**

UCIs with different UCI types may belong to different codewords (or different encoding procedures). If the amount of UCI is large, a segmentation procedure for the UCI may be performed. If the UCI type (e.g., UCI with the UCI type) is divided into two codewords, the terminal may perform a layer-to-port mapping procedure for the first codeword, and perform a codeword-to-layer mapping procedure for the second codeword.

According to Method 5-6, the method of mapping codewords to UCI types (e.g., method of codeword-to-layer mapping) may be expressed as Table 6 below.

Table 6 shows a method of mapping between codewords and layers when the SDM mode is used. $x^{(n)}(i)$ may mean the i-th coded bit (e.g., modulation symbol, $d(i)$) mapped to a DM-RS port $n$. The terminal may apply the same procedure to other UCI types according to the order considered in technical specifications.

[Table 6]

| Number of layers $i = 0, 1, ..., M_{symb}^{layer} - 1$ | Codeword-to-layer mapping | |
|---|---|---|
| 1 | $x^{(0)}(i) = d(i)$ | $M_{symb}^{layer} = M_{symb}$ |
| 2 | $x^{(0)}(i) = d(2i)$<br>$x^{(1)}(i) = d(2i + 1)$ | $M_{symb}^{layer} = M_{symb}/2$ |

When STxMP SFN PUCCH transmission is performed, the terminal may apply the same method (e.g., the same procedure) regardless of the PUCCH format. For example, for the PUCCH format 0 and/or PUCCH format 1, the same sequence may be mapped to all layers.

**Method 5-7: In case of the PUCCH format 0 and/or PUCCH format 1, the same sequence may be mapped and transmitted in all layers. It may** be **preferable that the equations applied to the PUCCH format 2, PUCCH format 3, and/or PUCCH format 4, in which 3 or more bits of UCI can be transmitted, are reused.**

According to Method 5-7, the method of mapping between codewords to UCI types (e.g., method of codeword-to-layer mapping) may be expressed as Table 7 below.

Table 7 shows a method of mapping between codewords and layers when the SFN mode is used. $x^{(n)}(i)$ may mean the i-th coded bit (e.g., modulation symbol, d(i)) mapped to a DM-RS port $n$. The terminal may apply the same procedure to other UCI types according to the order considered in the technical specifications.

[Table 7]

| Number of layers | Codeword-to-layer mapping $i = 0, 1, ..., M_{symb}^{layer} - 1$ | |
|---|---|---|
| 1 | $x^{(0)}(i) = d(i)$ | $M_{symb}^{layer} = M_{svmb}$ |
| 2 | $x^{(0)}(i) = d(i)$<br>$x^{(1)}(i) = d(i)$ | $M_{symb}^{layer} = M_{svmb}$ |

Although the terminal supports two or more PUCCH DM-RS ports, one DM-RS port (e.g., each PUCCH DM-RS port) may correspond to each Tx panel. In this case, the transform precoder may be applied to each Tx panel. The transform precoder may be applied to the PUCCH format 3 or PUCCH format 4.

**Method 5-8: Even when the terminal uses two or more DM-RS ports, the terminal may apply a transform precoder to each DM-RS port.**

In STxMP SDM PUCCH transmission, coded bits may be distributed across layers. Therefore, the terminal may apply the transform precoder to each DM-RS port (or Tx panel). Coded bits in STxMP SFN PUCCH transmission may be applied equally to the layers. Therefore, the terminal may apply the transform precoder to different DM-RS ports.

In STxMP SDM PUCCH transmission or STxMP SFN PUCCH transmission, codebook-based transmission or non-codebook-based transmission may be performed. When independent operation is possible for each PUCCH DM-RS port (or Tx panel), a TPMI may refer to a diagonal matrix. For example, the TPMI may be $\frac{1}{\sqrt{2}}\begin{pmatrix} 1 & 0 \\ 0 & 1 \end{pmatrix}$.

A TPMI or SRI applied to a PUCCH DM-RS may be derived from information configuring the PUCCH resource. The TPMI or SRI applied to the PUCCH DM-RS may not be explicitly derived from scheduling information (e.g., scheduling DCI).

**Method 5-9: A TPMI (or Tx beam) applied to a PUCCH DM-RS may be derived from a PUCCH resources, and the TPMI (or Tx beam) applied to the PUCCH DM-RS may not be explicitly indicated by scheduling information.**

When there are two or more spatial relation information (or UL/joint TCIs) referenced by the PUCCH resource, the base station may indicate the terminal to change/release some UL/joint TCI. According to technical specifications, when repeated PUCCH transmission is performed in the time domain, one or more UL/joint TCIs applied sequentially may be indicated to the terminal. When STxMP PUCCH transmission is supported, the UL/Joint TCI(s) may be updated using the same signaling. The terminal may interpret the UL/joint TCI(s) signaled by the base station as UL/joint TCI(s) applied to simultaneous transmission of PUCCH.

## 6. STxMP UL coherence window derivation method

The terminal may expand a UL coverage using repeated transmission. A repeated transmission method in STxMP PUSCH transmission or STxMP PUCCH transmission will be described. A UL signal/channel may include at least a PUSCH or PUCCH. In addition, a UL signal/channel may mean an SRS.

The base station may select one Tx panel of the terminal and indicate the terminal to repeatedly transmit a UL signal/channel using the selected Tx panel. The base station may select a radio link with high quality. In this case, the effective code rate may decrease.

**Method 6-1: In a central region of a UL coverage, the terminal may transmit a UL signal/channel based on the STxMP scheme. The terminal may assume that an STxMP UL signal/channel is not repeatedly transmitted. The STxMP UL signal/channel may refer to a UL signal/channel based on the STxMP scheme.**

A quality of a radio link may vary significantly depending on a blockage. If a power (e.g., transmission power) of each Tx panel is controllable, the terminal may utilize two or more Tx panels simultaneously. The base station may indicate the terminal to repeatedly transmit a UL signal/channel. If a transmission power of a terminal located in an edge region of the UL coverage increases, interference due to transmission of the terminal may significantly affect adjacent base stations. Therefore, it may be preferable for the terminal to reduce the effective code rate while maintaining an appropriate transmission power.

**Method 6-2: The terminal may receive scheduling information for repeated transmission of an STxMP UL signal/channel.**

The base station may transmit signaling (e.g., RRC signaling) indicating to additionally perform DM-RS bundling to the terminal while performing repeated transmission of the UL signal/channel. The terminal may identify that DM-RS bundling is indicated by the signaling (e.g., RRC signaling) of the base station. When DM-RSs of UL signal/channel(s) are received in a plurality of slots, the base station may perform a joint channel estimation operation for the DM-RSs. In this case, a gain of the channel estimation operation can be improved. To support the above-described operation, the terminal may maintain coherence (e.g., power consistency and/or phase continuity) during slots in which the DM-RSs are transmitted and received.

A time during which the terminal maintains coherence may be referred to as a nominal time domain window (TDW) and/or an actual TDW. An event that does not maintain coherence within the nominal TDW may occur. The coherence may not be maintained after the above-described event. A time before the event may be referred to as an actual TDW. Depending on UE capability, the terminal may restart the actual TDW after the event. In this case, the terminal may maintain coherence even after the event.

The event may be classified into a semi-static event and a dynamic event. The semi-static event may refer to an event in which coherence is not maintained due to semi-statically reflected information (e.g., frequency hopping, TDD slot pattern, etc.) before the nominal TDW ends. The dynamic event may refer to an event in which coherence is not maintained by dynamically received information (e.g., group common DCI, scheduling DCI) before the nominal TDW ends.

The terminal may assume that an actual TDW is generated due to a static event (e.g., frequency hopping, change of SRS resource set, change of spatial relation information, change of UL/joint TCI, and/or change of power control parameter(s)) rather than a dynamic event, and the coherence is maintained by the actual TDW. The following event(s) may be considered as events in which coherence is not maintained. Depending on UE capability, the actual TDW may not be generated after the event. Alternatively, the actual TDW may be generated after the event depending on UE capability.

A reception operation in DL symbol(s) indicated by signaling (e.g., RRC signaling) between UL symbols may be considered as an event. When a gap wider than 13 symbols (or 11 symbols in case of an extended cyclic prefix (CP)) occurs between two consecutive UL transmissions (e.g., PUSCH/PUCCH transmissions), the above-described situation may be considered as an event. Although a gap not wider than 13 symbols or 11 symbols occurs between two consecutive UL transmissions, if another UL transmission is scheduled, the above-described situation may be considered as an event. When the PUSCH repetition type A is applied, when the PUSCH repetition type B is applied, when a TB is mapped to multiple slots (e.g., TB processing over multiple slots), when PUSCH transmission is dropped/canceled due to a UL prioritization/multiplexing procedure, when PUSCH transmission is dropped/canceled due to a difference in slot patterns, and/or when PUSCH transmission is dropped/canceled due to uplink cancellation indication (ULCI), the above-described situation(s) may be considered as an event. When two SRS resource sets are configured for two consecutive UL transmissions according to the PUSCH repetition type A/B, PUSCH transmission is performed based on codebook or non-codebook, and an association relationship of the SRS resource sets is changed, the above-described situation may be considered as an event. When spatial relation information (or UL/joint TCI) for two consecutive PUSCH repetitions changes or when power control parameters for two consecutive PUSCH repetitions change, the above-described situation(s) may be considered as an event. When a reception/application operation for a TA command or a TA value for timing alignment is performed, the above-described situation may be considered as an event. When frequency hopping is performed, the above-described situation may be considered as an event.

The terminal may determine the number of Tx panels (e.g., one Tx panel or two or more Tx panels) to be used for STxMP UL transmission based on dynamic scheduling information. In this case, the terminal may apply an event where coherence is maintained by considering the determined Tx panel(s).

In the mDCI-based mTRP scenario, two TRPs may indicate the terminal to transmit UL signal(s)/channel(s) (e.g., UL 1 and UL 2) using independent scheduling information. In the sDCI-based mTRP scenario, the terminal may perform transmission of UL signal(s)/channel(s) (e.g., UL 1 and UL 2) based on scheduling information received from one TRP.

UL 1 and UL 2 may be allocated without overlapping in the time domain. UL 1 and UL 2 may be transmitted by the same Tx panel. Alternatively, UL 1 and UL 2 may be transmitted by different Tx panels. In this case, the terminal may perform UL transmission of either UL 1 or UL 2. Alternatively, the terminal may perform transmission for both UL 1 and UL 2.

Even when UL 1 and UL 2 do not overlap in the time domain, if an actual TDW for UL 1 or UL 2 is generated, the terminal may perform transmission in a Tx panel considering the actual TDW.

Repeated transmission for UL 1 may be scheduled, and transmission for UL 2 may be scheduled. The above-described situation may be considered in exemplary embodiments below.

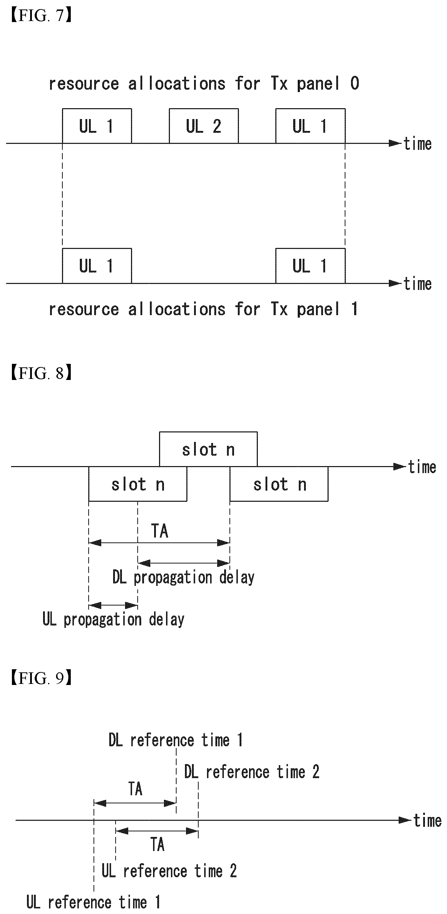

FIG. 7 is a conceptual diagram illustrating a first exemplary embodiment of an event occurring in STxMP transmission.

Referring to FIG. 7, repeated transmission for UL 1 using two Tx panels (e.g., Tx panel 0 and Tx panel 1) may be scheduled in the terminal, and transmission for UL 2 using the Tx panel 1 may be scheduled in the terminal.

When DM-RS bundling is indicated to the terminal, the terminal may generate a nominal TDW while performing repeated transmission for UL 1. Depending on events defined in the technical specifications, the nominal TDW may be divided into two or more actual TDWs.

In a proposed method, the terminal may maintain one actual TDW. When an event occurs in one Tx panel, the event may be applied to all Tx panels. In another proposed method, when an event occurs in one Tx panel, the event may be applied to some Tx panel(s).

**Method 6-3: The event may be commonly applied to all activated Tx panels.**

In the exemplary embodiment of FIG. 7, a nominal TDW may be generated for repeated transmission for UL 1, and scheduling of UL 2 may be interpreted as an event. In this case, the actual TDW in the Tx panel 1 may be divided into two parts. The base station may sequentially receive UL 1 transmission, UL 2 transmission, and UL 1 transmission, and the base station may independently perform channel estimation operations for UL 1 transmission, UL 2 transmission, and UL 1 transmission. When repeated transmission for UL 1 is performed, the terminal may not need to maintain coherence.

An actual TDW may be generated by power control as well as scheduling of UL 2. In this case, the event may be applied to all Tx panels.

According to Method 6-3, implementation performance can be improved. If the actual TDW can be derived for each Tx panel, the channel estimation performance of the base station can be further improved.

**Method 6-4: The event may be applied to some Tx panel(s).**

In the exemplary embodiment of FIG. 7, scheduling of UL 2 in the Tx panel 0 may be interpreted as an event, but no event may occur in the Tx panel 1. The terminal may not maintain coherence for UL 1 transmission in the Tx panel 0, but the terminal may maintain coherence for UL 1 transmission in the Tx panel 1. In other words, the terminal may manage the actual TDW for each Tx panel. According to Method 6-4, the nominal TDW may be managed regardless of the Tx panel, and the event by which the actual TDW is generated may be managed for each Tx panel.

In order for the terminal to manage two or more actual TDWs, separate UE capability may be supported. Depending on UE capability, the terminal may apply Method 6-3 or Method 6-4.

**Method 6-5: Depending on UE capability, a method of interpreting the event may be derived differently.**

7. **Uplink timing alignment method**

In the mTRP scenario, a relative distance between a terminal and each TRP may be similar. Alternatively, in the mTRP scenario, a relative distance between the terminal and each TRP may be significantly different. In the mTRP scenario, a case where the terminal is located in a central region of a communication coverage and/or a case where an absolute propagation delay is small because the communication coverage is not large may be considered. The terminal may assume one DL timing and one UL timing. The timing may be a timing at which inverse fast Fourier transform (IFFT) and/or FFT are performed. A boundary of an OFDM symbol may be derived based on the timing.

FIG. 8 is a conceptual diagram illustrating a first exemplary embodiment of a timing alignment method.

Referring to FIG. 8, a base station and a terminal may interpret a slot *n*. A slot boundary of the base station may be different from a slot boundary of the terminal. Considering a propagation delay, a DL timing and a UL timing may be derived. A difference between the DL timing and UL timing may be referred to as a timing advance (TA).

In an mTRP scenario serving a wide coverage, a relatively large propagation delay may be considered, L1/L2-based mobility functions may be supported, and inter-cell beam management may be supported. A relative propagation delay between TRPs may be large. In this case, the propagation delay may be longer than a CP of an OFDM symbol. In this case, the terminal may assume one or more DL timings and one or more UL timings. The above-described assumption may mean that the number of FFT/IFFT engines increases and/or that an execution time thereof becomes faster. Therefore, the above-described operation (e.g., the assumption) may be an operation according to UE capability.

**Method 7-1: The terminal may assume one or more DL timings and one or more UL timings according to UE capability.**

FIG. 9 is a conceptual diagram illustrating a second exemplary embodiment of a timing alignment method.

Referring to FIG. 9, the terminal may have two DL timings and the terminal may have one TA. A DL reference time may mean a DL timing. An UL reference time may mean a UL timing. The terminal derive DL timings from two or more TRPs. In other words, the terminal may determine DL timings for two or more Tx panels of the terminal. The TA may be derived based on a difference between a DL timing 1 (e.g., DL reference time 1) and a UL timing 1 (e.g., UL reference time 1) or a difference between a DL timing 2 (e.g., DL reference time 2) and a UL timing 2 (e.g., UL reference time 2). When two or more SRS resource sets are indicated to the terminal, the terminal may apply one TA to operate in the STxMP mode, TDM mode, or sTRP mode. The STxMP mode or TDM mode may be mTRP modes. In the mTRP mode, the terminal may communicate with multiple TRPs. In the sTRP mode, the terminal may communicate with one TRP.

Since a delay time between each TRP and the terminal may be different, it may be preferable for different TAs to be applied to the respective TRPs. Therefore, the terminal may manage two TAs. The base station may indicate two TA groups (TAGs) to the terminal. The terminal may identify the two TAGs indicated by the base station and perform closed-loop control using TA command(s) or TA value(s). Additionally or alternatively, the terminal may perform autonomous adjustment. The two TAGs may be associated with different TRPs, respectively.

The derived DL timing may be interpreted as a DL subframe boundary or DL slot boundary. Alternatively, the derived DL timing may be interpreted as a UL subframe boundary or UL slot boundary.

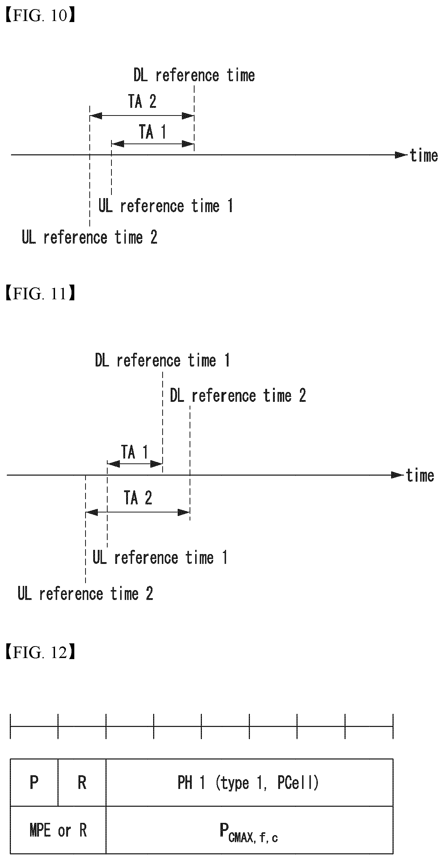

FIG. 10 is a conceptual diagram illustrating a third exemplary embodiment of a timing alignment method.

Referring to FIG. 10, the terminal may have one DL timing and the terminal may have two TAs. A DL reference time may mean a DL timing. A UL reference time may mean an UL timing. In the mTRP scenario, the terminal may operate in the mDCI mode. Delays for TxPs and delays for RxPs may be asymmetric. The terminal may operate in the sDCI mode, receive data from one TxP, and transmit data to two or more RxPs. The terminal may derive (e.g., determine) a DL timing from one TRP and may derive (e.g., determine) a UL timing 1 and a UL timing 2 based on the DL timing. In other words, the terminal may derive a TA 1 and a TA 2. The base station may indicate two TAGs to the terminal. The terminal may identify the two TAGs indicated by the base station and perform closed-loop control using TA command(s) (or TA value(s)). Additionally or alternatively, the terminal may perform autonomous adjustment.

FIG. 11 is a conceptual diagram illustrating a fourth exemplary embodiment of a timing alignment method.

Referring to FIG. 11, the terminal may have two DL timings and two UL timings. The terminal may have two TAs. A DL reference time may mean a DL timing. An UL reference time may mean an UL timing. The exemplary embodiment of FIG. 11 may be a generalized exemplary embodiment of the exemplary embodiment of FIG. 7. A TA 1 and a TA 2 may be derived based on a difference between each DL timing and each UL timing. The TA 1 and TA 2 may be signaled to the terminal. The base station may indicate two TAGs to the terminal. The terminal may identify the two TAGs indicated by the base station and perform closed-loop control using TA command(s). Additionally or alternatively, the terminal may perform autonomous adjustment.

In the mTRP scenario, the terminal may operate in the mDCI mode and separately manage a radio link between a TRP and a Tx panel of the terminal and/or a radio link between a TRP and an Rx panel of the terminal.

The terminal may receive a content free random access (CFRA) indication from a TRP (or base station) to determine a UL timing. The CFRA indication may refer to a PDCCH order. The terminal may receive the PDCCH order and transmit a physical random access channel (PRACH) preamble based on the PDCCH order. The PDCCH order may trigger the terminal to perform an RA procedure. The PDCCH order may use the DCI format 1_0. The DCI format 1_0 used for the PDCCH order may include an identifier of the DCI format, frequency domain resource assignment (FDRA), random access preamble index (RAPID), UL/supplementary UL (SUL) indicator, SS/PBCH index, PRACH mask index, and/or reserved bits. In addition, the PDCCH order may further include a TAG ID. When the PDCCH order is received from a TRP 0, a TAG indicated by the TAG ID included in the PDCCH order may be associated with a TA between the TRP 0 and the terminal. Alternatively, when the PDCCH order is received from the TRP 0, the TAG indicated by the TAG ID included in the PDCCH order may be associated with a TA between the terminal and a TRP 1, not the TRP 0. The PDCCH order may include two or more TAG IDs. In this case, the two or more TAG IDs may include a TAG ID for the TRP 0 and a TAG ID for the TRP 1. An initial TA may be derived based on the PRACH preamble. The initial TA may be managed as a UL timing 2 separately from the UL timing 1 under open-loop control.

The terminal may utilize the DL timing to derive a UL timing for transmission of the PRACH preamble. When one DL timing is applied to the terminal, the terminal may assume TA 2=0 and transmit the PRACH preamble. The terminal may derive a PRACH preamble index, PRACH mask, SSB index, additional physical cell identifier (PCI), and the like based on the PDCCH order. The additional PCI may be a separate PCI from a serving cell's PCI. For example, when the PDCCH order is received from the TRP 0, the additional PCI included in the PDCCH order may correspond to the TRP 1 rather than the TRP 0. In this case, the terminal may transmit the PRACH preamble to the TRP 1 indicated by the additional PCI included in the PDCCH order.

DCI indicating the PDCCH order may include a separate field, and the separate field may indicate to the terminal whether the PCI included in the PDCCH order is an additional PCI. The separate field may be configured as 1 bit, a first value of the separate field may indicate that the PCI included in the PDCCH order is the additional PCI, and a second value of the separate field may indicate that the PCI included in the PDCCH order is the PCI of the serving cell. It may be preferable for the terminal to receive an indication or configuration for the serving cell's PCI and additional PCI through RRC signaling.

The PCI may be derived based on the bit indicated by the DCI indicating the PDCCH order, and a random access occasion resource that the terminal can select may be derived based on a combination of the derived PCI and an SSB block index.

The PRACH preamble may be transmitted based on the DL timing determined based on an SSB received from the TRP 1. For another example, when the PDCCH order is received from the TRP 0, and the SSB index included in the PDCCH order corresponds to a specific SSB of the TRP 1 rather than the TRP 0, the terminal may transmit the PRACH preamble to the TRP 1 according to a DL timing measured based on the specific SSB of the TRP 1 indicated by the SSB index included in the PDCCH order.

The terminal may use a DL timing that reflects the TA 1 (e.g., DL timing managed by TA 1). Alternatively, the terminal may use a new DL timing. The terminal may acquire a TA 2 (e.g., actual TA 2) for the TRP 2 while tracking the TA 1 for the TRP 1.

**Method 7-2: The terminal may assume TA 2=0 based on a DL timing for a DL signal/channel received from the serving cell (or TRP 1).**

The base station may receive the PRACH preamble from the terminal, determine an initial TA 2 based on the PRACH preamble, and transmit the initial TA 2 to the terminal. The initial TA 2 may mean a difference between the DL timing 1 for the TRP 1 and the UL timing 2 for the TRP 2. Therefore, the initial TA 2 may be different from the actual TA 2. To correct the difference between the initial TA 2 and the actual TA 2, a TA loop managed by the base station (e.g., separate TAG for TRP 2) may be used. Alternatively, when the terminal is capable of performing FFT/IFFT operations twice or more times depending on the UE capability, the terminal may measure a difference between the DL timing 1 and the DL timing 2, and may derive the actual TA 2 based on the measured difference and the initial TA 2. Even when the terminal does not support separate UE capability (e.g., UE capability that support performing FFT/IFFT operations twice or more times), the terminal may utilize the DL timing 2. In this case, the terminal may derive the DL timing 2 by receiving an SSB without receiving data (e.g., SIB, control information in a CORESET, etc.) from the TRP 2.

When the sDCI mode is used in the mTRP scenario, Method 7-2 may be applied. When the sDCI mode is used, a CORESET pool index may not be indicated to the terminal, and in this case, operations of the terminal may be the same as operations using one CORESET pool index. In this case, the terminal may manage one DL reception timing. The DL reception timing may mean a DL timing.

When the mDCI mode is used in the mTRP scenario, Method 7-2 may be applied. The base station may indicate a CORESET pool index to the terminal, and the terminal may identify the CORESET pool index indicated by the base station. In this case, the terminal may manage (only) a DL reception timing associated with a first CORESET pool index. Therefore, the terminal may apply the DL reception timing derived from the first CORESET pool index without separate management of a DL reception timing associated with a second CORESET pool index.

When UE capability that supports performing FFT/IFFT operations twice or more times is supported, the DL timing 1 and the DL timing 2 may already be managed. In this case, the terminal may consider a transmission reference of the PRACH preamble as the DL timing 2. Even when the separate UE capability (e.g., UE capability that support performing FFT/IFFT operations twice or more times) is not supported, the terminal may utilize the DL timing 2. In this case, the terminal may derive the DL timing 2 by receiving an SSB without receiving data (e.g., SIB, control information in a CORESET, etc.) from the TRP 2.

**Method 7-3: The terminal may assume TA 2=0 using the DL timing (e.g., DL timing 2) at which the SSB (and/or additional PCI) corresponding to the SSB index derived from the PDCCH order is received.**

When the mDCI mode is used in the mTRP scenario, Method 7-3 may be applied. The base station may indicate one or more CORESET pool indexes to the terminal, and the terminal may identify the one or more CORESET pool indexes indicated by the base station. In this case, the terminal may manage two or more DL reception timings. The CORESET pool indexes may correspond to the respective TRPs. The TRP 1, which transmits the PDCCH order received by the terminal, may be different from the TRP 2, which receives the PRACH preamble transmitted by the terminal. Therefore, the TA 2 for transmission of the PRACH preamble may be a DL reception timing for the TRP 2. In other words, the TRP 1 may transmit the PDCCH order including an SSB index (or PCI for the TRP 2), which is information on a specific SSB of the TRP 2, to the terminal. The terminal may receive the PDCCH order from the TRP 1 and identify information elements included in the PDCCH order. When the SSB index included in the PDCCH order of the TRP 1 corresponds to a specific SSB of the TRP 2 or when the PCI included in the PDCCH order of the TRP 1 corresponds to the TRP 2, the terminal may transmit the PRACH preamble to the TRP 2 based on a DL timing measured based on the specific SSB of the TRP 2.

When two TAs are managed, the two TAs may be managed in different TAGs. A TA between the terminal and the TRP 1 may be managed in the TAG 1, and a TA between the terminal and the TRP 2 may be managed in the TAG 2. A TA applied to transmission of a UL signal/channel may be explicitly indicated to the terminal. Alternatively, the terminal may implicitly derive a TA applied to transmission of a UL signal/channel. In general, the terminal may derive (e.g., determine) the DL timing 1, DL timing 2, UL timing 1, and/or UL timing 2.

**Method 7-4: DCI scheduling a UL signal/channel may include a TAG ID or TAG information.**

A separate field indicating a TAG ID may be included in the DCI. Alternatively, a TAG ID may be derived based on an existing field included in the DCI or a combination of existing fields thereof. Alternatively, a TAG ID may be another identifier that identifies a TAG.

When the number of TAGs is limited to two, a TAG ID may be expressed by 1 bit. For example, 1 bit (e.g., TAG ID) may be used to indicate one of two TAGs. If the TAG ID has a value of 2 or 3, 1 bit may be used to represent one TAG in DCI. In order to support the above-described operation, a mapping relationship between TAG IDs and the TAGs may be indicated or configured to the terminal through RRC signaling.

The TAG ID may be included in a MAC CE including a TA command or TA value. When a PRACH is transmitted in the RA procedure, the base station may transmit a random access response (RAR) including a TA command (or TA value) and a TAG ID to the terminal. Alternatively, the base station may transmit a MAC CE including a TA command and a TAG ID or a MAC CE including a TA value and a TAG ID to the terminal.

The RAR or MAC CE may include information that can indicate a TAG. 1 bit may be additionally included in the RAR or MAC CE to indicate one of two TAGs.

When the mTRP mode is used, a contention free random access (CFRA) indication or PDCCH order may be transmitted from one TRP (e.g., TRP 0) to the terminal. In this case, the terminal may transmit a PRACH preamble to another TRP (e.g., TRP 1). In other words, the terminal may transmit the PRACH preamble to the TRP 1 based on the CFRA indication or PDCCH order received from the TRP 0. CFRA configuration information or PDCCH order may be received at the panel 0 of the terminal, and the PRACH preamble may be transmitted at the panel 1 of the terminal.

The terminal may receive information (e.g., RAR, MAC CE) including a TA command (TAC) (or TA value) and a TAG ID from the TRP 0 or TRP 1.

**Method 7-5: The terminal may receive information including a TAC (or TA value) and a TAG ID (or TAG identifier) from the TRP 0 (e.g., the TRP that triggered CFRA).**

**Method 7-6: The terminal may receive information including a TAC (or TA value) and a TAG ID (or TAG identifier) from the TRP 1 (e.g., TRP that received the PRACH preamble).**

When Method 7-5 is applied, the terminal may receive the information (e.g., TAC and TAG) on a UE-specific PDSCH. In other words, the terminal may obtain the information (e.g., TAC and TAG) from the PDSCH including the RAR. When Method 7-6 is applied, the terminal may obtain the information (e.g., TAC and TAG) from the PDSCH including the RAR. Considering beam correspondence, the terminal may derive a Tx beam corresponding to an Rx beam in which a DL signal/channel providing qcl-typeD is received. In this case, the terminal may derive information on the beam, but may not be able to identify information on a TA. Therefore, information on the TRP, information corresponding to the TRP, a panel, and/or information corresponding to the panel may be required for the terminal. In this case, it may be preferable for the base station to indicate to the terminal an identifier of the DL signal/channel and/or an identifier of the UL signal/channel together with the TAG ID.

The base station may indicate a TCI state (or TCI state index) to the terminal through signaling (e.g., RRC signaling). In this case, the TCI state may include one or more TCIs. One TCI may include an identifier of a DL signal/channel or an identifier of a UL signal/channel providing qcl-type1 and/or qcl-type2. According to a proposed method, the terminal may derive a TAG ID (e.g., TAG ID for the TRP 0 and/or TAG ID for the TRP 1) together with the DL signal/channel (e.g., identifier of the DL signal/channel) or the UL signal/channel (e.g., identifier of the UL signal/channel) from information indicating spatial relation information or TCI (e.g., UL TCI). In addition, the terminal may also derive a reception timing (e.g., DL reception timing).

**Method 7-7: When a DL TCI is indicated, reception timings for a DL signal/channel providing qcl-typeA or qcl-typeD and a DL signal/channel 1 to which the DL TCI is applied may be assumed to be the same.**

**Method 7-8: When a UL/Joint TCI (or SRI) is indicated, not only information for generating a Tx beam but also a TA or a group to which the TA belongs may be derived from a DL signal/channel (e.g., identifier of the DL signal/channel) or a UL signal/channel (e.g., identifier of the UL signal/channel).**

When a UL signal/channel is referenced by a UL/joint TCI, for a PUSCH to which the UL/joint TCI is applied, transmission timings (e.g., UL timings) of the PUSCH and the UL signal/channel may be assumed to be the same. When a DL signal/channel is referenced by a UL/joint TCI, for a PUSCH to which the UL/joint TCI is applied, a TRP transmitting the DL signal/channel and a TRP receiving the PUSCH may be expected to be the same. In this case, the terminal may derive a Tx beam and/or transmission timing of the PUSCH using the DL signal/channel.

Although the above-described exemplary embodiments have been described as being applied to PUSCH transmission, the above-described exemplary embodiments may also be applied to transmission of PUCCH and/or SRS.

An SRS resource set may be associated with a UL/joint TCI or SRI. In this case, the terminal may reuse a TA or TAG of the SRS resource set as it is. The above-described operation may be applied when a UL signal/channel is referenced by the UL/joint TCI.

**Method 7-9: Two or more SRS resource sets indicated by the same serving cell may be associated with different TAGs.**

When a DL signal/channel is referenced by a UL/joint TCI, other DL signals/channels referenced by the DL signal/channel may be derived. By repeating the above-described operation, an SSB may be derived. A TAG may be derived from a TRP transmitting the SSB. To support the above-described operation, a TRP identifier may be associated with the TAG. The base station may indicate the TRP identifier and/or TAG to the terminal through signaling (e.g., RRC signaling). The terminal may identify the TRP identifier and/or TAG indicated by the base station.

**Method 7-10: When a UL/joint TCI referenced by a DL signal/channel is used, a TAG may be derived from a TRP transmitting the DL signal/channel.**

A CORESET pool index may be used as the TRP identifier.

**8. Per-Tx panel UL gap indication method**

A communication system operating in an FR2 band may comply with a maximum permissible exposure (MPE) regulation to control the amount of RF exposure of a terminal. In this case, prediction of a power management maximum power reduction (P-MPR) may be difficult. To prevent a radio link failure and/or connection release due to a temporary UL power adjustment of the terminal, operations of the terminal may need to be improved.

The terminal may report a value of P-MPR to the base station using a power headroom report (PHR). For accurate operations of a proximity sensor, it may be required to generate and/or configure a certain gap in FR2 communication. For operations of the proximity sensor, an FR2 UL gap may be introduced.

While performing FR2 communication (e.g., transmission using a beam in an FR2 band), the terminal may use the proximity sensor to determine whether a human body is close to the terminal. When the terminal is not equipped with a proximity sensor, the terminal (e.g., transmitter of the terminal) may control a transmission power so that an average transmission power does not exceed a limit within a time window. According to the above-described operation, the regulation of RF exposure can be satisfied. According to the above-described operation, the maximum transmission power of the terminal may be reduced regardless of whether a human body exists around the terminal.

Since most Tx panels precisely configure beam directions, additional power adjustments may be possible according to the proximity sensor when a human body is affected by RF exposure. When a high-power terminal such as a fixed wireless access (FWA) terminal using a high transmission power uses the proximity sensor, the MPE regulation can be satisfied without continuous power change. Accordingly, not only a coverage of the terminal but also user experiences can be improved.

Calibration of the terminal in an FR2 band may be more difficult than calibration of the terminal in an FR1 band. RF may have non-linear characteristics due to a rapid hardware temperature change due to a high processing rate, phase noises due to use of a wide bandwidth and/or use of high frequencies, or the like.

To resolve an I/Q mismatch, a UL gap may be introduced. In this case, the I/Q mismatch can be resolved with low complexity. The UL gap may be utilized for estimation of a local oscillator (LO) leakage and/or a DC offset of an intermediate frequency (IF) mixer.

When an FR2 single cell, F2 inter-band CA, and/or F2 intra-band are supported, the terminal may support the UL gap. In this case, the terminal may support at least one of a gap pattern 1 or gap pattern 3 (e.g., UL measurement gap pattern (MGP) #1 or UL MGP #3). The terminal may support a different gap pattern (e.g., UL MGP#0 or UL MGP#2 in Table 8 below) depending on UE capability. Table 8 below shows the UL gap patterns.

[Table 8]

| | UL Gap Length (UGL) [ms] | UL gap repetition periodicity (UGRP) [ms] |
|---|---|---|
| UL MGP #0 | 1.0 | 20 |
| UL MGP #1 | 1.0 | 40 |
| UL MGP #2 | 0.5 | 160 |
| UL MGP #3 | 0.125 when SCS of active UL BWP =120kHz<br>0.25 when SCS of active UL BWP =60kHz | 5 |

The UL gap may include logically consecutive UL slot(s). The UL slot(s) (e.g., UL gap) may mean UL slot(s) by semi-static configuration. The UL slot(s) (e.g., UL gap) may not mean UL slot(s) including UL symbols by dynamic indication. A UGL (e.g., length of the UL gap) may be set in units of milliseconds. The number of UL slots included in the UL gap may vary depending on a subcarrier spacing (SCS). For the UL MGP#0, the UGL may be 1ms, and when an SCS 30kHz is applied, the UL gap may include two UL slots. The two UL slots included in the UL gap may not be (physically) consecutive.

Depending on UE capability (e.g., *tx-Support-UL-GapFR2*), the terminal may or may not perform UL transmission in UL slot(s) belonging to the UL gap. A terminal supporting the UE capability (e.g., *tx-Support-UL-GapFR2*) may transmit a UL signal/channel in UL slot(s) belonging to the UL gap. A terminal not supporting the UE capability (e.g., *tx-Support-UL-GapFR2*) may not be able to transmit a UL signal/channel in UL slot(s) belonging to the UL gap. Even when the UE capability (e.g., *tx-Support-UL-GapFR2*) is not supported, a UL signal/channel may be transmitted exceptionally in UL slot(s) belonging to the UL gap.

A UL signal/channel transmitted by the terminal in the UL gap may include HARQ-ACK, CSI, SRS, and/or PUSCH (e.g., some PUSCHs). The some PUSCHs may be a CG PUSCH, Msg3 PUSCH, and/or MsgA payload. A terminal that does not support the UE capability (e.g., *tx-Support-UL-GapFR2*) may be able to transmit a CG PUSCH, Msg3 PUSCH, and/or MsgA payload, but when dynamic scheduling is received, the terminal may not be able to transmit a CG PUSCH, Msg3 PUSCH, and/or MsgA payload in UL slot(s) belonging to the UL gap. Therefore, the base station may determine that the terminal does not transmit a UL signal/channel in the UL slot(s) (e.g., UL gap).

The base station may not schedule a UL signal/channel in the UL gap. In a proposed method, the UL gap may be indicated for each Tx panel.

**Method 8-1: The base station may indicate two or more UL gaps to the terminal. The respective UL gaps may have different slot offsets (or different subframe offsets). An UL gap pattern may correspond to one Tx panel.**

The base station may configure two or more UL gap patterns to the terminal. The terminal may identify the two or more UL gap patterns configured by the base station. An association information between UL gap patterns, Tx panels, UL/joint TCIs, and/or spatial relation information may be indicated to the terminal. Information on a UL gap pattern may include information on a UL signal/channel. Alternatively, configuration information of a UL signal/channel may include information on a UL gap pattern. Transmission of a UL signal/channel associated with a UL gap may be interpreted as being cancelled. Alternatively, transmission of a UL signal/channel associated with a UL gap may be interpreted as being allowed.

The base station may configure one UL gap pattern to the terminal. The terminal may identify the one UL gap pattern configured by the base station. The one UL gap pattern may have an additional slot offset (e.g., additional subframe offset). The terminal may generate two or more UL gap patterns by applying the additional slot offset (e.g., additional subframe offset) to the one UL gap pattern. Each UL gap pattern may be associated with a Tx panel, UL/joint TCI, and/or spatial relation information. Transmission of a UL signal/channel associated with the UL gap may be interpreted as being cancelled. Alternatively, transmission of a UL signal/channel associated with the UL gap may be interpreted as being allowed.

## 9. Power headroom reporting method considering DWS

A terminal may report power headroom information to a base station. The base station may perform UL scheduling using information on the terminal's power headroom. The PHR may be included in a MAC CE. In other words, the PHR may be included in a TB in form of a MAC CE. The terminal may transmit the MAC CE including the PHR on a PUSCH. The PHR may be expressed as a quantized value of a difference between the maximum power and a power required for PUSCH transmission.

$P_{CMAX,f,c}$ (i.e. maximum power) may be derived from a frequency f of a serving cell c. $P_{CMAX,f,c}$ may be a value to which a maximum power reduction (MPR) is applied. The MPR may be determined considering a power class of the terminal, allocation of PRBs in which a PUSCH is scheduled, a modulation order of the PUSCH, and/or a waveform. To determine $P_{CMAX,f,c}$, an additional (A)-MPR and/or power management (P)-MPR may be considered in addition to the MPR.

A power required for PUSCH transmission may be classified into a power of PUSCH transmission scheduled by a serving cell and a power of PUSCH transmission not scheduled by the serving cell. When a terminal supporting CA and/or DC performs simultaneous transmissions, a PHR for a PUSCH not scheduled by the serving cell may be derived to inform the base station of a power headroom of the terminal.

When the terminal performs transmission of a scheduled PUSCH, a transmission power (e.g., power headroom) of the terminal may be calculated based on an active UL BWP of the serving cell that schedules the PUSCH transmission. To calculate a power for PUSCH transmission not scheduled by the serving cell, the active UL BWP of the serving cell may be applied based on another reference. For example, $P_{CMAX,f,c}$ may be applied instead of $P_{CMAX,f,c}$. To calculate a power of the PUSCH transmission, the number of allocated PRBs and/or amount related to an MCS may not be considered. In other words, the number of allocated PRBs and/or the amount related to the MCS may be considered as 0.

The PHR may be triggered according to condition(s) defined in the technical specifications. The condition(s) under which the PHR is triggered may include a case when a timer expires, a case when the PHR is (re)configured by signaling (e.g., RRC signaling), a case when an SCell is activated, a case when a secondary cell group (SCG) is activated, and/or a case when a PSCell is added.

The timer may be a prohibit timer and/or a periodic timer. The prohibit timer may be used to temporally distribute the PHR so that it is not triggered frequently. the periodic timer may be used to periodically trigger the PHR. Other conditions may be interpreted as various events related to a change in a state of the serving cell.

Two PHR formats may exist. For example, the PHR formats may be classified into a multiple-entry PHR format and a single-entry PHR format. *twoPHRMode* may be set. In the mTRP scenario, when the terminal performs repeated PUSCH transmission, power control for each radio link may be performed separately because fading is different in the radio links. In this case, a PHR for each of the radio links may be required and *twoPHRMode* may be set to support the above-described operation.

When the multiple-entry PHR format is used (e.g., when *multiplePHR* set to 'true' is indicated to the terminal), PHRs for all serving cells configured in the terminal may be derived. When *twoPHRMode* is indicated to the terminal, the terminal may derive two PHRs for one serving cell. When *twoPHRMode* is not indicated to the terminal, the terminal may derive one PHR for one serving cell.

When the single-entry PHR format is used (e.g., when use of the multiple-entry PHR format is not indicated), a PHR associated with a PCell may be derived. When *twoPHRMode* is indicated to the terminal, the terminal may derive two PHRs for the PCell. When *twoPHRMode* is not indicated to the terminal, the terminal may derive one PHR for the PCell.

FIGS. 12 to 18 may illustrate PHR MAC CEs. The PHR MAC CE may be a MAC CE including the PHR.

FIG. 12 is a conceptual diagram illustrating a first exemplary embodiment of a single-entry PHR MAC CE.

Referring to FIG. 12, R may mean reserved bits. R may be fixed to 0. The size of power headroom (PH) may be 6 bits. A PH level may be quantized based on a predefined criterion.

P may be interpreted differently depending on whether *mpe-Reporting-FR2* is configured. When *mpe-Reporting-FR2* is set, a serving cell operates in an FR2 band, P-MPR is applied, and P-MPR is a value less than P-MPR_00, P may be expressed as 0. When the above-described condition(s) are not satisfied, P may be expressed as 1. P-MPR _00 may be a value derived separately based on the technical specifications. When P-MPR is applied to satisfy MPE requirements, P-MPR_00 may be utilized. When *mpe-Reporting-FR2* is not configuredor when the serving cell operates in an FR1 band, P may indicate whether a power backoff occurs to support power management. When the power backoff occurs, P may be expressed as 1. If any power backoff does not occur, P may be expressed as 0.

$P_{CMAX,f,c}$ may refer to a value used to derive the PH. The PH level may be quantized according to a predefined criterion.

The MPE may be interpreted differently depending on whether *mpe-Reporting-FR2* is configured. When *mpe-Reporting-FR2* is set, a serving cell operates in an FR2 band, and P is expressed as 1, the MPE may indicate a power backoff applied to satisfy the MPE requirements. The MPE may be expressed as an index according to predefined criteria. When *mpe-Reporting-FR2* is not configuredor the serving cell operates in an FR1 band, if P is expressed as 0, the MPE may be expressed as R.

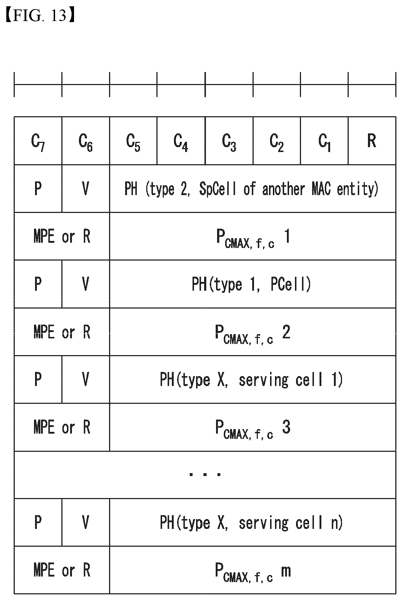

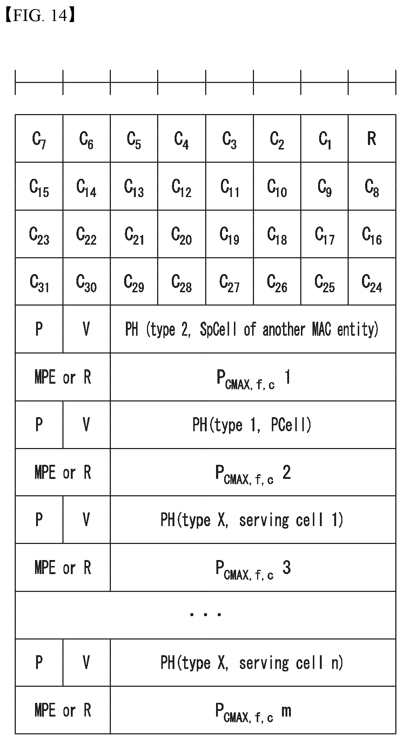

The multiple-entry PHR format may be shown in FIGS. 13 and 14.

FIG. 13 is a conceptual diagram illustrating a first exemplary embodiment of a multiple-entry PHR MAC CE, and FIG. 14 is a conceptual diagram illustrating a second exemplary embodiment of a multiple-entry PHR MAC CE.

Referring to FIGS. 13 and 14, a multiple-entry PHR format may have a variable size. The multiple-entry PHR format may include octets including a bitmap, a type 2 PH field, and a $P_{CMAX,f,c}$ field for an SpCell and octets including a type 1 PH field and a $P_{CMAX,f,c}$ field for a PCell. The multiple-entry PHR format may include octet(s) including one or more type 1 PH fields (or one or more type 3 PH fields) and $P_{CMAX,f,c}$ fields for the serving cells in an order of serving cell indexes *(ServCellIndex)*.

The size of the bitmap may be 8 bits or more. In the exemplary embodiment of FIG. 13, when 8 or less serving cells are configured (e.g., when the maximum value of *ServCellIndex* is 8 or less), the bitmap may be expressed in 1 octet. If more than 8 serving cells are configured in the exemplary embodiment of FIG. 14, the bitmap may be expressed in 4 octets.

To determine a PH (e.g., actual PH or reference PH) derived for an activated serving cell, a PUSCH processing time and/or a reception time indicated to the terminal by DCI or configured grant (CG) may be considered.

For a band combination that does not support dynamic power sharing, the octet(s) including the PH field and $P_{CMAX,f,c}$ field for the serving cell may be omitted from the multiple-entry PHR MAC CE. Exceptionally, information on a PCell belonging to another cell group (or another MAC entity) may not be omitted from the multiple-entry PHR MAC CE. The terminal may determine the PH and/or $P_{CMAX,f,c}$ by implementation.

If there is the PH field for the serving cell i indicated by *ServCellIndex,* $C_i$ may be set to 1. If there is not the PH field for the serving cell i indicated by *ServCellIndex,* $C_i$ may be set to 0.

V may represent the actual PH or reference PH. When information on a PUSCH is transmitted in the type 1 PH, V may be expressed as 0. When the reference PH is used, V may be expressed as 1. When information on a PUCCH is transmitted in the type 2 PH, V may be expressed as 0. When the reference PH is used, V may be expressed as 1. When information on an SRS is transmitted in the type 3 PH, V may be expressed as 0. When the reference PH is used, V may be expressed as 1. V set to 0 may mean that an octet including the $P_{CMAX,f,c}$ field and MPE field exists in the multiple-entry PHR MAC CE. V set to 1 may mean that an octet including the $P_{CMAX,f,c}$ fields and MPE fields is omitted in the multiple-entry PHR MAC CE.

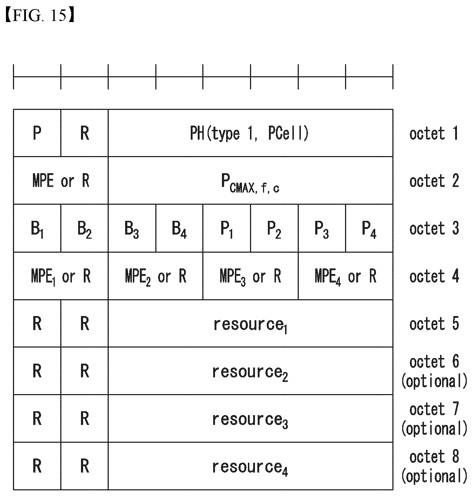

When the MPE occurs, MPE resources may be indicated separately. In this case, improved PHR may be applied. The improved PHR may be shown in FIGS. 15 to 17.

FIG. 15 is a conceptual diagram illustrating a first exemplary embodiment of an improved single-entry PHR MAC CE.

Referring to FIG. 15, when the improved single-entry PHR MAC CE is considered, $B_i$ and a resource$_i$ may be additionally considered. The base station may indicate *mpe-ResourcePoolToAddModList* to the terminal through signaling (e.g., RRC signaling), and an SSB or CSI-RS may be expressed by an index with a size of 6 bits. When an MPE occurs, the resource$_i$ may be used to use the SSB or CSI-RS as a candidate beam.

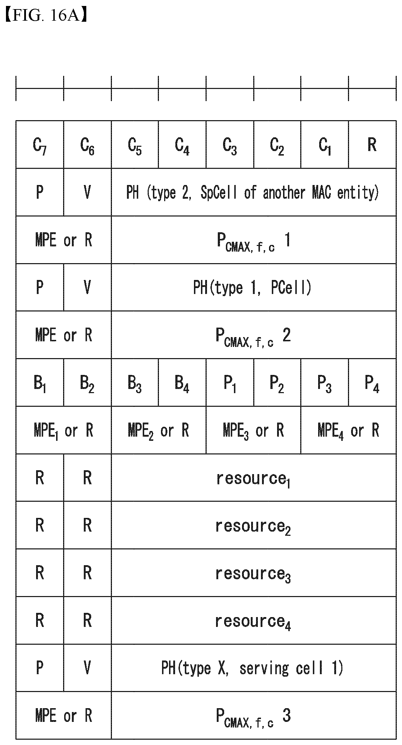

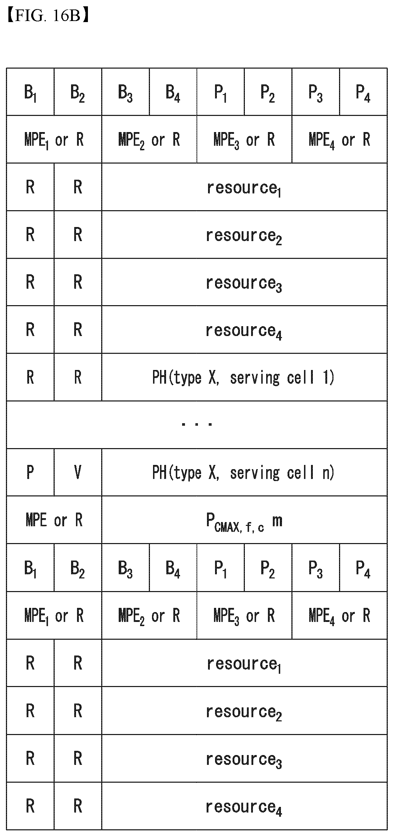

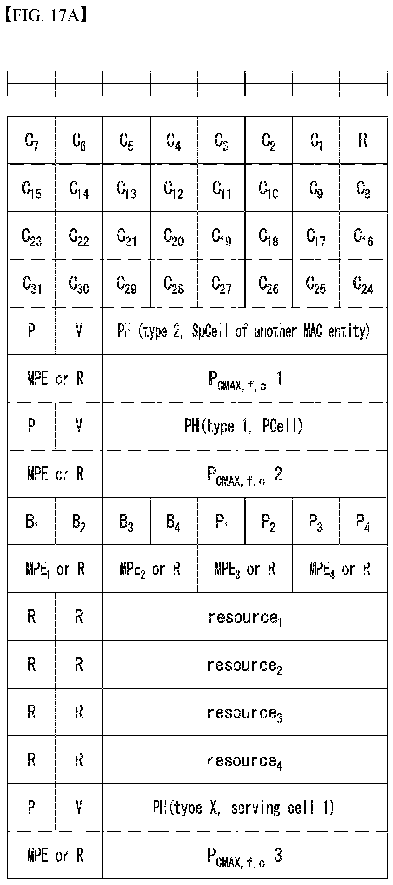

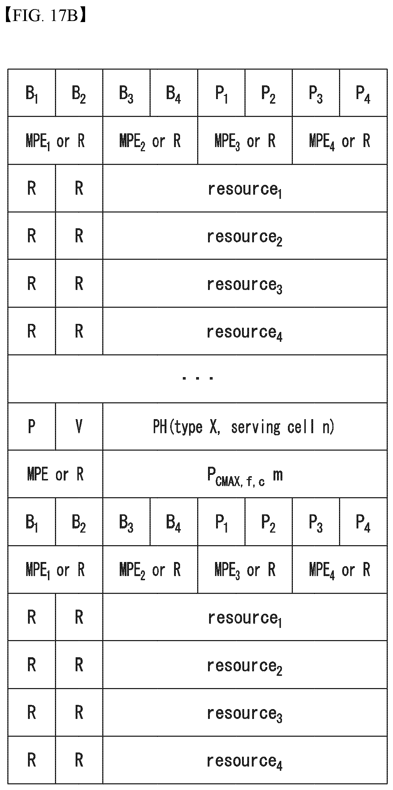

FIGS. 16A and 16B are conceptual diagrams illustrating a first exemplary embodiment of an improved multiple-entry PHR MAC CE, and FIGS. 17A and 17B are conceptual diagrams illustrating a second exemplary embodiment of an improved multiple-entry PHR MAC CE.

Referring to FIGS. 16A, 16B, 17A, and 17B, an improved multiple-entry PHR MAC CE may be considered. A first exemplary embodiment of the improved multiple-entry PHR MAC CE may include information elements (e.g., octets) shown in FIG. 16A and information elements (e.g., octets) shown in FIG. 16B. The last information element (e.g., last octet) shown in FIG. 16A may be contiguous with the first information element (e.g., first octet) shown in FIG. 16B. A second exemplary embodiment of the improved multiple-entry PHR MAC CE may include information elements (e.g., octets) shown in FIG. 17A and information elements (e.g., octets) shown in FIG. 17B. The last information element (e.g., last octet) shown in FIG. 17A may be contiguous with the first information element (e.g., first octet) shown in FIG. 17B.

The improved multiple-entry PHR MAC CE may be applied when the terminal performs CA operations. If the largest value of *ServCellIndex* configured in the terminal is 8 or less, the improved multiple-entry PHR MAC CE shown in FIGS. 16A and 16B may be applied. If the largest value of *ServCellIndex* configured in the terminal exceeds 8, the improved multiple-entry PHR MAC CE shown in FIGS. 17A and 17B may be applied.

When two UL carriers are configured for the terminal in one serving cell, a type 1 PHR and/or type 3 PHR may be determined by the serving cell. The type 1 PHR and type 3 PHR may have the same format (e.g., actual format or reference format). Alternatively, the type 1 PHR and type 3 PHR may have different formats. When the type 1 PHR and type 3 PHR have the same format, the type 1 PHR may be derived. When the type 1 PHR and type 3 PHR have different formats, a PHR with the actual format may be derived.

According to the exemplary embodiments of FIGS. 12 to 17, one PH for a PHR MAC CE may be generated in one serving cell.

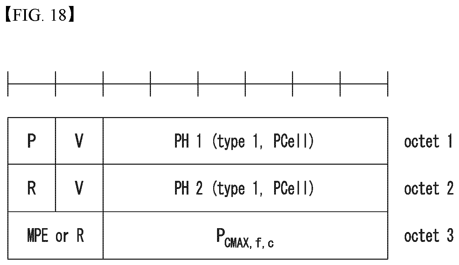

The terminal may repeatedly transmit a PUSCH to two TRPs. In this case, FIGS. 18 to 20 may be considered.

FIG. 18 is a conceptual diagram illustrating a first exemplary embodiment of an improved single-entry PHR MAC CE for multiple TRPs.

Referring to FIG. 18, an improved single-entry PHR MAC CE may be supported in two TRPs. A PHR including two PHs for one serving cell may be generated. The base station may configure SRS resource sets for two or more identifiers (IDs) to the terminal through signaling (e.g., RRC signaling). The two or more IDs may be distinguished from each other. The terminal may select the SRS resource sets for two IDs and derive PHs for the selected SRS resource set. In the exemplary embodiment of FIG. 18, PH 1 may be derived from an SRS resource set associated with a lower ID of the two IDs, and PH 2 may be derived from an SRS resource set associated with a higher ID of the two IDs. $P_{CMAX,f,c}$ may mean a value commonly applied to PH 1 and PH 2.

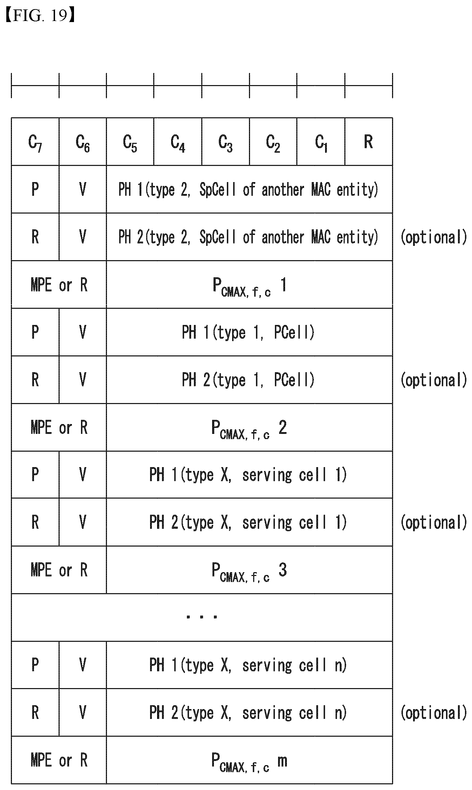

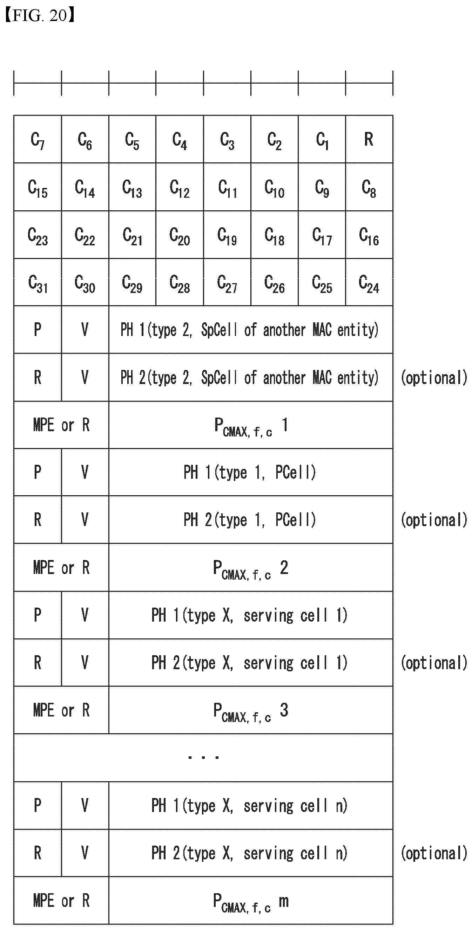

FIG. 19 is a conceptual diagram illustrating a first exemplary embodiment of an improved multiple-entry PHR MAC CE for multiple TRPs, and FIG. 20 is a conceptual diagram illustrating a second exemplary embodiment of an improved multiple-entry PHR MAC CE for multiple TRPs.

Referring to FIGS. 19 and 20, an improved multiple-entry PHR MAC CE may be supported in two TRPs. The improved multiple-entry PHR MAC CE may be applied when the terminal performs CA operations. The exemplary embodiment of FIG. 19 may be applied when the largest value of *ServCellIndex* configured in the terminal is 8 or less. The exemplary embodiment of FIG. 20 may be applied when the largest value of *ServCellIndex* configured in the terminal exceeds 8. When one SRS resource set is indicated to the terminal by a serving cell, some octet(s) may be omitted in the improved multiple-entry PHR MAC CE. For example, optional information elements (e.g., optional fields, optional octets) may be omitted in the improved multiple-entry PHR MAC CE.

If a waveform of a PUSCH changes, $P_{CMAX,f,c}$ may be changed, and the changed $P_{CMAX,f,c}$ may be applied. A reason for changing $P_{CMAX,f,c}$ may be that MPR, A-MPR, and/or P-MPR may vary depending on a waveform, modulation order, band combination, and/or PRB allocation of the PUSCH. Therefore, scheduling to change the waveform may be a condition for PHR to be triggered.

**Method 9-1: When scheduling information for initial transmission of a TB is received, scheduling that changes a waveform may be considered as a triggering condition for PHR.**

When the base station schedules a PUSCH to the terminal and a TB is retransmitted, the retransmitted TB may be the same as the previously transmitted TB. In this case, even when a PHR is triggered, the PHR may not be reflected in the transmission of the TB (e.g., retransmission of the TB). If decoding of the initially transmitted TB fails, the base station may transmit an indication to retransmit the TB and an indication to change the waveform to the terminal. When Method 9-1 is applied in this case, the initially transmitted TB may include the triggered PHR.

A method of reporting one PH in one serving cell may be considered. When scheduling information is received from the serving cell, the terminal may derive a PHR based on a waveform indicated by the scheduling information. The above-described operation may be generalized as follows. For example, one PH (or two PHs in the mTRP scenario) may be generated in the serving cell. Alternatively, the PHR may be generated for each serving cell. The terminal may transmit the PH or PHR on the PUSCH.

**Method 9-2: The terminal may report one PH. The terminal may assume the waveform indicated by the scheduling information and derive a PHR to which the actual format is applied.**

Different fields including the reported PHs and $P_{CMAX,f,c}$ may be included in one PHR. In this case, one or more PHRs may be multiplexed. Alternatively, different fields including PHs and $P_{CMAX,f,c}$ may be included in one PHR.

It may be preferable for the base station to trigger a PHR of a CP-OFDM-based PUSCH and a PHR of a DFT-s-OFDM-based PUSCH without changing a PUSCH waveform. The base station may receive two PHRs for one serving cell and determine whether to perform a waveform change operation based on the two PHRs.

**Method 9-3: The terminal may report two PHs. The respective PHs may be generated assuming different waveforms available in the same serving cell (or UL BWP).**

The PH may be derived for each waveform. For a reference waveform, a PH based on the actual format may be derived. For another waveform, a PH based on the reference format may be derived. The reference waveform may be a waveform associated with the UL BWP. Alternatively, the reference waveform may be indicated by RRC signaling.

When the PH is derived for each waveform, the actual format or reference format may be applied to all PHs.

If the PH is derived for each waveform, scheduling information may not be valid for a waveform. Scheduling that is not assumed in DFT-s-OFDM may allocate a PUSCH based on CP-OFDM. Since a multi-carrier waveform is used in case of CP-OFDM, frequency resources including non-consecutive PRBs may be allocated. Since a single carrier waveform is used in case of DFT-s-OFDM, frequency resources including consecutive PRBs may be allocated. Since single layer transmission is performed in case of DFT-s-OFDM, a combination in which DM-RS port mapping is not allowed may be a valid combination in CP-OFDM.

Waveforms may be classified into a waveform indicated by scheduling information (e.g., actual waveforms) and a replacement waveform (e.g., assumed waveform or alternative waveform).

When invalid scheduling information is indicated in the replacement waveform, the terminal may perform a generation operation of a PH (e.g., PHR) for the actual waveform. The generation operation may include an operation in which the terminal recalculates all values constituting the PHR. The terminal may not recalculate a PH (e.g., PHR) for the replacement waveform. The terminal may transmit the PH (e.g., PHR) for the replacement waveform on a PUSCH. The terminal may not perform new calculation for the PH (e.g., PHR) for the replacement waveform. The terminal may not transmit the PH (e.g., PHR) for the replacement waveform on a PUSCH.

**Method 9-4: Even when scheduling information for the replacement waveform is not valid, a PH (e.g., PHR) for the replacement waveform may be transmitted on a PUSCH.**

The terminal may not perform new calculation for the replacement waveform. Therefore, the base station may consider the PH (e.g., PHR) as a dummy. The terminal may transmit the PH (e.g., PHR) that is not updated. Alternatively, the terminal may consider the PH (e.g., PHR) that is not updated as reserved. The terminal may transmit an unnecessary payload, but because the base station considers the size of the PHR MAC CE to be constant, processing can be simplified.

**Method 9-5: When scheduling information for the replacement waveform is not valid, a PH (e.g., PHR) for the replacement waveform may be dropped from a PUSCH.**

The invalid PH (e.g., PHR) may not be included in the PUSCH. Since the scheduling information is transmitted through a DCI, the MAC layer may not know the scheduling information. Therefore, additional bit(s) may be introduced in the improved PHR MAC CE to distinguish between the legacy PH (e.g., PHR) and the improved PHR.

One bit for each serving cell may be added to the PHR. The bit may indicate presence or absence of the PH for the replacement waveform. Alternatively, the bit may indicate whether the PH for the replacement waveform is updated.

**Method 9-6: When a bit of the PHR has a first value, the bit with the first value may mean that a PH for the actual waveform (e.g., legacy PH) is included in the PHR. When a bit of the PHR has a second value, the bit with the second value may mean that a PH for the replacement waveform is additionally included in the PHR.**

**Method 9-7: When a bit of the PHR has a first value, the bit with the first value may mean that an updated PH for the replacement waveform is included in the PHR. When a bit of the PHR has a second value, the bit with the second value may mean that the PH (e.g., PHR) for the replacement waveform does not need to be updated.**

The terminal may derive PHs for a CP-OFDM-based PUSCH and a DFT-s-OFDM-based PUSCH, respectively. The PH for the CP-OFDM-based PUSCH may be referred to as 'PH (CP-OFDM)'. The PH for the DFT-s-OFDM-based PUSCH may be referred to as 'PH (DFT-s-OFDM)'. When one PHR contains PH (CP-OFDM) and PH (DFT-s-OFDM), the PH (CP-OFDM) and PH (DFT-s-OFDM) may be arranged in a predefined order within the one PHR. The predefined order may mean an order in which PH (CP-OFDM) and PH (DFT-s-OFDM) are included in octets. The predefined order may mean an order of octets belonging to the PHR.

The order of PH (CP-OFDM) and PH (DFT-s-OFDM) may be derived based on signaling (e.g., RRC signaling). The base station may use signaling (e.g., RRC signaling) to indicate a waveform associated with the UL BWP to the terminal. In this case, information on the waveform associated with the UL BWP (e.g., PH) may be arranged first or later within the PHR.

The PH for the waveform (e.g., actual waveform) applied to the scheduled PUSCH may be arranged first or later within the PHR.

**Method 9-8: In Method 9-3, the order (e.g., arrangement order) of PH (CP-OFDM) and PH (DFT-s-OFDM) may be determined based on the UL BWP. Alternatively, in Method 9-3, the order (e.g., arrangement order) of PH (CP-OFDM) and PH (DFT-s-OFDM) may be derived from a scheduling DCI.**

For a PHR including two PHs, $P_{CMAX,f,c}$ may be generated for each PH. Alternatively, for a PHR including two PHs, one $P_{CMAX,f,c}$ may be applied, and the one $P_{CMAX,f,c}$ may be included in the PHR. For example, when PH (CP-OFDM) and PH (DFT-s-OFDM) are derived using the actual format, $P_{CMAX,f,c}$ may be derived based on other values. In this case, a PHR including $P_{CMAX,f,c}$ for each PH may be considered.

**Method 9-9: In Method 9-3, $P_{CMAX,f,c}$ for each PH may be included in the PHR.**

In order to reduce the number of octets included in the PHR, the terminal may include $P_{CMAX,f,c}$ for a reference PH in the PHR, and may not include $P_{CMAX,f,c}$ for another PH in the PHR. A case in which the actual format is considered and a case in which the reference format is considered may be distinguished.

When the actual format is considered, different $P_{CMAX,f,c}$ may be utilized to derive PHs. For example, the reference PH may be PH (CP-OFDM). $P_{CMAX,f,c}$ for the reference PH may be included in the PHR. PH (DFT-s-OFDM) may be derived based on another $P_{CMAX,f,c}$ but PH (DFT-s-OFDM) may be omitted from the PHR. In this case, PH (CP-OFDM) may be included in the PHR. The base station may estimate a path loss using PH (CP-OFDM) and $P_{CMAX,f,c}$, and may derive $P_{CMAX,f,c}$ based on the path loss and PH (DFT-s-OFDM). The above-described operation may be used to derive $P_{CMAX,f,c}$ when the reference PH is PH (DFT-s-OFDM).

When the reference format is considered, the same value may be derived for all PHs. In this case, one PH may be included in the PHR. Alternatively, PHs with the same value may be included in the PHR. In other words, PHs with the same value may be redundant in the PHR.

**Method 9-10: In Method 9-3, $P_{CMAX,f,c}$ for one PH may be included in the PHR.**

A PH to which the actual format is applied may be derived in a serving cell where the PUSCH is transmitted. A PH to which the reference format is applied may be derived in a serving cell where the PUSCH is not transmitted. When the reference format is applied, PRB allocation may not be derived, MPR/A-MPR/P-MPR=0 may be assumed, and $P_{CMAX,f,c}$

may be derived. In order to derive a PH with a lot of information on an unscheduled PUSCH, a virtual transmission format agreed upon between the terminal and the base station may be required.

**Method 9-11: The terminal may derive the PH by applying a reference format based on a virtual transmission hypothesis.**

The transmission hypothesis may mean a resource allocation that includes at least a specific PRB allocation, a specific modulation order, and a specific waveform.

According to the technical specifications, in order to derive a PH based on the reference format, the amount of allocated resources may be minimized, and a transmission hypothesis without waveform characteristics may be applied. Therefore, it may be preferable for the base station to transmit an indication to apply a new transmission hypothesis to the terminal using signaling (e.g., RRC signaling). The terminal may apply the new transmission hypothesis based on the indication from the base station. The new transmission hypothesis may have resource allocation defined in the technical specifications. The new transmission hypothesis may refer to a specific resource allocation indicated by signaling (e.g., RRC signaling).

According to another method, the terminal may use a virtual transmission hypothesis and apply resource allocation of another serving cell where scheduling occurs. Since the terminal transmits a PUSCH in at least one serving cell, the terminal may transmit a PHR to the base station. Based on resource allocation of the PUSCH, the actual format for determining the PH and $P_{CMAX,f,c}$ of the serving cell may be applied. The reference format may be applied to other serving cells.

Depending on a waveform, generation of two or more PHs for a serving cell may be necessary. In this case, the terminal may derive PHs and $P_{CMAX,f,c}$ by applying the resource allocation of another serving cell where scheduling occurs. When scheduling occur in a plurality of other serving cells, the terminal may select one serving cell among the plurality of other serving cells and apply resource allocation of the selected serving cell to derive PHs and $P_{CMAX,f,c}$. For example, the terminal may select a serving cell with the largest or smallest identifier among the plurality of other serving cells based on *ServCellIndex.*

**Method 9-12: The terminal may derive a PH and $P_{CMAX,f,c}$ for a serving cell in which scheduling does not occur by applying resource allocation of another serving cell in which scheduling occurs.**

The base station may indicate the terminal to perform the PH derivation method based on the reference format. The terminal may perform 'the PH derivation method based on the reference format' indicated by the base station.

**Method 9-13: The base station may indicate one scheme for the reference format to the terminal through signaling (e.g., RRC signaling). The terminal may identify the one scheme for the reference format indicated by signaling from the base station.**

The base station may set *twoPHRMode* to the terminal. When *twoPHRMode* is set in the terminal, the terminal may derive two PHs and one $P_{CMAX,f,c}$ for the serving cell. To compensate for a path loss while repeated PUSCH transmission is performed, the terminal may transmit two PHs to the base station. According to Method 9-3, a PH according to a waveform may be used as the PHR. According to Method 9-10, even when the terminal derives two PHs using different $P_{CMAX,f,c}$, the terminal may transmit a PHR including one $P_{CMAX,f,c}$. Due to the above-described constraints, the terminal may transmit a PHR including $P_{CMAX,f,c}$ for the reference waveform based on a predefined rule between the terminal and the base station.

When scheduling does not occur in the serving cell, the terminal may derive a PH based on the reference format. In this case, it may be preferable that a PH that does not reflect waveform characteristics is not utilized. According to Method 9-13, the terminal may identify one scheme for the reference format indicated by signaling of the base station (e.g., RRC signaling). The terminal may generate the PH by applying the resource allocation and transmission hypothesis of another serving cell. Alternatively, the terminal may generate the PH by applying separately indicated resource allocation or predefined resource allocation.

## 10. Multi-cell scheduling method and cross-carrier scheduling method considering DWS

One DCI format may include scheduling information for two or more serving cells. For example, DCI format 1_3 may be used in downlink communication for two or more serving cells. DCI format 0_3 may be used in uplink communication for two or more serving cells.

For convenience of description, DCI fields may be classified into type-1 fields, type-2 fields, type-3 fields, etc. The type-1 fields may be classified into a type-1A field, type-1B field, and type-1C field. In other words, the type-1 fields may include at least one of the type-1A field, type-1B field, or type-1C field. The type-1A field may mean common information for all scheduled serving cells. The type-1B field may be a joint indicator. The type-1C field may mean information on one serving cell among scheduled serving cells.

The type-2 fields may be interpreted as individual fields (e.g., individual information) for the respective scheduling serving cells. Alternatively, the type-2 fields may be interpreted as individual fields for the respective subgroups of the scheduling serving cell(s). In this case, each type-2 field may be interpreted as common information on serving cells belonging to each subgroup. The type-3 fields may be interpreted as common information or individual information for each scheduled serving cell or serving cells of a subgroup.

A DL DCI format (e.g., DL-related DCI format) and a UL DCI format (e.g., UL-related DCI format) may include different fields, but in the DL DCI format and UL DCI format, fields may be classified into the type-1A field, type-1B field, type-1C field, type-2 field, and type-3 field.

The type-1A field may include at least one of an identifier for the DCI format, downlink assignment index, TPC for a scheduled PUCCH, PUCCH resource indicator, PDSCH-to-HARQ timing indicator, one-shot HARQ-ACK request, BWP indicator, VRB-to-PRB mapping, PRB bundling size indicator, frequency hopping flag, open-loop power control parameter set indication, DMRS sequence initialization, improved type-3 codebook indicator, HARQ-ACK retransmission indicator, PUCCH cell indicator, priority indicator, ChannelAccess-Cpext, ChannelAccess-Cpext-CAPC, or beta_offset indicator.

The type-1B field may include at least one of a rate matching indicator, zero power (ZP) CSI-RS trigger, TCI, SRS request, or SRS offset indicator.

The type-2 field may include at least one of a new data indicator (NDI) for each TB, redundancy version (RV) for each TB, MCS, HARQ process number (HPN), frequency domain resource assignment (FDRA), TPC command for a scheduled PUSCH, or PTRS-DMRS association.

The type-3 field may include at least a CSI request.

A field configurable as the type-1A field and/or type-2 field may include at least one of antenna port(s), precoding information and number of layers, SRS resource indicator (SRI), or UL/joint TCI.

The index(es) of serving cell(s) to which scheduling information is reflected may be indicated by one field or a combination of two or more fields in the DCI format. The base station may inform the terminal of index(es) corresponding to the serving cell(s) using signaling (e.g., higher layer signaling). The terminal may identify the index(es) corresponding to the serving cell(s) indicated by the base station. The higher layer signaling may include RRC signaling.

The index(es) of the serving cell(s) may be indicated by a two-step procedure. For example, the base station may use signaling (e.g., higher layer signaling) to indicate a set of serving cells to the terminal, and use signaling (e.g., higher layer signaling) to indicate which index corresponds to one serving cell or more than one serving cell in the set to the terminal. The scheduled cell set indicator may indicate a set of serving cells, and the scheduled cells indicator may indicate one or more serving cells belonging to the set of serving cells.

When all serving cells are active, the DCI format may be used for scheduling for the active BWP. Some serving cell(s) among the serving cells configured or indicated in the terminal may be deactivated. Deactivation of serving cell(s) may be indicated by a MAC CE, and a serving cell set and/or serving cell index(es) may be indicated by signaling (e.g., RRC signaling). When the index(es) of the serving cell(s) are always indicated only by a combined index, scheduling information for the deactivated serving cell may be indicated. Since scheduling information can be applied to an activated serving cell, methods to solve the above-described problem are needed.

**Method 10-1: The terminal may assume that all serving cells scheduled by one DCI format are active.**

The terminal may consider that a DCI format including scheduling information for all serving cells is received when all serving cells are in the activated state. If an arbitrary serving cell cannot be indicated using the serving cell set and serving cell index, the scheduling information may be scheduling information for serving cells including deactivated serving cell(s).

To prevent the above-described situation from occurring, the fields indicating the serving cell set and serving cell indexes may be configured sufficiently large. In this case, the size of DCI may increase. Increasing the size of DCI may cause other problems. A procedure to be performed by the terminal when the scheduling information is invalid may be proposed.

**Method 10-2: The terminal may reflect scheduling information in activated serving cell(s) among scheduled serving cells, and may not reflect scheduling information in deactivated serving cell(s).**

Fields including the DWS field may be included in scheduling information. Field(s) included in the scheduling information may not be supported in some serving cell(s) and/or in some BWP(s). Methods below may be applied to not only the DWS field but also other field(s) (e.g., other information).

The DCI format including the DWS field may be configured or indicate to the terminal on a BWP basis. When multi-cell scheduling information is considered, the DWS field may be interpreted if the DWS function is supported in the UL BWP of each of the scheduled serving cells.

DCI (e.g., DCI format) may include scheduling information for a plurality of serving cells. The scheduling information may include the DWS field. In this case, the terminal may interpret the DWS field on a BWP basis.

For convenience of description, a scheduling serving cell (e.g., a serving cell 0, a serving cell from which DCI is received) and a scheduled serving cell may be distinguished. If a DL BWP does not change in the serving cell 0, the DCI format may not change because a CORESET and search space set do not change. In a scheduled serving cell, a UL BWP may be changed according to scheduling information, and the above-described operation may mean enabling/disabling the DWS function.

The DWS field of each scheduled serving cell may be included in the DCI. In this case, the DWS function of each scheduled serving cell may be controlled by the serving cell 0. Among active UL BWPs of the serving cells, there may be active UL BWP(s) for which the DWS function is not configured or indicated. In this case, the terminal may ignore the above-described information (e.g., DWS field).

**Method 10-3: When the DWS function is not configured in an active UL BWP of a certain serving cell among scheduled serving cells, DWS information (e.g., values of the DWS field) on the active UL BWP of the certain serving cell indicated by scheduling information may be ignored.**

The DWS field (e.g., DWS information) for a BWP for which the DWS function is configured or indicated may not be included in the scheduling information. In this case, a method for deriving the DWS information may be needed.

**Method 10-4: When the DWS function for an active UL BWP of a certain serving cell among the scheduled serving cells is configured, but scheduling information does not include the DWS field for the active UL BWP of the certain serving cell, a value of the DWS field for the active UL BWP (e.g., waveform indicated by the DWS field) may be interpreted as a waveform associated with a specific value (e.g., 0 or 1), a value configured (or indicated) by signaling (e.g., higher layer signaling) considering the above-described situation, or the active UL BWP.**

The proposed methods may be applied to cross-carrier scheduling as well as multi-cell scheduling. For example, in cross-carrier scheduling, fields (e.g., DWS fields) for all BWPs of all scheduled serving cells may be included in scheduling information (e.g., DCI). Some field(s) of the above-described fields may indicate information that is not supported in the active BWP to the terminal. When Method 10-3 is applied, the terminal may ignore the information (e.g., information not supported in the active BWP) and interpret the scheduling information using only valid information.

For another example, considering a group of scheduled serving cells, one DWS field (e.g., DWS field for a group of serving cells) may be included in the scheduling information. The group of serving cells may be referred to as a serving cell group. One value in the DWS field may indicate one waveform in an active UL BWP of the serving cell(s) belonging to the serving cell group. The serving cell group may be the same as or different from the serving cell set indicated by scheduling information. If the serving cell group and the serving cell set are different, the base station may use signaling (e.g., higher layer signaling) to indicate the serving cell group to the terminal.

Since serving cells aggregated in the terminal are not always located in one TRP (or base station or antenna site), a serving cell group may be introduced. In order to reduce PAPR/intermodulation distortion (IMD) and increase a coverage of a PUSCH, the DWS function may be configured or indicated for each UL BWP. It may be preferable to consider serving cells belonging to the same TRP and/or UL BWPs associated with the same TRP so that large scale fading is shared.

**Method 10-5: A serving cell group (or carrier group, BWP group) in which DWS information (e.g., DWS field) is shared may be introduced, and the base station may use signaling (e.g., higher layer signaling) to configure or indicate the serving cell group to the terminal. The terminal may identify the serving cell group indicated by the base station.**

**Method 10-6: In Method 10-5, information of the same field (e.g., the same DWS field) included in the DCI format may be applied to the serving cell(s) belonging to the same TRP.**

## 11. PH reporting method considering STxMP

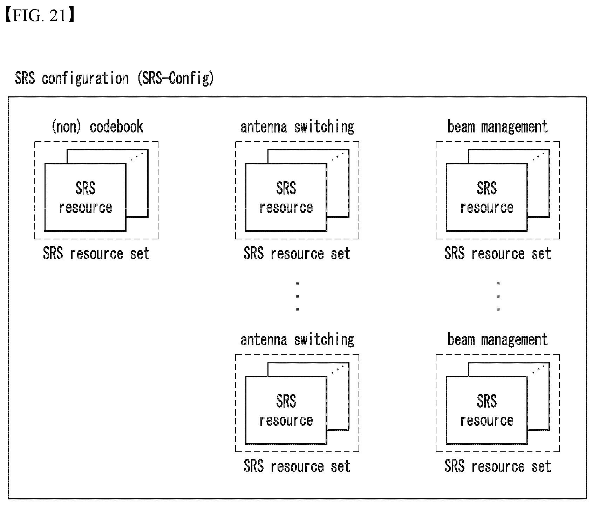

A terminal may transmit two or more SRSs. The SRS may be widely used to compensate for an overall fast fading in uplink. SRS configuration (e.g., SRS-Config) may be shown in FIGS. 21 to 23.

FIG. 21 is a conceptual diagram illustrating a first exemplary embodiment of SRS configuration based on the Rel-15 NR technical specifications.

Referring to FIG. 21, in a communication system supporting the Rel-15 NR technical specifications, RRC parameters (e.g., SRS-Config) may indicate a plurality of SRS resource sets. The SRS resource set may include a parameter 'usage'. The parameter 'usage' included in the SRS resource set may indicate a set of resources related to PUSCH transmission (e.g., SRS resource set) and/or a separate SRS resource set for UL beam management or antenna switching.

A resource set (e.g., SRS resource set) for one PUSCH transmission among codebook-based PUSCH transmission or non-codebook-based PUSCH transmission may be indicated by SRS configuration. The number of SRS resource sets may be 1. The number of SRS resource sets indicated for antenna switching or beam management may be one or more.

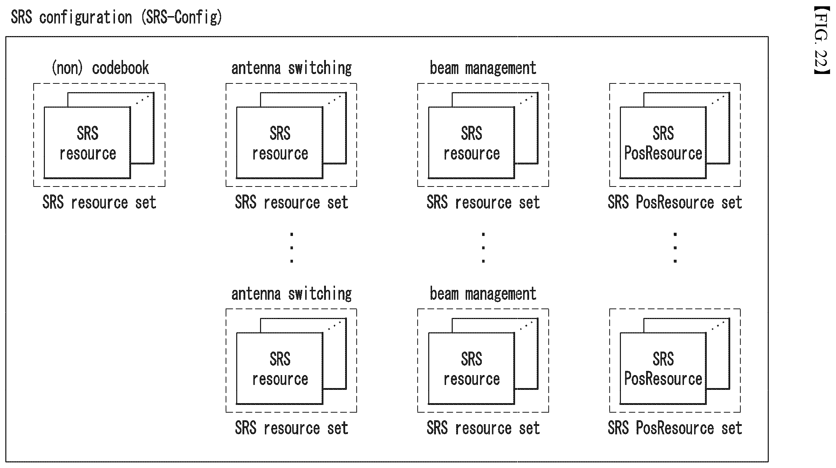

FIG. 22 is a conceptual diagram illustrating a first exemplary embodiment of SRS configuration based on the Rel-16 NR technical specifications.

Referring to FIG. 22, in a communication system supporting the Rel-16 NR technical specifications, a separate SRS resource set may be indicated for positioning purposes, and all functions according to the Rel-15 NR technical specifications may be supported. The number of SRS PosResource sets indicated to the terminal may be one or more.

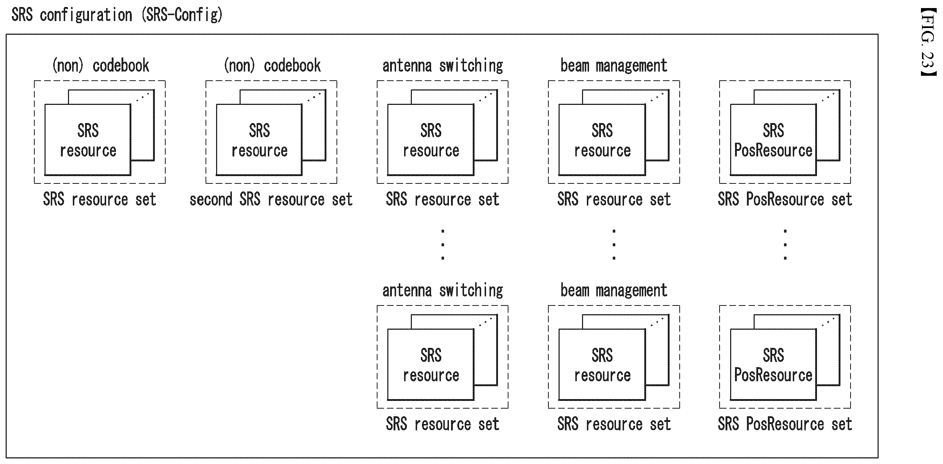

FIG. 23 is a conceptual diagram illustrating a first exemplary embodiment of SRS configuration based on the Rel-17 NR technical specifications.

Referring to FIG. 23, in a communication system supporting the Rel-17 NR technical specifications, the number of SRS resource sets used for PUSCH transmission may be 1 or 2. To support the sDCI-based mTRP scenario, PUSCH transmissions for two TRPs may respectively correspond to SRS resource sets on different links. For the above-described configuration, the method of using one SRS resource set in the communication system supporting the Rel-15/16 NR technical specifications may be extended, one SRS resource set may correspond to each TRP, and power control, TPMI, SRI, and/or TCI (e.g., Joint/UL TCI or TCI) for each TRP may be controlled separately.

The base station may indicate the second SRS resource set to the terminal. The terminal may identify the second SRS resource set indicated by the base station. The second SRS resource set may be utilized in the sDCI-based mTRP scenario and/or mDCI-based mTRP scenario.

In the communication system that supports the Rel-15/16/17 NR technical specifications, the base station may indicate one SRS resource set related to PUSCH transmission to the terminal. The terminal may identify the one SRS resource set indicated by the base station. In codebook-based PUSCH transmission, the SRS resource set may include one or two SRS resources. An SRS resource may have four or fewer antenna ports. In non-codebook based PUSCH transmission, the SRS resource set may include 1, 2, 3, or 4 SRS resources. An SRS resource may have one antenna port. The number of antenna ports of the SRS resource may be scheduled to be directly or indirectly associated with PUSCH DM-RS ports. Since the maximum number of PUSCH DM-RS ports is 4 and the number of TBs is 1, the number of antenna ports that SRS resource has may be limited.

In a communication system that supports the Rel-18 NR technical specifications, the maximum number of PUSCH DM-RS ports may be 8, and the maximum number of TBs may be 2. In codebook-based PUSCH transmission, an SRS resource set may include two or less SRS resources. An SRS resource may have 8 or fewer antenna ports. In non-codebook-based PUSCH transmission, an SRS resource set may include 1, 2, 3, 4, 5, 6, 7, or 8 SRS resources. An SRS resource may have one antenna port. The number of antenna ports of the SRS resource may be scheduled to be directly or indirectly associated with PUSCH DM-RS ports.

The SRS (e.g., SRS resource, SRS transmission) may be dropped. Dropping of an SRS may mean that the SRS is not transmitted. Dropping of an SRS resource may mean that an SRS is not transmitted in the SRS resource. Depending on priorities of UL signals/channels and an SRS resource, the SRS resource may be dropped. In this case, SRSs may be transmitted in SRS resources that are not dropped. When an SRS resource is dropped, all SRS symbols belonging to the SRS resource may be dropped. An SRS symbol may refer to a symbol in which SRS transmission is performed. In other words, SRS transmission may not be performed on all SRS symbols belonging to the dropped SRS resource. Alternatively, if some SRS symbol(s) belonging to the SRS resource overlap with a UL signal/channel, the SRS may be transmitted in the remaining SRS symbol(s).

When PUCCH transmission and SRS transmission are to be performed in the same carrier, and semi-persistent SRS transmission or periodic SRS transmission is to be performed in the same symbol as PUCCH transmission with a specific condition, the SRS transmission may not be performed. The PUCCH transmission may include a CSI report, L1-RSRP report, or L1-SINR report. When the PUCCH transmission includes HARQ-ACK, link recovery request, and/or scheduling request (SR), semi-persistent SRS transmission, periodic SRS transmission, or triggered SRS transmission may not be performed in the same symbol(s) as the PUCCH transmission.

When the SRS is not transmitted, only SRS symbol(s) that overlap PUCCH symbol(s) in which PUCCH transmission is performed (e.g., only SRS transmission in the SRS symbol(s)) may be dropped. When aperiodic SRS transmission is performed, the PUCCH may not be transmitted. In this case, the PUCCH may include a semi-persistent CSI report, static CSI report, semi-persistent L1-RSRP report, static L1-RSRP report, semi-persistent L1-SINR report, and/or static L1-SINR report.

The SRS may be transmitted simultaneously with other UL signals/channels.

Inter-band contiguous CA, inter-band non-contiguous CA band combination, or intra-band non-contiguous CA band combination may be considered. The terminal may not support simultaneous transmission of SRS and PUCCH/PUSCH. In this case, transmission of PUSCH/UL DM-RS/UL PT-RS/PUCCH and transmission of SRS may not be indicated to the terminal to occur in different carriers and/or the same symbol.

Intra-band contiguous CA or inter-band CA band combinations may be considered. The terminal may not support simultaneous transmission of SRS and PRACH. Alternatively, in an intra-band non-contiguous CA band combination, a case where a specific RRC parameter (e.g., intraBandNC-PRACH-simulTx-r17) is not indicated to the terminal may be considered. In this case, the terminal may not be indicated to transmit SRS and PRACH simultaneously in different carriers.

Intra-band contiguous CA or inter-band CA band combination may be considered. The terminal may not support simultaneous transmission of SRS and MsgA. In this case, the terminal may not be indicated to transmit SRS and MsgA simultaneously in different carriers.

The terminal transmit the SRS in one SRS resource. In a specific case, the terminal may transmit the SRS simultaneously in two or more SRS resources. The terminal may transmit the SRS in SRS resources (e.g., BM-SRS resources) belonging to an SRS resource set for beam management. The SRSs may be transmitted in overlapping symbol(s) between the SRS resources. The SRS resources may overlap in some symbol(s).

The SRSs may be transmitted simultaneously in the BM-SRS resources. In this case, when a transmission power of the SRS does not exceed the maximum transmission power supportable by the terminal, the transmission power of the SRS (e.g., transmission power for the BM-SRS resources) may be determined based on technical specifications. The terminal may derive a path loss using a path loss (PL) RS associated with the BM-SRS resource, perform open-loop power control by compensating for a part of the path loss, and perform closed-loop power control based on accumulation of TPC command(s) obtained from DCI(s). When the transmission power of the terminal is equal to or greater than the maximum transmission power supportable by the serving cell or BWP, the terminal may transmit the BM-SRS using the maximum transmission power.

When the SRS is transmitted simultaneously in the BM-SRS resource i (i = 1, 2), a sum of transmission powers (Pi, i = 1, 2) required for simultaneous transmission of the SRS may be greater than the maximum transmission power. When the SRS is simultaneously transmitted in the SRS resource set as well as the BM-SRS resources, a power (e.g., transmission power) of the SRS may be allocated based on method(s) below.

In a proposed method, the terminal may select one SRS resource (e.g., SRS resource 1), allocate a sufficient power P1 for the one SRS resource, and may allocate the remaining power P2 to the remaining SRS resource (e.g., SRS resource 2). The remaining power may be (maximum power of the terminal (e.g., maximum transmission power) - P1). Alternatively, the remaining power may be less than (maximum power of the terminal (e.g., maximum transmission power) - P1). The above-described method may be applied to SRS transmission (e.g., SRS resources) utilizing one Tx panel.

**Method 11-1: For simultaneous transmission of SRS, one SRS resource set may be selected, SRS resources belonging to the selected SRS resource set may be associated with a sufficient power, and other SRS resources may be associated with a reduced power.**

The selected SRS resource set may be indicated to the terminal through at least one of RRC signaling or scheduling DCI. For example, the selected SRS resource set may be indicated through a combination of RRC signaling and scheduling DCI. Alternatively, the SRS resource set may be selected based on technical specifications. For example, the first indicated SRS resource set may be selected. Alternatively, an SRS resource set with a smaller SRS resource set ID may be selected. The terminal may consider power allocation for SRS resource sets (e.g., selected SRS resource set).

In a proposed method, the terminal may transmit the SRS using two or more Tx panels. The SRS may be received at one TRP or at two or more TRPs. When the SRS is received at two or more TRPs, one SRS resource may be selected from each of the two or more SRS resource sets, and the SRS may be transmitted to each TRP in each selected SRS resource.

For convenience of description, the two SRS resource sets may be referred to as 'SRS resource set (or first SRS resource set)' and 'second SRS resource set', respectively.

**Method 11-2: To support the mTRP scenario, the second SRS resource set may be additionally indicated to the terminal through signaling of the base station.**

SRS resource sets for supporting the mTRP scenario may be different from an SRS resource set for supporting the single TRP scenario. In this case, the SRS resource set supporting a single TRP may be referred to differently from the first SRS resource set and the second SRS resource set supporting the mTRP scenario. The SRS resource set and the first SRS resource set may be separately indicated to the terminal.

**Method 11-3: To support the mTRP scenario, the SRS resource set and the first SRS resource set may be distinguished, and the SRS resource set and the first SRS resource set may be indicated to the terminal through signaling of the base station.**

The SRS resource sets for supporting the mTRP scenario may be referred to as an SRS resource set pair. The SRS resource set pair may include the first SRS resource set and the second SRS resource set. Alternatively, the SRS resource set pair may include the SRS resource set and the second SRS resource set.

**Method 11-4: To support the mTRP scenario, the SRS resource set pair may be indicated to the terminal through signaling of the base station.**

The SRS resource set or the second SRS resource set may include two or more SRS resources. In codebook-based PUSCH transmission, one SRS resource may be interpreted as corresponding to each Tx panel of the terminal. In non-codebook-based PUSCH transmission, one SRS resource may be interpreted as corresponding to each DM-RS port.

A common power control parameter set for SRS resources belonging to the same SRS resource set may be indicated to the terminal. A common resource type (e.g., semi-persistent resource, periodic resource, and/or aperiodic resource) for SRS resources belonging to the same SRS resource set may be indicated to the terminal. When the terminal performs STxMP PUSCH transmission, it may be preferable that a separate power control parameter for each Tx panel of the terminal is indicated to the terminal. Therefore, the SRS resource set may be indicated for each Tx panel of the terminal.

To support the above-described operation, two or more SRS resource sets may be indicated to the terminal even when a UL signal/channel is received at one TRP. The two or more SRS resource sets may be utilized for transmission of overlapping UL signals/channels or SRSs in all symbols.

For convenience of description, the SRS resource sets respectively corresponding to the Tx panels may be referred to as a (first) additional SRS resource set or a second additional SRS resource set. The methods or extensions of the methods for the first SRS resource set and the first additional SRS resource set may be applied to the second SRS resource set and the second additional SRS resource set.

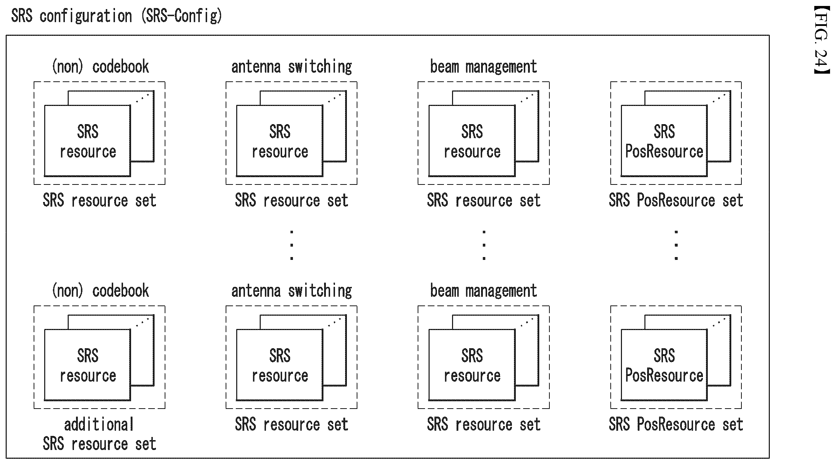

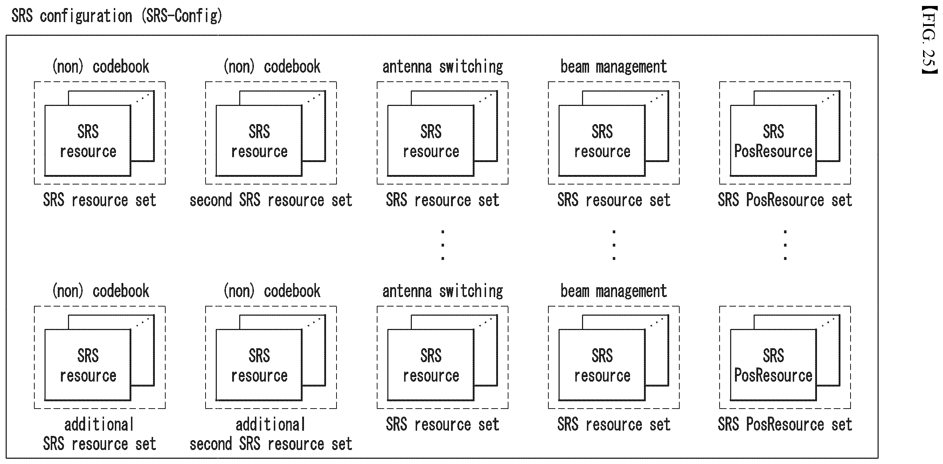

FIG. 24 is a conceptual diagram illustrating a first exemplary embodiment of SRS configuration considering multiple Tx panels, and FIG. 25 is a conceptual diagram illustrating a first exemplary embodiment of SRS configuration considering multiple TRPs and multiple Tx panels.

Referring to FIG. 24 and/or FIG. 25, two SRS resource sets may be associated with PUSCH transmission. The base station may indicate codebook-based PUSCH transmission or non-codebook-based PUSCH transmission to the terminal, and may indicate one or two SRS resource sets to the terminal.

Considering UL signals/channels transmitted to one TRP, the SRS resource set and the additional SRS resource set may be indicated to the terminal. Alternatively, the first SRS resource set and the first additional SRS resource set may be indicated to the terminal. The SRS resource set and the additional SRS resource set may include the same or different numbers of SRS resources.

Considering codebook-based PUSCH transmission, the SRS resource set and the additional SRS resource set may include the same number of SRS resources. For example, when Tx panels have the same structure, array configurations used by the Tx panels having the same structure may be the same. In other words, the base station may indicate the same array configuration for the Tx panels to the terminal through signaling. For example, each Tx panel may support up to 4 ports, and the array configuration may be a two-dimensional array expressed as (N1, N2) = (2, 1). Alternatively, each Tx panel may support up to 2 ports, and the array configuration may be a one-dimensional array expressed as (N1, N2) = (1, 1). N1 may be the maximum number of ports supported in a first dimension of the array. N2 may be the maximum number of ports supported in a second dimension of the array. In the present disclosure, the port may mean an antenna port.

Considering non-codebook-based PUSCH transmission, the SRS resource set and the additional SRS resource set may include the same number of SRS resources. For example, when Tx panels have the same structure, the Tx panels with the same structure may support the same number of antenna ports. Each of the Tx panels may support up to 2 or up to 4 antenna ports.

**Method 11-5: The SRS resource set and the additional SRS resource set may always include the same number of SRS resources.**

Even when the Tx panels have the same structure, the base station may dynamically indicate the terminal to perform an STxMP transmission or a transmission using a single Tx panel. The base station may indicate n layers or less to the terminal, and PUSCH transmission may be scheduled by a UL DCI and/or RRC signaling. $n$ may be 4 or 8.

In the above-described situation, the terminal may receive scheduling information (e.g., resource allocation information) for STxMP SDM PUSCH transmission from the base station. In this case, $n1$ layers may correspond to the SRS resource set, and $n2$ layers may correspond to the additional SRS resource set. $n1$ may be $maxLayer1$ or less, $n2$ may be $maxLayer2$ or less, and a sum of $n1$ and $n2$ may be $n$. A combination of ($n1, n2$) may belong to combinations allowed by technical specifications. The SRS resource set may include at least one SRS resource, and the number of antenna ports for the SRS resource set (e.g., SRS resource) may be $n1$ or more. The additional SRS resource set may include at least one SRS resource, and the number of antenna ports for the additional SRS resource set (e.g., SRS resource) may be $n2$ or more. If the structures of the Tx panels are the same, the maximum value of $n1$ and the maximum value of $n2$ may be the same.

The terminal may receive scheduling information (e.g., resource allocation information) for PUSCH transmission using a single Tx panel from the base station. In this case, $n$ layers may correspond to the SRS resource set, and no layers may correspond to the additional SRS resource set. $n$ may be less than or equal to $maxLayer$. $n1$ may be equal to $n$. The SRS resource set may include at least one SRS resource, and the number of antenna ports may be $n$ or more.

The SRS resource set may include at least two SRS resources. The additional SRS resource set may include at least one SRS resource. Therefore, the number of SRS resources included in the SRS resource set may be different from the number of SRS resources included in the additional SRS resource set. For example, the number of SRS resources included in the SRS resource set may be greater than the number of SRS resources included in the additional SRS resource set.

**Method 11-6: The number of SRS resources included in the SRS resource set may be different from the number of SRS resources included in the additional SRS resource set.**

The Tx panels may have different structures. When connection states of power amplifiers for the respective Tx panels are different, the Tx panels may have different structures. In this case, the number of antenna ports for the SRS resource belonging to the SRS resource set may be different from the number of antenna ports for the SRS resource belonging to the additional SRS resource set. When $n1$ and $n2$ are each the number of layers corresponding to Tx panels, $n1{\geq}n2$ may always be established depending on a combination of ($n1$, $n2$).

**Method 11-7: The number of antenna ports for the SRS resource belonging to the SRS resource set may be different from the number of antenna ports for the SRS resource belonging to the additional SRS resource set.**

In STxMP PUSCH transmission, two or more SRS resource sets may be utilized. Different power control parameter sets may be applied to a set of SRS resources respectively selected from two or more SRS resource sets. For convenience of description, a power corresponding to an SRS resource 1 belonging to the SRS resource set may be referred to as P1, and a power corresponding to an SRS resource 2 belonging to the additional SRS resource set may be referred to as P2. The terminal may transmit a PUSCH using a power of (P1+P2).

The terminal may derive P1 and P2 based on a method defined in the technical specifications. If P1+P2 is not greater than the maximum power (e.g., $P_{CMAX,f,c}$), the terminal may perform PUSCH transmission using the power of P1+P2. If P1+P2 is greater than the maximum power (e.g., $P_{CMAX,f,c}$), the power (e.g., transmission power) of the PUSCH may be reduced.

In a proposed method, powers reduced at a common reduction ratio may be allocated to the SRS resource sets. A power for each SRS resource may be reduced from Pi to Pi'. The same reduction ratio (e.g., P1'/P1 = P2'/P2 < 1) may be applied to each SRS resource. The transmission power of the terminal may be (P1'+P2'), and (P1'+P2') may not be greater than the maximum power.

**Method 11-8: The power allocated to each of the SRS resources may be reduced at the same ratio. The terminal may simultaneously perform SRS transmissions in the SRS resources by using the powers reduced at the same ration. A sum of transmission powers for the SRS transmissions may not be greater than the maximum power.**

The terminal may utilize the Tx panels as follows. For example, the terminal may not use the SRS resource set and may add spatial information of SRS resources belonging to the same SRS resource set. In this case, each Tx panel may be associated with each spatial information.

For example, among information on the SRS resources, joint/UL TCI or spatial relation information may be associated with two or more RSs. For example, CSI-RS, SSB, and/or SRS may be associated with joint/UL TCI or spatial relation information. First information may be associated with the first Tx panel, and second information may be associated with the second Tx panel.

**Method 11-9: Two or more spatial information allocated to one SRS resource may be indicated or configured. Each spatial information may be associated with each Tx panel.**

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1.  A method of a terminal, the method comprising:

    receiving a first synchronization signal block (SSB) from a first transmission and reception point (TRP);
    determining a first downlink (DL) timing based on the first SSB;

receiving a second SSB from a second TRP;

determining a second DL timing based on the second SSB;

receiving a physical downlink control channel (PDCCH) order from the first TRP; and

in response that a first information element included in the PDCCH order indicating the second SSB or the second TRP, transmitting a random access (RA) preamble to the second TRP based on the second DL timing.

2. The method according to claim 1, further comprising: transmitting, to at least one of the first TRP or the second TRP, information indicating that the terminal supports two DL timings.

3. The method according to claim 1, wherein the first DL timing is different from the second DL timing, and a difference between the first DL timing and the second DL timing is equal to or less than a cyclic prefix (CP) or exceeds the CP.

4. The method according to claim 1, wherein a first timing advance (TA) between the terminal and the first TRP is determined based on the first DL timing, and a second TA between the terminal and the second TRP is determined based on the second DL timing.

5. The method according to claim 1, wherein the first information element is information for selection of an SSB index indicating the second SSB or a physical cell identifier (PCI) indicating the second TRP.

6. The method according to claim 1, further comprising:

receiving, from the second TRP, a medium access control (MAC) control element (CE) in response to the RA preamble; and

deriving at least one of a first TA between the terminal and the first TRP, a second TA between the terminal and the second TRP, or a TA command (TAC), based on an information element included in the MAC CE, wherein the first TA and the second TA belong to different TA groups (TAGs).

7. The method according to claim 6, wherein when uplink transmission to which the first TA or the second TA is applied is performed, a TAG identifier for determining the first TA or the second TA is derived from spatial relation information or a transmission configuration indication (TCI) referred to by the uplink transmission.

8. The method according to claim 1, wherein the terminal has two or more panels, first communication between the terminal and the first TRP is performed in a first panel of the two or more panels, and second communication between the terminal and the second TRP is performed in a second panel of the one or more panels.

9. A method of a base station, the method comprising:

transmitting a first synchronization signal block (SSB) through a first transmission and reception point (TRP) associated with the base station;

transmitting a second SSB through a second TRP associated with the base station;

transmitting a physical downlink control channel (PDCCH) order to a terminal through the first TRP; and

receiving a random access (RA) preamble from the terminal through the second TRP indicated by the PDCCH order.

10. The method according to claim 9, further comprising: receiving, from the terminal and through at least one of the first TRP or the second TRP, information indicating that the terminal supports two DL timings.

11. The method according to claim 9, wherein a first DL timing is determined at the terminal based on the first SSB, a second DL timing is determined at the terminal based on the second SSB, the first DL timing is different from the second DL timing, and a difference between the first DL timing and the second DL timing is equal to or less than a cyclic prefix (CP) or exceeds the CP.

12. The method according to claim 11, wherein a first timing advance (TA) between the terminal and the first TRP is determined based on the first DL timing, and a second TA between the terminal and the second TRP is determined based on the second DL timing.

13. The method according to claim 9, wherein the PDCCH order includes a first information element, and the first information element is information for selection of an SSB index indicating the second SSB or a physical cell identifier (PCI) indicating the second TRP.

14. The method according to claim 9, further comprising: transmitting, through the second TRP, a medium access control (MAC) control element (CE) in response to the RA preamble, wherein an information element included in the MAC CE is used to derive at least one of a first TA between the terminal and the first TRP, a second TA between the terminal and the second TRP, or a TA command (TAC), and the first TA and the second TA belong to different TA groups (TAGs).

15. The method according to claim 14, wherein when uplink transmission to which the first TA or the second TA is applied is performed, a TAG identifier for determining the first TA or the second TA is derived from spatial relation information or a transmission configuration indication (TCI) referred by the uplink transmission.

16. A terminal comprising at least one processor, wherein the at least one processor causes the terminal to perform:

   receiving a first synchronization signal block (SSB) from a first transmission and reception point (TRP);
   determining a first downlink (DL) timing based on the first SSB;
   receiving a second SSB from a second TRP;
   determining a second DL timing based on the second SSB;
   receiving a physical downlink control channel (PDCCH) order from the first TRP; and
   in response that a first information element included in the PDCCH order indicating the second SSB or the second TRP, transmitting a random access (RA) preamble to the second TRP based on the second DL timing.

17. The terminal according to claim 16, wherein the at least one processor further causes the terminal to perform: transmitting, to at least one of the first TRP or the second TRP, information indicating that the terminal supports two DL timings.

18. The terminal according to claim 16, wherein the first DL timing is different from the second DL timing, and a difference between the first DL timing and the second DL timing is equal to or less than a cyclic prefix (CP) or exceeds the CP.

19. The terminal according to claim 16, wherein the first information element is information for selection of an SSB index indicating the second SSB or a physical cell identifier (PCI) indicating the second TRP.

20. The terminal according to claim 16, wherein the at least one processor further causes the terminal to perform: receiving, from the second TRP, a medium access control (MAC) control element (CE) in response to the RA preamble; and

   deriving at least one of a first TA between the terminal and the first TRP, a second TA between the terminal and the second TRP, or a TA command (TAC), based on an information element included in the MAC CE, wherein the first TA and the second TA belong to different TA groups (TAGs).

【FIG. 1】

【FIG. 2】

200

```
                    220                210
                     ┌─────────┐        ┌──────────┐        ┌──────────────┐
                     │ memory  │        │          │   ◄──► │    input     │
                     │ ┌────┐ ┌────┐│   │processor │        │  interface   │──240
                     │ │ROM │ │RAM ││   │          │        │   device     │
                     │ └────┘ └────┘│   └──────────┘        └──────────────┘
                     └─────────┘                            ┌──────────────┐
                                         270           ◄──► │   output     │
                                                            │  interface   │──250
                                                            │   device     │
                                                            └──────────────┘

         ┌──────────┐                ┌─────────────┐
         │ storage  │──260           │ transceiver │──230
         │ device   │                └─────────────┘
         └──────────┘
```

【FIG. 3】

┌─────────────────────────────┐
│        Tx panel 0,          │  d(i)
│      DM-RS ports 0/2,       │ ◄────────┐
│ SRI(s) in SRS resource set 0│          │──── codeword q
└─────────────────────────────┘          │
                                         │
┌─────────────────────────────┐          │
│        Tx panel 1,          │  d(i)    │
│      DM-RS ports 1/3,       │ ◄────────┘
│ SRI(s) in SRS resource set 1│
└─────────────────────────────┘

【FIG. 4】

```
┌──────────────────────────────┐
│         Tx panel 0,          │
│      DM-RS ports 0/1/2/3,    │◄─── d(i) ──┐
│  SRI(s) in SRS resource set 0│            ├─── codeword q
└──────────────────────────────┘            │
                                             │
┌──────────────────────────────┐            │
│         Tx panel 1,          │            │
│      DM-RS ports 0/1/2/3,    │◄─── d(i) ──┘
│  SRI(s) in SRS resource set 1│
└──────────────────────────────┘
```

【FIG. 5】

```
┌──────────────────────────────┐
│         Tx panel 0,          │
│        DM-RS ports 0/2,      │◄─── d(2i) ──┐
│  SRI(s) in SRS resource set 0│             ├─── codeword q
└──────────────────────────────┘             │
                                              │
┌──────────────────────────────┐             │
│         Tx panel 1,          │             │
│        DM-RS ports 1/3,      │◄── d(2i+1) ─┘
│  SRI(s) in SRS resource set 1│
└──────────────────────────────┘
```

【FIG. 6】

```
┌──────────────────────────────┐
│         Tx panel 0,          │
│        DM-RS ports 0/2,      │◄─── d(i) ──── codeword q
│  SRI(s) in SRS resource set 0│
└──────────────────────────────┘

┌──────────────────────────────┐
│         Tx panel 1,          │
│        DM-RS ports 1/3,      │◄─── d(i) ──── codeword q'
│  SRI(s) in SRS resource set 1│
└──────────────────────────────┘
```

【FIG. 7】

resource allocations for Tx panel 0

| UL 1 | | UL 2 | | UL 1 |

→time

| UL 1 | | | UL 1 |

→time

resource allocations for Tx panel 1

【FIG. 8】

| | slot n | |
| slot n | | slot n |

→time

TA

DL propagation delay

UL propagation delay

【FIG. 9】

DL reference time 1

DL reference time 2

TA

→time

TA

UL reference time 2

UL reference time 1

【FIG. 10】

DL reference time

TA 2

TA 1

time

UL reference time 1

UL reference time 2

【FIG. 11】

DL reference time 1

DL reference time 2

TA 1

time

TA 2

UL reference time 1

UL reference time 2

【FIG. 12】

| P | R | PH 1 (type 1, PCell) |
|---|---|---|
| MPE or R | | $P_{CMAX,f,c}$ |

【FIG. 13】

| $C_7$ | $C_6$ | $C_5$ | $C_4$ | $C_3$ | $C_2$ | $C_1$ | R |
|---|---|---|---|---|---|---|---|
| P | V | PH (type 2, SpCell of another MAC entity) | | | | | |
| MPE or R | | $P_{CMAX,f,c}$ 1 | | | | | |
| P | V | PH(type 1, PCell) | | | | | |
| MPE or R | | $P_{CMAX,f,c}$ 2 | | | | | |
| P | V | PH(type X, serving cell 1) | | | | | |
| MPE or R | | $P_{CMAX,f,c}$ 3 | | | | | |
| . . . | | | | | | | |
| P | V | PH(type X, serving cell n) | | | | | |
| MPE or R | | $P_{CMAX,f,c}$ m | | | | | |

【FIG. 14】

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH (type 2, SpCell of another MAC entity) | | | | | |
| MPE or R | | $P_{CMAX,f,c}$ 1 | | | | | |
| P | V | PH(type 1, PCell) | | | | | |
| MPE or R | | $P_{CMAX,f,c}$ 2 | | | | | |
| P | V | PH(type X, serving cell 1) | | | | | |
| MPE or R | | $P_{CMAX,f,c}$ 3 | | | | | |
| . . . | | | | | | | |
| P | V | PH(type X, serving cell n) | | | | | |
| MPE or R | | $P_{CMAX,f,c}$ m | | | | | |

【FIG. 15】

| P | R | PH(type 1, PCell) | | | | | | octet 1 |
|---|---|---|---|---|---|---|---|---|
| MPE or R | | $P_{CMAX,f,c}$ | | | | | | octet 2 |
| $B_1$ | $B_2$ | $B_3$ | $B_4$ | $P_1$ | $P_2$ | $P_3$ | $P_4$ | octet 3 |
| $MPE_1$ or R | | $MPE_2$ or R | | $MPE_3$ or R | | $MPE_4$ or R | | octet 4 |
| R | R | resource$_1$ | | | | | | octet 5 |
| R | R | resource$_2$ | | | | | | octet 6 (optional) |
| R | R | resource$_3$ | | | | | | octet 7 (optional) |
| R | R | resource$_4$ | | | | | | octet 8 (optional) |

【FIG. 16A】

| $C_7$ | $C_6$ | $C_5$ | $C_4$ | $C_3$ | $C_2$ | $C_1$ | R |
|---|---|---|---|---|---|---|---|
| P | V | PH (type 2, SpCell of another MAC entity) | | | | | |
| MPE or R | | $P_{CMAX,f,c}$ 1 | | | | | |
| P | V | PH(type 1, PCell) | | | | | |
| MPE or R | | $P_{CMAX,f,c}$ 2 | | | | | |
| $B_1$ | $B_2$ | $B_3$ | $B_4$ | $P_1$ | $P_2$ | $P_3$ | $P_4$ |
| $MPE_1$ or R | | $MPE_2$ or R | | $MPE_3$ or R | | $MPE_4$ or R | |
| R | R | resource$_1$ | | | | | |
| R | R | resource$_2$ | | | | | |
| R | R | resource$_3$ | | | | | |
| R | R | resource$_4$ | | | | | |
| P | V | PH(type X, serving cell 1) | | | | | |
| MPE or R | | $P_{CMAX,f,c}$ 3 | | | | | |

**【FIG. 16B】**

| B$_1$ | B$_2$ | B$_3$ | B$_4$ | P$_1$ | P$_2$ | P$_3$ | P$_4$ |
|---|---|---|---|---|---|---|---|
| MPE$_1$ or R | | MPE$_2$ or R | | MPE$_3$ or R | | MPE$_4$ or R | |
| R | R | resource$_1$ | | | | | |
| R | R | resource$_2$ | | | | | |
| R | R | resource$_3$ | | | | | |
| R | R | resource$_4$ | | | | | |
| R | R | PH(type X, serving cell 1) | | | | | |
| . . . | | | | | | | |
| P | V | PH(type X, serving cell n) | | | | | |
| MPE or R | | P$_{\text{CMAX},f,c}$ m | | | | | |
| B$_1$ | B$_2$ | B$_3$ | B$_4$ | P$_1$ | P$_2$ | P$_3$ | P$_4$ |
| MPE$_1$ or R | | MPE$_2$ or R | | MPE$_3$ or R | | MPE$_4$ or R | |
| R | R | resource$_1$ | | | | | |
| R | R | resource$_2$ | | | | | |
| R | R | resource$_3$ | | | | | |
| R | R | resource$_4$ | | | | | |

【FIG. 17A】

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH (type 2, SpCell of another MAC entity) | | | | | |
| MPE or R | | $P_{CMAX,f,c}$ 1 | | | | | |
| P | V | PH(type 1, PCell) | | | | | |
| MPE or R | | $P_{CMAX,f,c}$ 2 | | | | | |
| $B_1$ | $B_2$ | $B_3$ | $B_4$ | $P_1$ | $P_2$ | $P_3$ | $P_4$ |
| $MPE_1$ or R | | $MPE_2$ or R | | $MPE_3$ or R | | $MPE_4$ or R | |
| R | R | resource$_1$ | | | | | |
| R | R | resource$_2$ | | | | | |
| R | R | resource$_3$ | | | | | |
| R | R | resource$_4$ | | | | | |
| P | V | PH(type X, serving cell 1) | | | | | |
| MPE or R | | $P_{CMAX,f,c}$ 3 | | | | | |

【FIG. 17B】

| $B_1$ | $B_2$ | $B_3$ | $B_4$ | $P_1$ | $P_2$ | $P_3$ | $P_4$ |
|---|---|---|---|---|---|---|---|
| MPE$_1$ or R | | MPE$_2$ or R | | MPE$_3$ or R | | MPE$_4$ or R | |
| R | R | resource$_1$ | | | | | |
| R | R | resource$_2$ | | | | | |
| R | R | resource$_3$ | | | | | |
| R | R | resource$_4$ | | | | | |
| . . . | | | | | | | |
| P | V | PH(type X, serving cell n) | | | | | |
| MPE or R | | $P_{\text{CMAX},f,c}$ m | | | | | |
| $B_1$ | $B_2$ | $B_3$ | $B_4$ | $P_1$ | $P_2$ | $P_3$ | $P_4$ |
| MPE$_1$ or R | | MPE$_2$ or R | | MPE$_3$ or R | | MPE$_4$ or R | |
| R | R | resource$_1$ | | | | | |
| R | R | resource$_2$ | | | | | |
| R | R | resource$_3$ | | | | | |
| R | R | resource$_4$ | | | | | |

【FIG. 18】

| P | V | PH 1 (type 1, PCell) | octet 1 |
|---|---|---|---|
| R | V | PH 2 (type 1, PCell) | octet 2 |
| MPE or R | | $P_{CMAX, f, c}$ | octet 3 |

【FIG. 19】

| C$_7$ | C$_6$ | C$_5$ | C$_4$ | C$_3$ | C$_2$ | C$_1$ | R | |
|---|---|---|---|---|---|---|---|---|
| P | V | PH 1(type 2, SpCell of another MAC entity) | | | | | | |
| R | V | PH 2(type 2, SpCell of another MAC entity) | | | | | | (optional) |
| MPE or R | | $P_{CMAX,f,c}$ 1 | | | | | | |
| P | V | PH 1(type 1, PCell) | | | | | | |
| R | V | PH 2(type 1, PCell) | | | | | | (optional) |
| MPE or R | | $P_{CMAX,f,c}$ 2 | | | | | | |
| P | V | PH 1(type X, serving cell 1) | | | | | | |
| R | V | PH 2(type X, serving cell 1) | | | | | | (optional) |
| MPE or R | | $P_{CMAX,f,c}$ 3 | | | | | | |
| . . . | | | | | | | | |
| P | V | PH 1(type X, serving cell n) | | | | | | |
| R | V | PH 2(type X, serving cell n) | | | | | | (optional) |
| MPE or R | | $P_{CMAX,f,c}$ m | | | | | | |

【FIG. 20】

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH 1(type 2, SpCell of another MAC entity) | | | | | |
| R | V | PH 2(type 2, SpCell of another MAC entity) | | | | | (optional) |
| MPE or R | | $P_{CMAX,f,c}$ 1 | | | | | |
| P | V | PH 1(type 1, PCell) | | | | | |
| R | V | PH 2(type 1, PCell) | | | | | (optional) |
| MPE or R | | $P_{CMAX,f,c}$ 2 | | | | | |
| P | V | PH 1(type X, serving cell 1) | | | | | |
| R | V | PH 2(type X, serving cell 1) | | | | | (optional) |
| MPE or R | | $P_{CMAX,f,c}$ 3 | | | | | |
| . . . | | | | | | | |
| P | V | PH 1(type X, serving cell n) | | | | | |
| R | V | PH 2(type X, serving cell n) | | | | | (optional) |
| MPE or R | | $P_{CMAX,f,c}$ m | | | | | |

【FIG. 21】

SRS configuration (SRS-Config)

【FIG. 22】

【FIG. 23】

【FIG. 24】

EP 4 615 112 A1

SRS configuration (SRS-Config)

(non) codebook

SRS
resource

SRS resource set

antenna switching

SRS
resource

SRS resource set

beam management

SRS
resource

SRS resource set

SRS
PosResource

SRS PosResource set

(non) codebook

SRS
resource

additional
SRS resource set

antenna switching

SRS
resource

SRS resource set

beam management

SRS
resource

SRS resource set

SRS
PosResource

SRS PosResource set

【FIG. 25】

SRS configuration (SRS-Config)

(non) codebook — SRS resource — SRS resource set

(non) codebook — SRS resource — second SRS resource set

antenna switching — SRS resource — SRS resource set

beam management — SRS resource — SRS resource set

SRS PosResource — SRS PosResource set

(non) codebook — SRS resource — additional SRS resource set

(non) codebook — SRS resource — additional second SRS resource set

antenna switching — SRS resource — SRS resource set

beam management — SRS resource — SRS resource set

SRS PosResource — SRS PosResource set

## INTERNATIONAL SEARCH REPORT

| International application No. |
|---|
| **PCT/KR2023/017541** |

### A. CLASSIFICATION OF SUBJECT MATTER

**H04W 72/12**(2009.01)i; **H04B 7/0413**(2017.01)i; **H04W 72/232**(2023.01)i; **H04W 72/21**(2023.01)i; **H04L 5/00**(2006.01)i; **H04L 27/26**(2006.01)i; **H04B 7/0404**(2017.01)i; **H04W 72/04**(2009.01)i

According to International Patent Classification (IPC) or to both national classification and IPC

### B. FIELDS SEARCHED

Minimum documentation searched (classification system followed by classification symbols)

H04W 72/12(2009.01); H04L 5/00(2006.01); H04W 56/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: first/second TRP, SSB index, DL timing, PDCCH order, random access preamble, cyclic prefix

### C. DOCUMENTS CONSIDERED TO BE RELEVANT

| Category* | Citation of document, with indication, where appropriate, of the relevant passages | Relevant to claim No. |
|---|---|---|
| Y | HUAWEI et al. Study on TA enhancement for UL M-TRP transmission. R1-2208440, 3GPP TSG-RAN WG1 Meeting #110bis-e, e-Meeting. 30 September 2022. See sections 2.1-2.5. | 1-20 |
| Y | US 2022-0085943 A1 (SAMSUNG ELECTRONICS CO., LTD.) 17 March 2022 (2022-03-17) See paragraphs [0101], [0224] and [0261]; and claim 1. | 1-20 |
| A | APPLE INC. Two TAs for multi-DCI Uplink Transmissions. R1-2209569, 3GPP TSG RAN WG1 #110bis-e, e-Meeting. 30 September 2022. See sections 2-3. | 1-20 |
| A | ZTE. TA enhancement for multi-DCI. R1-2208503, 3GPP TSG RAN WG1 Meeting #110bis-e, e-Meeting. 30 September 2022. See sections 2-3. | 1-20 |
| A | US 2022-0141881 A1 (QUALCOMM INCORPORATED) 05 May 2022 (2022-05-05) See paragraphs [0143]-[0146]; and claim 1. | 1-20 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 February 2024** | **26 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017541**

| Patent document cited in search report | | | Publication date (day/month/year) | Patent family member(s) | | | Publication date (day/month/year) |
|---|---|---|---|---|---|---|---|
| US | 2022-0085943 | A1 | 17 March 2022 | CN | 116034601 | A | 28 April 2023 |
| | | | | EP | 4165916 | A1 | 19 April 2023 |
| | | | | KR | 10-2023-0069045 | A | 18 May 2023 |
| | | | | WO | 2022-055329 | A1 | 17 March 2022 |
| US | 2022-0141881 | A1 | 05 May 2022 | None | | | |

Form PCT/ISA/210 (patent family annex) (July 2022)